# EUROPEAN PATENT APPLICATION

(11) **EP 4 510 029 A1**
(43) Date of publication of application: **19.02.2025**
(21) Application number: 23811084.5
(22) Date of filing: 24.05.2023
(51) Int. Cl.: G06F 21/62

(54) **PRIVACY PROTECTION METHOD AND RELATED APPARATUS**

(30) Priority: 27.05.2022 CN 202210590959
(71) Applicant: Huawei Technologies Co., Ltd., Shenzhen, Guangdong 518129 (CN)
(72) Inventor: MA, Xiaoshuang, Shenzhen, Guangdong 518129 (CN); MENG, Ameng, Shenzhen, Guangdong 518129 (CN); FANG, Xiwen, Shenzhen, Guangdong 518129 (CN); PAN, Dongxue, Shenzhen, Guangdong 518129 (CN); LI, Changting, Shenzhen, Guangdong 518129 (CN)
(74) Representative: Isarpatent
(86) International application number: PCT/CN2023/095971
(87) International publication number: WO 2023/227014

(57) **Abstract**

This application provides a privacy protection method and a related apparatus. The method includes: When a vehicle detects that there is only one user in the vehicle, the vehicle displays first information in a first display area in a first form. When the vehicle detects that there are a plurality of users in the vehicle, the vehicle displays the first information in the first display area in a second form. The first form is different from the second form. In other words, an information amount of the first information displayed in the second form is less than an information amount of the first information displayed in the first form. Therefore, when it is detected that there are a plurality of occupants in the vehicle, to-be-displayed sensitive information is processed in a preset manner and then processed to-be-displayed sensitive information is displayed, to prevent the sensitive information from being seen by another occupant. This improves concealment of information display in the vehicle.

## Description

This application claims priority to Chinese Patent Application No. 202210590959.X, filed with the China National Intellectual Property Administration on May 27, 2022 and entitled "PRIVACY PROTECTION METHOD AND RELATED APPARATUS", which is incorporated herein by reference in its entirety.

### TECHNICAL FIELD

This application relates to the field of vehicle information display technologies, and in particular, to a privacy protection method and a related apparatus.

### BACKGROUND

With continuous development of automobile technologies, a vehicle is increasingly intelligent. In a process of driving a vehicle, a driver can use in-vehicle infotainment to answer a call, receive an SMS message, and receive an instant chat message or the like. When there are a plurality of persons in the vehicle, displaying information such as an incoming call notification or a new message notification on a central display screen is likely to lead to information leakage. How to improve concealment of displaying information by the in-vehicle infotainment needs to be further resolved.

### SUMMARY

This application provides a privacy protection method and a related apparatus, so that when it is detected that there are a plurality of occupants in a vehicle, to-be-displayed sensitive information is processed in a preset manner and then processed to-be-displayed sensitive information is displayed, to prevent the sensitive information from being seen by another occupant. This improves concealment of information display in the vehicle.

According to a first aspect, this application provides a privacy protection method. The method includes: A vehicle obtains first information; and the vehicle displays the first information in a first display area of the vehicle in a first form when it is detected that there is only a first user in the vehicle; or the vehicle displays the first information in the first display area of the vehicle in a second form when it is detected that there is the first user and a second user in the vehicle. An information amount of the first information displayed in the second form is less than an information amount of the first information displayed in the first form.

The first form and the second form refer to display content of the first information, and do not indicate a display style (or a display layout) of the first information.

According to the privacy protection method provided in the first aspect, the vehicle may display the first information in different manners based on a quantity of persons in the vehicle, thereby improving concealment of information display in the vehicle.

With reference to the first aspect, in a possible implementation, the first information displayed in the first form includes sensitive information related to the first user, and the first information displayed in the second form does not include the sensitive information related to the first user. In this way, when there are a plurality of persons in the vehicle, the vehicle anonymizes the first information and then displays anonymized information, thereby improving concealment of information display in the vehicle.

With reference to the first aspect, in a possible implementation, the sensitive information related to the first user includes one or more of the following: a person name, a phone number, an address, a time, audio, a photo, a video, a call record, a chat record, a search record, schedule information, a document, a message, health data, and exercise data.

With reference to the first aspect, in a possible implementation, that the vehicle displays the first information in the first display area of the vehicle in the second form specifically includes: the vehicle skips displaying the first information in the first display area; or
after replacing the sensitive information related to the first user in the first information with non-sensitive information, the vehicle displays, in the first display area of the vehicle, first information that includes the non-sensitive information.

When the vehicle determines that there are a plurality of persons, the vehicle may not display the first information in the first display area, or may anonymize the first information and then display anonymized first information in the first display area, to prevent the sensitive information in the first information from being seen by another occupant.

With reference to the first aspect, in a possible implementation, when it is detected that there is the first user and the second user in the vehicle, the method further includes: the vehicle displays the first information in a second display area of the vehicle in the first form, where the second display area is different from the first display area. In this way, when displaying the first information in the first display area in the first form, the vehicle may further display the first information with complete content in the second display area, so that a driver can see the complete first information.

With reference to the first aspect, in a possible implementation, when it is detected that there is the first user and the second user in the vehicle, the method further includes: the vehicle outputs the first information in a third form through a first electronic device, where the first information displayed in the third form includes the sensitive information related to the first user. In this way, when displaying the first information in the first display area in the first form, the vehicle may further display the first information with complete content through the first electronic device, so that the driver can see the complete first information.

The third form refers to display content of the first information. The third form may be the same as the first form, or the third form may be different from the first form.

Optionally, an interface layout of the first information displayed on the first electronic device may be different from an interface layout of the first information displayed in the first display area, and the third form and the first form are used for differentiation herein.

The first electronic device may include but is not limited to a device such as a mobile phone, a Bluetooth headset, or a smartwatch.

With reference to the first aspect, in a possible implementation, the second display area of the vehicle includes one or more of the following: a display area of a head-up display device, a display area of a dashboard, or a display area of a sun visor; and the first display area of the vehicle is a display area of a central display screen or a display area of a passenger display screen.

With reference to the first aspect, in a possible implementation, after the vehicle displays the first information in the first display area of the vehicle in the second form, the method further includes: the vehicle obtains second information, and the vehicle displays the second information in the first area of the vehicle in a fourth form when it is detected that there is the first user and the second user in the vehicle. The second information displayed in the fourth form does not include the sensitive information related to the first user. In this way, for the first user and second user in a same case, messages are different, and display forms of the second information and the first message are also different. However, both types of information are anonymized for display.

With reference to the first aspect, in a possible implementation, after the vehicle displays the first information in the first display area of the vehicle in a second form, the method further includes: the vehicle displays the first information in the first display area of the vehicle in the first form when it is detected that there is only the first user in the vehicle. In this way, after the quantity of persons in the vehicle changes, a form of the first information displayed on the vehicle changes dynamically.

With reference to the first aspect, in a possible implementation, that the vehicle displays the first information in the first display area of the vehicle in the first form when there is only the first user in the vehicle specifically includes: the vehicle displays the first information in the first display area of the vehicle in the first form when there is only the first user in the vehicle and the first user is the driver. In this way, even if there is only one user in the vehicle, the vehicle can display the first information with complete content in the first display area only when the user is the driver. This avoids a case in which the user is a non-driver, that is, another occupant, and sees the sensitive information in the first information.

With reference to the first aspect, in a possible implementation, that the vehicle displays the first information in the first display area of the vehicle in the first form when there is only the first user in the vehicle specifically includes: the vehicle displays the first information in the first display area of the vehicle in the first form when there is only the first user in the vehicle and a user of a logged-in account on the vehicle is the first user. In this way, even if there is only one user in the vehicle, the vehicle can display the first information with complete content in the first display area only when the user is the driver and an identity of the driver is the same as an identity of the user of the logged-in account on the vehicle. This avoids a case in which privacy of the user of the logged-in account on the vehicle is leaked when the driver temporarily drives the vehicle.

With reference to the first aspect, in a possible implementation, the first information is navigation information, and the navigation information includes a navigation route, an origin address, and a destination address. That the vehicle displays the first information in the first display area of the vehicle in the first form when it is detected that there is only the first user in the vehicle specifically includes: the vehicle displays the navigation route, the origin address, and the destination address in the navigation information when it is detected that there is only the first user in the vehicle. That the vehicle displays the first information in the first display area of the vehicle in the second form when it is detected that there is the first user and the second user in the vehicle specifically includes: the vehicle displays only the navigation route in the navigation information when it is detected that there is the first user and the second user in the vehicle. In this way, for a navigation scenario, when the vehicle detects that there are a plurality of users in the vehicle, the vehicle displays only the navigation route information, and does not display detailed origin information and destination information.

With reference to the first aspect, in a possible implementation, the first information is incoming call notification information, and the incoming call notification information includes a caller name, an answer control, and a hang up control. That the vehicle displays the first information in the first display area of the vehicle in the first form when it is detected that there is only the first user in the vehicle specifically includes: the vehicle displays the caller name, the answer control, and the hang up control in the incoming call notification information when it is detected that there is only the first user in the vehicle. That the vehicle displays the first information in the first display area of the vehicle in the second form when it is detected that there is the first user and the second user in the vehicle specifically includes: the vehicle displays only the answer control and the hang up control in the incoming call notification information when it is detected that there is the first user and the second user in the vehicle. In this way, for a call scenario, when the vehicle detects that there are a plurality of users in the vehicle, the vehicle does not display a name of a caller.

With reference to the first aspect, in a possible implementation, the first information is a travel recommendation card, and the travel recommendation card includes a flight number, a travel time, a destination, and a departure place. That the vehicle displays the first information in the first display area of the vehicle in the first form when it is detected that there is only the first user in the vehicle specifically includes: the vehicle displays the flight number, the travel time, the destination, and the departure place in the travel recommendation card when it is detected that there is only the first user in the vehicle. That the vehicle displays the first information in the first display area of the vehicle in the second form when it is detected that there is the first user and the second user in the vehicle specifically includes: the vehicle displays only the travel time in the travel recommendation card when it is detected that there is the first user and the second user in the vehicle. In this way, for a travel service recommendation scenario, when the vehicle detects that there are a plurality of users in the vehicle, the vehicle does not display a travel mode (for example, a flight number or a high-speed railway number), a departure place, and a destination in the travel information.

With reference to the first aspect, in a possible implementation, before the vehicle displays the first information in the first display area of the vehicle in the first form, the method further includes: the vehicle receives a first operation; and in response to the first operation, the vehicle enables a privacy mode.

The first operation may be an operation performed by the user on the first display area, and the first operation may be a voice operation; or the first operation may be an operation performed on another electronic device. This is not limited in this embodiment of this application.

With reference to the first aspect, in a possible implementation, before the vehicle receives the first operation, the method further includes: the vehicle outputs first prompt information, where the first prompt information is used to prompt the user to enable the privacy mode.

With reference to the first aspect, in a possible implementation, after the vehicle outputs the first prompt information, the method further includes: the vehicle outputs first guide information, where the first guide information is used to notify the user of a first shortcut button for enabling/disabling the privacy mode, and the first operation is a trigger operation for the first shortcut button.

With reference to the first aspect, in a possible implementation, the vehicle is capable of determining, based on one or more of facial recognition, voiceprint recognition, a device identifier of an electronic device, a Bluetooth identifier of the electronic device, and pressure sensor data, whether there is one occupant or a plurality of occupants in the vehicle.

According to a second aspect, this application provides a privacy protection method. The method includes: A vehicle obtains first information; and the vehicle displays the first information in a first display area of the vehicle in a first form when it is detected that there is only a first user in the vehicle; or when it is detected that there is the first user and a third user in the vehicle, and the first user and the third user meet a second condition, the vehicle displays the first information in the first display area of the vehicle in the first form. The second condition is any one or more of the following: The third user is a family member of the first user; the third user is a close user of the first user; the second user is a user whose age is less than a first preset value; the second user is a user whose age is greater than a second preset value; or the third user has permission to view the first information.

With reference to the first aspect, in a possible implementation, when the first user and the third user do not meet the second condition, the vehicle still displays the first information in the first display area of the vehicle in a second form.

It should be noted that the plurality of possible implementations provided in the first aspect are also applicable to the privacy protection method provided in the second aspect. For details, refer to the descriptions in the first aspect. Details are not described herein again in this application.

According to a third aspect, this application provides a vehicle. The vehicle includes one or more processors and one or more memories. The one or more memories are coupled to the one or more processors. The one or more memories are configured to store computer program code, and the computer program code includes computer instructions. The one or more processors invoke the computer instructions to enable the vehicle to perform the privacy protection method provided in any one of the possible implementations of any one of the foregoing aspects.

According to a fourth aspect, this application provides a computer-readable storage medium, where the computer-readable storage medium stores instructions. When the instructions are run on a vehicle, the vehicle is enabled to perform the privacy protection method provided in any one of the possible implementations of any one of the foregoing aspects.

According to a fifth aspect, this application provides a computer program product. When the computer program product is executed by a vehicle, the vehicle is enabled to perform the privacy protection method provided in any one of the possible implementations of any one of the foregoing aspects.

### BRIEF DESCRIPTION OF DRAWINGS

FIG. 1 is a diagram of a structure of a vehicle 100 according to an embodiment of this application;
FIG. 2 shows a software structure of a vehicle 100 according to an embodiment of this application;
FIG. 3 shows a display structure on a vehicle 100 according to an embodiment of this application;
FIG. 4A to FIG. 4D are a group of diagrams showing that a vehicle 100 receives an operation of a user and enables a privacy mode according to an embodiment of this application;
FIG. 5A and FIG. 5B are a group of diagrams showing that a vehicle 100 displays usage description of a shortcut button according to an embodiment of this application;
FIG. 6A to FIG. 6C are a group of diagrams of displaying an icon of a privacy mode according to an embodiment of this application;
FIG. 7A-1 to FIG. 7N are a group of diagrams of how a vehicle 100 displays sensitive information in a phone application according to an embodiment of this application;
FIG. 8A-1 to FIG. 8H are a group of diagrams of how a vehicle 100 displays sensitive information in a map application according to an embodiment of this application;
FIG. 9A to FIG. 9E are a group of diagrams of how a vehicle 100 displays sensitive information in a gallery application according to an embodiment of this application;
FIG. 10A to FIG. 10D are a group of diagrams of how a vehicle 100 displays sensitive information in a gallery application according to an embodiment of this application;
FIG. 11A(a) to FIG. 11C are a group of diagrams of establishing a screen projection connection between a vehicle 100 and a mobile phone according to an embodiment of this application; and
FIG. 12 is a flowchart of a privacy protection method according to an embodiment of this application.

### DESCRIPTION OF EMBODIMENTS

The following clearly describes technical solutions in embodiments of this application in detail with reference to the accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The following terms "first" and "second" are merely used for description, and shall not be understood as an indication or implication of relative importance or an implicit indication of a quantity of indicated technical features. Therefore, a feature limited by "first" or "second" may explicitly or implicitly include one or more of the features. In the descriptions of embodiments of this application, unless otherwise specified, "a plurality of" means two or more.

A term "user interface (user interface, UI)" in the following embodiments of this application is a medium interface for interaction and information exchange between an application program or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphic user interface, GUI), which is a user interface displayed in a graphical mode and related to a computer operation. The user interface may be a visual interface element such as a text, an icon, a button, a menu, a tab, a text box, a dialog box, a status bar, a navigation bar, or a Widget that is displayed on a display of the electronic device.

A vehicle provides a variety of applications, such as a phone application, a WeChat application, a social application, a map application, a search application, a gallery application, a calendar application, a screen projection application, and a drive recorder. After the vehicle is started, the user may operate the foregoing applications by using a central display screen. When there are a plurality of persons in the vehicle, the vehicle becomes a public space. If the central display screen directly presents sensitive personal information of a driver, both a front passenger and a rear passenger can notice the information, which leaks personal privacy of the driver.

**Table 1**

| Application name | Sensitive personal information | Display mode |
|---|---|---|
| Phone application | Incoming call notification, call record, and contact information | Directly displayed on the central display screen and visible to all |
| Map application | Historical destination, search record, saved address, and frequently used address | Directly displayed on the central display screen and visible to all |
| Gallery application | Photo and video | Directly displayed on the central display screen and visible to all |
| Social application | Message notification, call record, and information about an information sender | Directly displayed on the central display screen and visible to all |
| Search application | Search record | Directly displayed on the central display screen and visible to all |
| Calendar application | Schedule information | Directly displayed on the central display screen and visible to all |
| Drive recorder | Audio record and video record | Directly displayed on the central display screen and visible to all |
| Screen projection application | Data in an application on a mobile phone | Directly displayed on the central display screen and visible to all |

Table 1 shows an example of a plurality of applications provided on the vehicle and a display mode of data in the application. For example, for the phone application, sensitive personal information in the phone application includes but is not limited to an incoming call notification, a call record, contact information, or the like. The sensitive personal information in the phone application may be directly displayed on the central display screen of the vehicle without any processing and visible to all persons in the vehicle. However, the driver does not want some information to be seen by another occupant, for example, a nickname of another contact. Sensitive personal information in the map application includes but is not limited to a historical destination, a search record, a saved address, and a frequently used address. The sensitive personal information in the map application may be directly displayed on the central display screen of the vehicle without any processing and visible to all persons in the vehicle. However, the driver does not want some information to be seen by another occupant, for example, another home address. Sensitive personal information in the gallery application includes but is not limited to a photo, a video, or the like. The sensitive personal information in the gallery application may be directly displayed on the central display screen of the vehicle without any processing and visible to all persons in the vehicle. Sensitive personal information in the social application includes but is not limited to a message notification, a call record, information about an information sender, or the like. The sensitive personal information in the social application may be directly displayed on the central display screen of the vehicle without any processing and visible to all persons in the vehicle. Sensitive personal information in the search application includes but is not limited to a search record, or the like. The sensitive personal information in the search application may be directly displayed on the central display screen of the vehicle without any processing and visible to all persons in the vehicle. Sensitive personal information in the calendar application includes but is not limited to schedule information, or the like. The sensitive personal information in the calendar application may be directly displayed on the central display screen of the vehicle without any processing and visible to all persons in the vehicle. Sensitive personal information in the drive recorder includes but is not limited to an audio record, a video record, or the like. The sensitive personal information in the drive recorder may be directly displayed on the central display screen of the vehicle without any processing and visible to all persons in the vehicle. Sensitive personal information in the screen projection application includes but is not limited to data in an application on the mobile phone. The sensitive personal information in the screen projection application may be directly displayed on the central display screen of the vehicle without any processing and visible to all persons in the vehicle.

To improve concealment of personal privacy data in a vehicle, an embodiment of this application provides a privacy protection method for displaying information in a vehicle. The method includes: The vehicle obtains to-be-displayed first information. When the vehicle detects that there is only one user in the vehicle, the vehicle displays the first information in a first display area in a first form. When the vehicle detects that there are a plurality of users in the vehicle, the vehicle displays the first information in the first display area in a second form. The first form is different from the second form. In other words, an information amount of the first information displayed in the second form is less than an information amount of the first information displayed in the first form.

Optionally, when the vehicle displays the first information in the first area in the second form, the vehicle displays the first information on another electronic device in a third form, or displays the first information in a second display area in the first form. The first display area is different from the second display area. The third form may be the same as the first form. For example, an information amount of the first information displayed in the third form and an information amount of the first information displayed in the first form are the same, but have different display styles or page layouts of the first information.

The first display area is a display area of a central display screen in the vehicle or a display area of a passenger display screen. The second display area is a display area of a dashboard in the vehicle, a display area of a head-up display device (head up display, HUD) in the vehicle, or a display area on a sun visor. In some embodiments, the another electronic device may be, for example, a mobile phone, a smartwatch, or a headset. For example, a mobile phone of a user establishes a connection relationship with the vehicle. The vehicle sends the first information to the mobile phone, and the mobile phone displays the first information on a display screen of the mobile phone in the third form.

The first form is a form in which the first information is displayed with complete content, the second form is a form in which the first information is partially displayed or not displayed, and the third form is also a form in which the first information is displayed with complete content. Compared with a case that the first information is displayed in the first form, in a case that the first information is displayed in the second form, the first information has less information amount. Reduced information is information related to user privacy. In other words, the information related to user privacy is hidden. User-related information includes but is not limited to a person name, a phone number, an address, a time, audio, a photo, a video, a call record, a chat record, a search record, schedule information, a document, a message, health data, exercise data, data in an application, and the like.

The first information displayed with complete content may also be referred to as the first information displayed in the first form.

The first information partially displayed or not displayed may also be referred to as the first information displayed in the second form.

In this way, in a case in which the vehicle detects that there is one user in the vehicle and in a case in which the vehicle detects that there are a plurality of users in the vehicle, the same information is displayed in different forms. To be specific, when there is another occupant, the vehicle displays the information related to user privacy in a brief manner or in another place, to prevent sensitive information of the user from being directly displayed to and viewed by the another occupant, thereby greatly protecting user privacy and improving user experience.

It should be noted that embodiments of this application are not limited to being applicable to a vehicle, but are also applicable to other types of electronic devices, such as a large screen, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. Specifically, a principle of a method for displaying information based on a quantity of persons by the other types of electronic devices is the same as a principle of a method for displaying information based on a quantity of persons by a vehicle provided in embodiments of this application. In embodiments of this application, the method for displaying information based on a quantity of persons by the vehicle is described.

The following describes the vehicle provided in embodiments of this application.

The vehicle in embodiments of this application may include a motor vehicle such as a large vehicle, a small vehicle, an electric vehicle, a motorcycle, or a tractor.

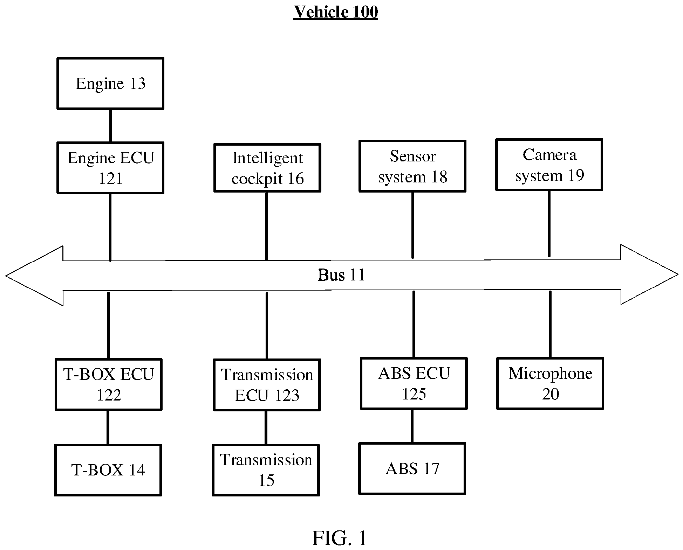

FIG. 1 is a diagram of a structure of a vehicle 100 according to an embodiment of this application.

As shown in FIG. 1, the vehicle 100 includes a bus 11, a plurality of electronic control units (electronic control unit, ECU), an engine 13, a telematics box (telematics box, T-BOX) 14, a transmission 15, an intelligent cockpit 16, an anti-lock system (anti-lock brake system, ABS) 17, a sensor system 18, a camera system 19, a microphone 20, and the like.

The bus 11 may be a controller area network (controller area network, CAN) bus or an IP bus.

The bus 11 is a serial communication network that supports distributed control or real-time control, and is configured to connect various components of the vehicle 100. Any component on the bus 11 can monitor all data transmitted on the bus 11. A frame transmitted by the bus 11 may include a data frame, a remote frame, an error frame, and an overload frame, and different types of data are transmitted in different frames. In this embodiment of this application, the bus 11 may be configured to transmit data related to the components in a voice instruction-based control method. For specific implementation of the method, refer to detailed descriptions in the following method embodiment.

This is not limited to the bus 11. In some other embodiments, the components of the vehicle 100 may alternatively be connected and communicate with each other in another manner. For example, the components may further communicate with each other by using an in-vehicle Ethernet (ethernet) local interconnect network (local interconnect network, LIN) bus, a FlexRay bus, a common in-vehicle network system (media oriented systems, MOST) bus, or the like. This is not limited in this embodiment of this application. The following embodiment is described by using an example in which the components communicate with each other by using the bus 11.

The ECU is equivalent to a processor or a brain of the vehicle 100, and is configured to indicate, based on an instruction obtained from the bus 11 or an operation entered by a user, a corresponding component to perform a corresponding action. The ECU may include a security chip, a microprocessor (microcontroller unit, MCU), a random access memory (random access memory, RAM), a read-only memory (random-only memory, ROM), an input/output interface (I/O), an analog/digital converter (A/D converter), and a large-scale integrated circuit such as input, output, shaping, and drive.

There are various types of ECUs. Different types of ECUs can be used to implement different functions.

The plurality of ECUs in the vehicle 100 may include, for example, an engine ECU 121, a telematics box (telematics box, T-BOX) ECU 122, a transmission ECU 123, and an anti-lock system (antilock brake system, ABS) ECU 125.

The engine ECU 121 is configured to manage the engine and coordinate various functions of the engine, for example, may be configured to start the engine, shut down the engine, and the like. The engine is an apparatus that provides power for the vehicle 100. The engine is a machine that converts a form of energy into mechanical energy. The vehicle 100 may be configured to convert chemical energy generated through burning liquid or gas, or electric energy into mechanical energy and output power to the outside. Components of the engine may include two main mechanisms: a crank-link mechanism and a valve mechanism, and five systems: a cooling system, a lubrication system, an ignition system, an energy supply system, and a starting system. Main parts of the engine are cylinder block, cylinder head, piston, piston pin, connecting rod, crankshaft, flywheel, and the like.

The T-BOX ECU 122 is configured to manage the T-BOX 14.

The T-BOX 14 is mainly responsible for communicating with the Internet, providing a remote communication interface for the vehicle 100, and providing services such as navigation, entertainment, travel data acquisition, travel trajectory recording, vehicle fault monitoring, vehicle remote query and control (for example, opening and locking, air conditioner control, window control, engine torque limitation, engine start and stop, seat adjustment, and query about a battery level, fuel, and a door status), driving behavior analysis, wireless hotspot sharing, road rescue, and exception reminding.

The T-BOX 14 may be configured to communicate with a telematics service provider (telematics service provider, TSP) and an electronic device on a user (for example, a driver) side, to implement vehicle status display and control on the electronic device. After the user sends a control command by using a vehicle management application on the electronic device, the TSP sends a request instruction to the T-BOX 14. After obtaining the control command, the T-BOX 14 sends a control packet by using the CAN bus and controls the vehicle 100, and finally feeds back an operation result to the vehicle management application to the electronic device on the user side. In other words, data read by the T-BOX 14 by using the bus 11, for example, data such as a vehicle status report, a travel report, fuel consumption statistics, violation query, a location trajectory, and a driving behavior, may be transmitted to a TSP background system through a network. Then, the TSP background system forwards the data to the electronic device on the user side for the user to view.

The T-BOX 14 may specifically include a communication module and a display screen.

The communication module may be configured to provide a wireless communication function, and support the vehicle 100 in communicating with another device by using a wireless communication technology such as a wireless local area network (wireless local area network, WLAN) ((wireless fidelity, Wi-Fi) network), Bluetooth (bluetooth, BT), a global navigation satellite system (global navigation satellite system, GNSS), frequency modulation (frequency modulation, FM), a near-field communication (near field communication, NFC) technology, an infrared (infrared, IR) technology, or ultra-wideband (ultra-wideband, UWB). The communication module may be further configured to provide a mobile communication function, and support the vehicle 100 in communicating with another device by using communication technologies such as a global system for mobile communications (global system for mobile communications, GSM), a universal mobile telecommunications system (universal Mobile telecommunications system, UMTS), wideband code division multiple access (wideband code division multiple access, WCDMA), time-division code division multiple access (time-division code division multiple access, TD-SCDMA), long term evolution (long term evolution, LTE), 5G, and future 6G.

The communication module may establish a connection to and communicate with another device such as a server or the electronic device on the user side by using a cellular vehicle to everything (vehicle to everything, V2X) communication technology (cellular V2X, C-V2X). The C-V2X may include, for example, long term evolution (long term evolution, LTE) V2X (LTE-V2X), 5G-V2X, or the like.

The display screen is configured to provide a visualized interface for the driver. The vehicle 100 may include one or more display screens, for example, may include a vehicle-mounted display screen disposed in front of a driver's seat, a display screen that is disposed above a seat for displaying a surrounding situation, and further a head-up digital display (head up display, HUD) that presents information to a windshield glass. A display screen in the vehicle 100, provided in a subsequent embodiment, that is configured to display a user interface may be a vehicle-mounted display screen disposed beside a seat, or may be a display screen disposed above the seat, or may be a HUD or the like, or may be a display screen on a dashboard, or may be a central display screen. This is not limited herein. For details about a user interface displayed on the display screen in the vehicle 100, refer to detailed descriptions in the subsequent embodiment. Details are not described herein again. A size and a display style of the HUD and the dashboard are not limited in this embodiment of this application.

The T-BOX 14 may also be referred to as an in-vehicle infotainment system, a remote information processor, a vehicle gateway, or the like. This is not limited in this embodiment of this application.

The transmission ECU 123 is configured to manage the transmission.

The transmission 15 may be a mechanism configured to change a rotational speed and a torque of the engine, and can change a transmission ratio of an output shaft and an input shaft in a fixed or graded manner. Components of the transmission 15 may include of a variable speed transmission mechanism, an operating mechanism, a power output mechanism, and the like. A main function of the variable speed transmission mechanism is to change a value and a direction of each of the torque and the rotational speed. A main function of the operating mechanism is to control the transmission mechanism and implement a transmission ratio change of the transmission, that is, to implement a gear shift, so as to change the rotational speed and the torque.

The intelligent cockpit 16 may include but is not limited to a drive recorder and a central display screen. In some embodiments, the intelligent cockpit 16 may further include a drive recorder ECU, and the drive recorder ECU is configured to manage a drive recorder. In some embodiments, the vehicle 100 may not include the drive recorder ECU. Components of the drive recorder may include a host, a vehicle speed sensor, data analysis software, and the like. The drive recorder is an instrument that records images and sounds of a vehicle during traveling, which include a traveling time, a speed, a location, and other related information. In this embodiment of this application, when the vehicle is traveling, the vehicle speed sensor acquires a wheel rotation speed, and sends vehicle speed information to the drive recorder by using the bus 11. The central display screen may be an intelligent large screen. A size and a display style of the central display screen are not limited in this embodiment of this application.

The ABS ECU 125 is configured to manage the ABS 17.

The ABS 17 is configured to automatically control a braking force of a brake when the vehicle is braking, so that wheels do not lock, and rotate while slipping intermittently, ensuring that adhesion between the wheels and a ground surface is the largest. In a braking process, when the electronic control apparatus determines that the wheels tend to lock based on a wheel speed signal input by a wheel speed sensor, the ABS enters an anti-lock braking pressure adjustment process.

The sensor system 18 may include an acceleration sensor, a vehicle speed sensor, a vibration sensor, a gyroscope sensor, a radar sensor, a signal transmitter, a signal receiver, a pressure sensor, and the like. The acceleration sensor and the vehicle speed sensor are configured to detect a speed of the vehicle 100. The vibration sensor may be disposed below a seat, a seat belt, a backrest, an operational panel, an airbag, or another position, and is configured to detect whether the vehicle 100 is collided and a location of the user. The gyroscope sensor may be configured to determine a motion posture of the vehicle 100. The radar sensor may include a lidar, an ultrasonic radar, a millimeter wave radar, or the like. The radar sensor is configured to emit an electromagnetic wave to illuminate a target and receive an echo of the target, to obtain information such as a distance from the target to an electromagnetic wave transmitting point, a distance change rate (radial velocity), a direction, and a height, so as to identify another vehicle, a pedestrian, a roadblock, or the like near the vehicle 100. The signal transmitter and the signal receiver are configured to transmit and receive a signal. The signal may be used to detect a location of the user. The signal may be, for example, an ultrasonic wave, a millimeter wave, or a laser. The pressure sensor is configured to acquire pressure data. The vehicle 100 may monitor, based on the pressure data, whether there is an occupant in the intelligent cockpit, to determine a quantity of persons in the vehicle 100.

The camera system 19 may include a plurality of cameras, and the cameras are configured to capture a still image or a video. The cameras in the camera system 19 may be disposed at a front position of the vehicle, a rear position of the vehicle, on a side, inside the vehicle, and the like, to implement functions such as assisted driving, traveling record, panoramic view, and in-vehicle monitoring.

The sensor system 18 and the camera system 19 may be configured to detect a surrounding environment, so that the vehicle 100 makes a corresponding decision to cope with an environment change. For example, the sensor system 18 and the camera system 19 may be configured to complete a task of focusing on a surrounding environment in an autonomous driving phase.

The microphone 20, also referred to as a "mike" or "mic", is configured to convert a sound signal into an electrical signal. When making a call or outputting a voice instruction, the user may make a sound by moving the mouth close to the microphone 20 to input a sound signal into the microphone 20. At least one microphone 20 may be disposed in the vehicle 100. In some other embodiments, two microphones 20 may be disposed in the vehicle 100, to acquire a sound signal and further implement a noise reduction function. In some other embodiments, three, four, or more microphones 20 may be further disposed in the vehicle 100 to form a microphone array, to acquire a sound signal, reduce noise, and further identify a sound source, to implement a directional recording function or the like.

In addition, the vehicle 100 may further include a plurality of interfaces, for example, a USB interface, an RS-232 interface, and an RS485 interface, and may be externally connected to a camera, a microphone, a headset, and a user-side electronic device.

In this embodiment of this application, the microphone 20 may be configured to detect a voice instruction entered by the user. The sensor system 18, the camera system 19, the T-BOX 14, and the like may be configured to obtain role information of the user who inputs the voice instruction. For a manner of obtaining the role information of the user by each component in the vehicle 100, refer to related descriptions in a subsequent method embodiment. The T-BOX ECU 122 may be configured to determine, based on the role information, whether the user currently has permission corresponding to the voice instruction. The T-BOX ECU 122 schedules a corresponding component in the vehicle 100 to respond to the voice instruction only when the user has the permission.

In some embodiments, the sensor system 18, the camera system 19, the T-BOX 14, and the like are not only configured to obtain the role information of the user who inputs the voice instruction, but also configured to obtain role information of another user. The T-BOX ECU 122 may be configured to determine, based on the role information of the user who inputs the voice instruction and the role information of another user, whether the user currently has the permission corresponding to the voice instruction.

In some embodiments, the sensor system 18, the camera system 19, the T-BOX 14, and the like may be configured to obtain a vehicle status of the vehicle 100. The T-BOX ECU 122 may be configured to determine, based on the vehicle status and the role information of the user, whether the user currently has the permission corresponding to the voice instruction.

In some embodiments, a memory in the vehicle 100 may be configured to store a binding relationship between the vehicle and the user.

It may be understood that the structure illustrated in this embodiment of this application does not constitute a specific limitation on a vehicle system. The vehicle 100 may include more or fewer components than those shown in the figure, or some components may be combined, or some components may be split, or there may be a different component arrangement. The components shown in the figure may be implemented by hardware, software, or a combination of software and hardware.

For example, the vehicle 100 may further include a separate memory, a battery, a vehicle light, a wiper, a dashboard, a speaker, a vehicle-mounted terminal (transmission control unit, TCU), an auxiliary control unit (auxiliary control unit, ACU), a passive entry passive start (passive entry passive start, PEPS) system, an on board unit (on board unit, OBU), a body control module (body control module, BCM), a charging interface, or the like. The memory may be configured to store permission information of various roles in the vehicle 100. The permission information indicates use permission of the vehicle 100 that the roles have or do not have. In some embodiments, the memory may be configured to store permission information of various roles in the vehicle 100 in different vehicle statuses. In some embodiments, the memory may be configured to store permission information of various roles in the vehicle 100 with the presence of other different roles.

For specific functions of the components of the vehicle 100, refer to descriptions in the subsequent method embodiment. Details are not described herein again.

A software operating system (operating system, OS) configured in the vehicle 100 may include but is not limited to Harmony^{®}, Android^{®}, iOS^{®}, Linux^{®}, a Windows embedded compact (Windows Embedded Compact, WinCE) operating system, or the like.

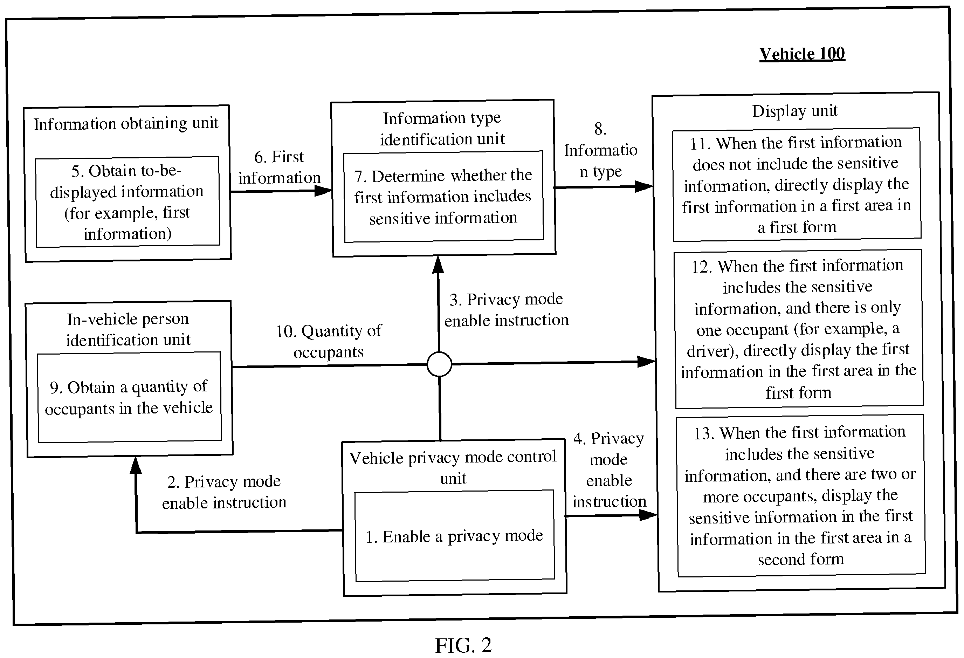

FIG. 2 shows a software structure of a vehicle 100 according to an embodiment of this application.

As shown in FIG. 2, the vehicle 100 may include but is not limited to an information obtaining unit, an in-vehicle person identification unit, a vehicle privacy mode control unit, an information type identification unit, and a display unit.

The vehicle privacy mode control unit controls a user to enable or disable a privacy mode on the vehicle. A manner of enabling the privacy mode includes but is not limited to manual enabling by the user, enabling through a voice, automatic enabling, another device controlling the vehicle to enable the privacy mode, or the like. After the privacy mode is enabled, the vehicle privacy mode control unit separately sends an enabling instruction to the in-vehicle person identification unit, the information type identification unit, and the display unit, so that the other functional units learn that the privacy mode is enabled, and process to-be-displayed information according to a preset rule.

The information obtaining unit is configured to obtain to-be-displayed information, for example, first information. The first information may be information to be displayed in an application, for example, a new message, an incoming call notification, or a navigation route. Optionally, the vehicle privacy mode control unit further needs to send a privacy mode enable instruction to the information obtaining unit, so that the information obtaining unit learns that the privacy mode is enabled, and sends the obtained first information to the information type identification unit. Otherwise, after obtaining the first information, the information obtaining unit directly sends the first information to the display unit, so that the display unit does not need to determine whether the first information includes sensitive information and determine a quantity of occupants in the vehicle, but directly displays the first information in a first area in a first form.

After the information obtaining unit obtains the first information and the privacy mode is enabled, the information obtaining unit sends the first information to the information type identification unit.

After the information type identification unit obtains the first information obtained by the information obtaining unit, the information type identification unit needs to determine whether the first information includes sensitive information. Optionally, information that is sensitive information may be preset. A type of the sensitive information is described in detail in a subsequent embodiment, and details are not described herein in this embodiment of this application.

After determining whether the first information includes sensitive information, the information type identification unit sends a type of the sensitive information to the display unit.

The in-vehicle person identification unit is configured to obtain a quantity of occupants in the vehicle. The in-vehicle person identification unit may determine the quantity of occupants in the vehicle based on sensor data, camera recognition, or the like. A manner in which the in-vehicle person identification unit determines the quantity of occupants in the vehicle is described in detail in the subsequent embodiment. Details are not described in this embodiment of this application.

After the in-vehicle person identification unit obtains the quantity of occupants in the vehicle, the in-vehicle person identification unit sends the quantity of occupants to the display unit.

After the display unit obtains the quantity of occupants in the vehicle and information indicating whether the first information includes sensitive information, the display unit needs to determine, based on the quantity of occupants in the vehicle and the information indicating whether the first information includes the sensitive information, whether to process the first information.

If the first information does not include sensitive information, regardless of the quantity of occupants, the display unit does not perform any processing on the first information, and directly displays the first information in the first area in the first form.

If the first information includes sensitive information, but there is only one occupant (for example, a driver, and the driver is an owner of a logged-in account on the vehicle or an owner of a mobile phone that establishes a connection relationship with in-vehicle infotainment) in the vehicle, the display unit does not perform any processing on the first information, and directly displays the first information in the first area in the first form.

If the first information includes sensitive information, but there is only one occupant (for example, the driver, but the driver is not the owner of the logged-in account on the vehicle, or is not the owner of the mobile phone that establishes a connection relationship with the in-vehicle infotainment) in the vehicle, the display unit needs to process the first information, and display the first information in the first area in a second form.

If the first information includes sensitive information, but there is only one occupant (for example, a non-driver) in the vehicle, the display unit needs to process the first information, and display the first information in the first area in the second form.

If the first information includes sensitive information, and there are at least two occupants (for example, including the driver and at least one passenger) in the vehicle, the display unit needs to process the first information, and display the first information in the first area in the second form.

Optionally, in some embodiments, when the vehicle displays the first information in the first area in the second form, the vehicle displays the first information in a second area in a third form. The first area is different from the second area. The third form may be the same as the first form. For example, an information amount of the first information displayed in the third form and an information amount of the first information displayed in the first form are the same, but have different display styles or page layouts of the first information.

It should be noted that the foregoing functional units may separately exist to implement preset functions, or one or more functional units may be combined to implement the preset functions. This is not limited in this embodiment of this application.

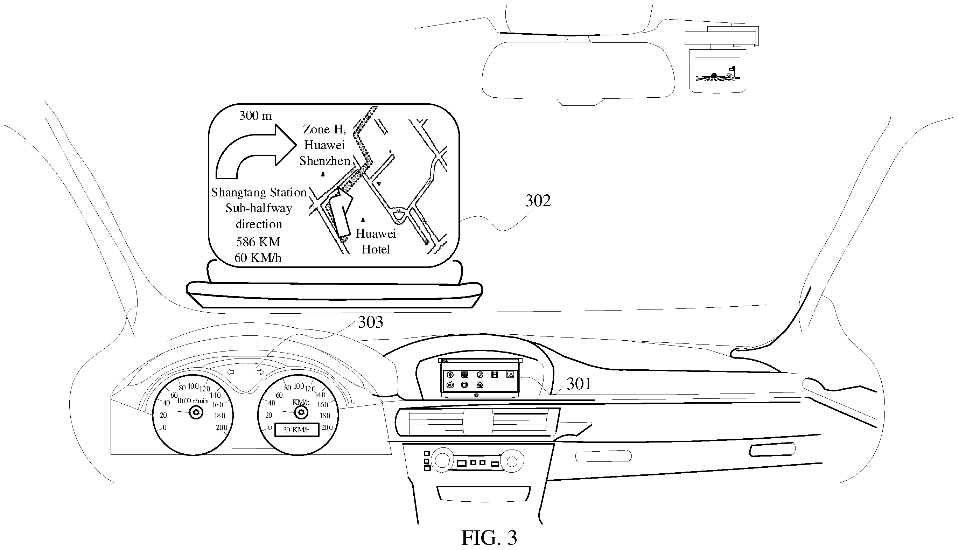

FIG. 3 shows an example of a display structure on the vehicle 100.

As shown in FIG. 3, the vehicle 100 includes a central display screen 301 and a dashboard 303. The central display screen 301 is configured to display a rear view image during reversing, or may be used to watch a TV series, listen to a song, or display navigation information. A user may control a function on the vehicle 100 by using the central display screen 301. The central display screen 301 is a medium for interaction between the vehicle 100 and the user.

The dashboard 303 is configured to display information about a working status of the vehicle, which typically includes a fuel indicator, a cleaning liquid indicator, an electronic throttle indicator, front and rear fog lights, and a warning light. By form, dashboards may be classified into a screen dashboard, a frame dashboard, a channel dashboard, and a cabinet dashboard. Different vehicles may have different meters. However, common meters of a vehicle generally include a speedometer, a tachometer, an oil pressure gauge, a water temperature gauge, a fuel gauge, a charging indicator, and the like.

Optionally, in some embodiments, the display structure on the vehicle 100 further includes a HUD 302. The HUD mainly includes two parts: a picture generation unit (PGU) and an optical display screen. The picture generation unit is configured to generate an image, and the optical display is configured to display the image. A display form of the optical display includes but is not limited to the following three forms: 1. The optical display is an independent display. In other words, the optical display of the HUD is an independent display device, and the picture generation unit projects a generated image on the independent display device, so that a driver can view the image displayed on the independent display device. 2. The optical display is integrated on a front windshield. In other words, the picture generation unit projects a generated image on the front windshield, so that a driver can view the image displayed on the front windshield. 3. The optical display is integrated on a sun visor. In other words, the picture generation unit projects a generated image on the sun visor in the cab, so that the driver can view the image displayed on the front sun visor.

It should be noted that the display structure in the vehicle 100 is not limited to including the central display screen 301, the dashboard 303, and the HUD 302. In another embodiment, the display structure in the vehicle 100 may further include another apparatus, for example, a display installed on a passenger seat, or a display installed on a rear seat. This is not limited in this embodiment of this application.

The vehicle 100 needs to enable a privacy mode. In other words, the vehicle 100 can process to-be-displayed information only after the privacy mode is enabled, to prevent information related to user privacy from being presented to and viewed by another occupant in the vehicle.

The vehicle 100 may enable the privacy mode in any one of the following manners:
Manner 1: The vehicle 100 receives an operation of a user, and enables the privacy mode.

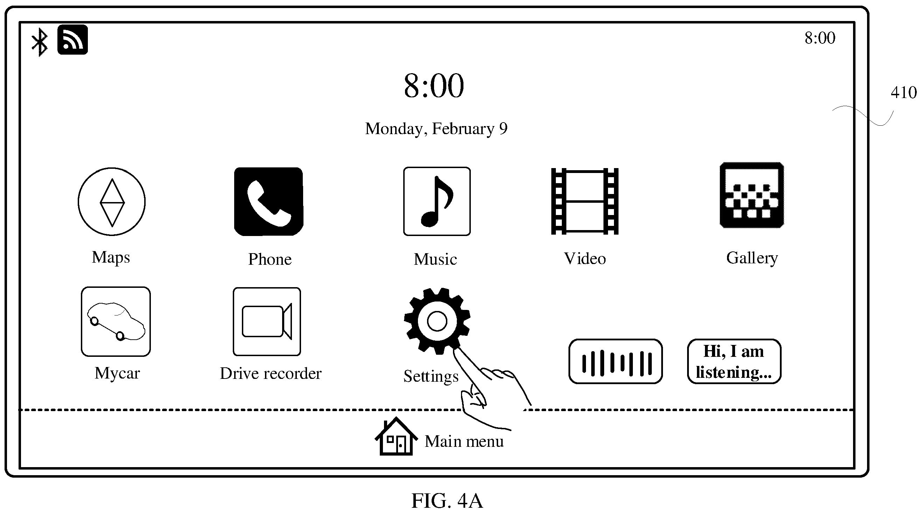

FIG. 4A to FIG. 4D are diagrams of an example in which the vehicle 100 receives an operation of a user and enables the privacy mode.

FIG. 4A shows an example of a user interface 410 of a central display screen in the vehicle 100.

The user interface 410 includes icons of a plurality of applications, for example, an icon of a map application, an icon of a phone application, an icon of a music application, an icon of a video application, an icon of a gallery application, an icon of Mycar application, an icon of a drive recorder application, and an icon of a settings application. The user interface 410 may further include a voice recognition icon and a voice prompt box. The voice recognition icon is used to prompt the user that an electronic device has woken up a voice assistant. The voice prompt box is used to display text information corresponding to a voice that is detected by the vehicle 100 and that is spoken by the user. When the user does not speak a voice after speaking a wake word, the voice prompt box displays "Hi, I am listening" or another prompt message. In addition, the vehicle 100 may further play prompt information "Hi, I am listening" with a voice, to prompt the user to start to input a voice instruction. The user interface 410 may further include a time indicator (for example, 8:00), a date indicator (for example, Monday, February 9), a Bluetooth identifier, a Wi-Fi identifier, and the like.

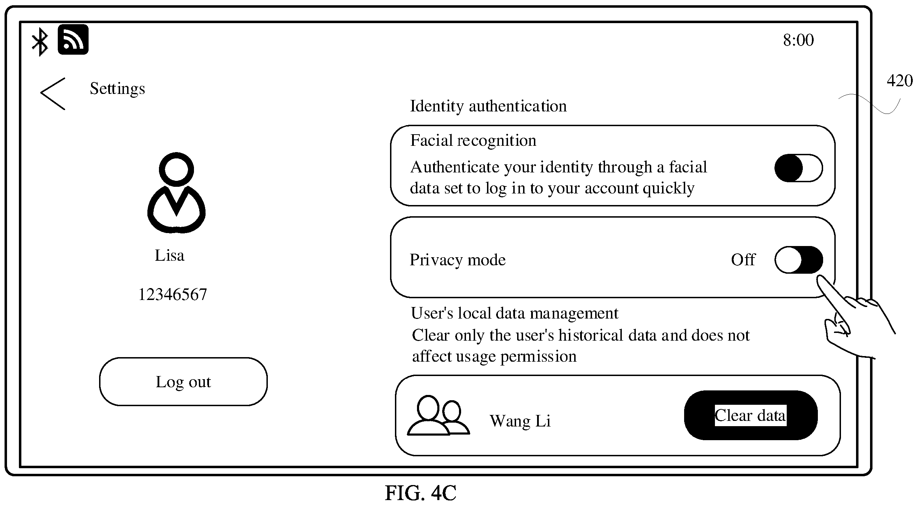

The vehicle 100 may receive input operations performed by the user on icons of one or more applications, and display interfaces of the corresponding applications in response to the input operations performed by the user. For example, the vehicle 100 may receive an input operation (for example, a tap) performed by the user on the icon of the settings application, and in response to the input operation performed by the user, the vehicle 100 displays a user interface 420 shown in FIG. 4C.

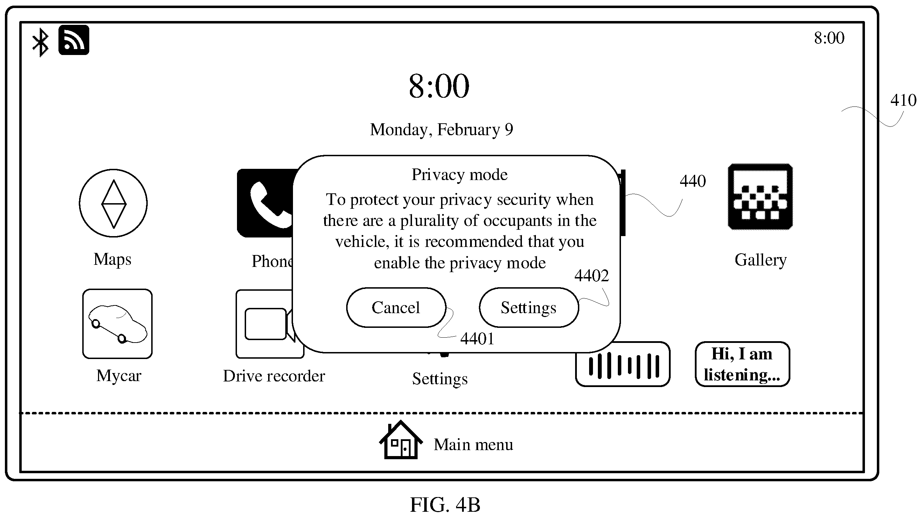

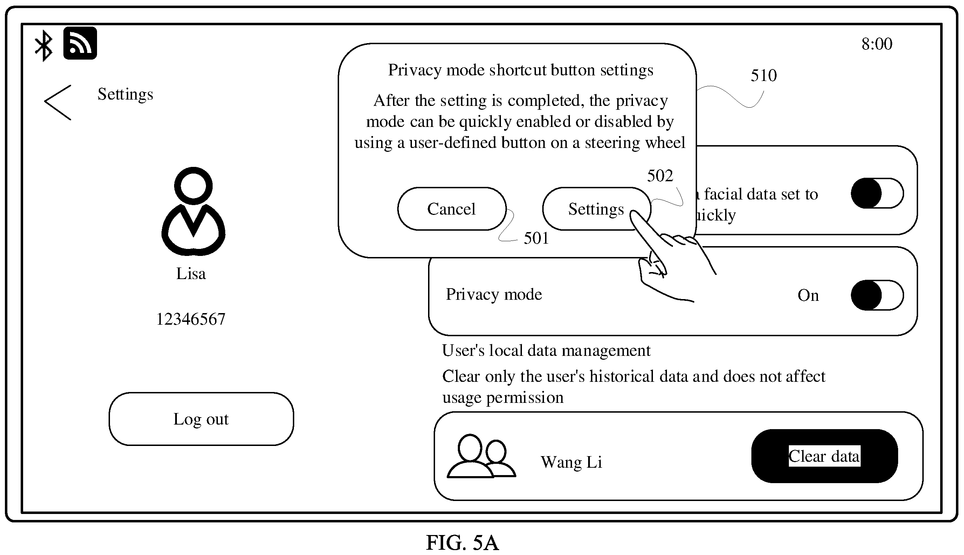

In some embodiments, FIG. 4A shows an example of a specific implementation in which the vehicle 100 receives a user operation to enable the privacy mode. In some embodiments, the vehicle 100 may actively prompt the user whether to enable the privacy mode. When the vehicle 100 detects that the privacy mode is not enabled, the vehicle 100 may display prompt information 440 shown in FIG. 4B. The prompt information 440 is used to prompt the user that the privacy mode is not enabled and whether to enable the privacy mode. The prompt information 440 further includes a control 4401 and a control 4402. The prompt information 440 may include prompt content: "To protect your privacy security when there are other occupants in the vehicle, it is recommended that you enable the privacy mode." The vehicle 100 may receive an input operation (for example, a tap) performed by the user on the control 4401, and in response to the input operation performed by the user, that is, the user does not enable the privacy mode, the vehicle 100 may display the user interface shown in FIG. 4A. The vehicle 100 may also receive an input operation (for example, a tap) performed by the user on the control 4402, and in response to the input operation performed by the user, that is, the user needs to enable the privacy mode, the vehicle may display the user interface 420 shown in FIG. 4C, or may display a subsequent user interface shown in FIG. 5A.

As shown in FIG. 4C, the user interface 420 shows an example of a user interface displayed after a vehicle owner logs in to a primary account on the vehicle 100. The user interface 420 displays information about the logged-in account of the vehicle owner, an identity authentication option, and a user's local data management option. The vehicle 100 may receive a flick operation in an up-down direction or a flick operation in a left-right direction performed by the user on the user interface 420, so that the central display screen can display more setting options.

The information about the logged-in account of the vehicle owner includes a name (for example, Lisa) of the vehicle owner, an account (12346567) of the vehicle owner, and an option of exiting a current login account. The identity authentication option includes an option of enabling/disabling a facial recognition function, and an option of enabling/disabling the privacy mode. The user's local data management option includes an option of clearing the account "Wang Li". As shown in FIG. 4B, the facial recognition function is currently enabled, and the privacy mode is currently disabled.

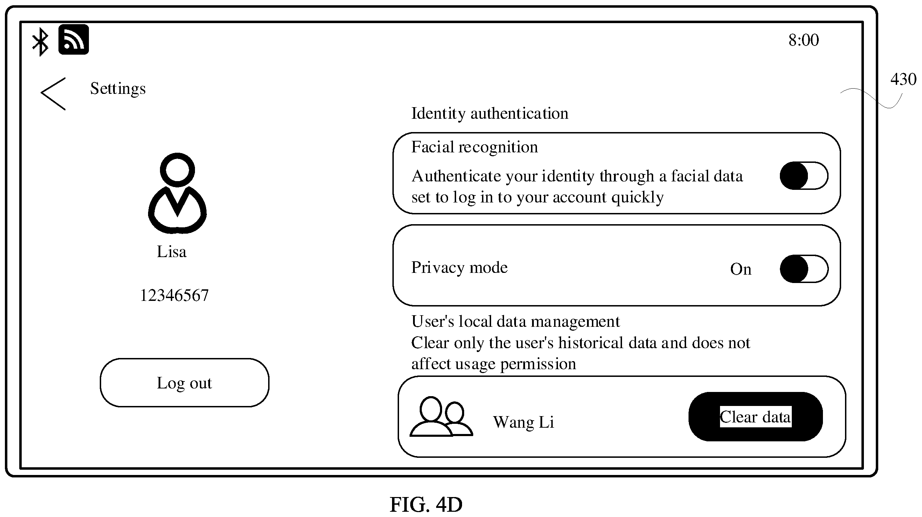

As shown in FIG. 4C, if the user needs to enable the privacy mode on the vehicle, the vehicle 100 receives an input operation (for example, a tap) performed by the user on the option of enabling/disabling the privacy mode, and in response to the input operation performed by the user, the vehicle 100 displays a user interface 430 shown in FIG. 4D.

As shown in FIG. 4D, a function of the privacy mode is enabled, and an "on" word is displayed. In some embodiments, the "on" word may not be displayed. This is not limited in this embodiment of this application.

It should be noted that FIG. 4A to FIG. 4D merely show an example of receiving, by the vehicle 100, an operation from the user of enabling the privacy mode. Alternatively, the privacy mode may be enabled based on another operation or another interface display. This is not limited in this embodiment of this application.

Manner 2: The vehicle 100 automatically enables the privacy mode on the vehicle.

The vehicle 100 may automatically enable the privacy mode on the vehicle based on detected person information on the vehicle.

In any one of the following several cases, the vehicle 100 may automatically enable the privacy mode on the vehicle.

Case 1: When the vehicle 100 detects that there is only one person in the vehicle and the occupant is a passenger, that is, a driver is not in the vehicle, the vehicle 100 automatically enables the privacy mode on the vehicle.

For example, a driver gets off the vehicle, and only a passenger is in the vehicle. To prevent complete content of information displayed on a central display screen in the vehicle from being seen by the passenger, when the vehicle 100 determines that to-be-displayed information (for example, an incoming call notification) includes sensitive information, the vehicle 100 may process the to-be-displayed information, for example, display the to-be-displayed information in a second form. For another example, the passenger actively operates the central display screen to view information on the in-vehicle infotainment (for example, a picture or a call record on the in-vehicle infotainment). In this case, if the vehicle 100 identifies the passenger as a non-driver, the vehicle 100 may process to-be-displayed information, for example, display, in the second form, the information that the passenger operates to view.

Case 2: When the vehicle 100 detects that there is only one person in the vehicle, and the occupant is a driver, but the driver is not an owner of a logged-in account on the vehicle or an owner of a device (for example, a mobile phone) that establishes a connection relationship with the in-vehicle infotainment, the vehicle 100 automatically enables the privacy mode on the vehicle.

For example, an account is logged in to on the vehicle 100, and a communication connection is established between the vehicle 100 and the mobile phone. Alternatively, the vehicle 100 establishes a Bluetooth connection to the mobile phone through Bluetooth.

If the vehicle 100 detects that an identity of the driver and an identity of the logged-in account on the vehicle 100 are not the same person, or the vehicle 100 detects that the identity of the driver and a user of the mobile phone that establishes the Bluetooth connection are not the same person, to protect information security on the vehicle, the vehicle 100 may process to-be-displayed information, for example, display the to-be-displayed information in a second form.

For example, an owner of the vehicle 100 logs in to an account (for example, a Huawei account) of the owner on the vehicle 100, or the owner of the vehicle 100 establishes a Bluetooth connection between the vehicle 100 and a mobile phone of the owner through Bluetooth. Then, the owner of the vehicle 100 sits in another seat, and another occupant drives the vehicle. If a new message needs to be displayed on the central display screen in this case, and the vehicle 100 detects that the driver is not the vehicle owner, the vehicle 100 processes to-be-displayed information, for example, displays the to-be-displayed information in the second form.

In some embodiments, the vehicle 100 may determine, by using a camera detection technology and a voice recognition technology, whether the driver is the vehicle owner.

Case 3: When the vehicle 100 detects that there are a plurality of persons (two or more persons) in the vehicle, the vehicle 100 automatically enables the privacy mode on the vehicle.

The plurality of persons in the vehicle may include a driver and a plurality of passengers, or the plurality of persons in the vehicle may include only a plurality of passengers.

To protect information security on the vehicle 100, when the vehicle 100 detects that there are a plurality of occupants in the vehicle, the vehicle 100 automatically enables the privacy mode on the vehicle.

The vehicle 100 may determine whether there are a plurality of occupants in the vehicle by using any one or more of the following methods:
Method 1: The vehicle 100 determines, based on sensor data, whether there are a plurality of occupants in the vehicle.

The sensor data includes but is not limited to data from a pressure sensor, a human body detection sensor, a temperature sensor, a sound sensor, or the like.

For example, each seat in the vehicle includes a pressure sensor. When an occupant is sitting in a seat, the pressure sensor installed in the seat may acquire pressure data, and determine, based on the pressure data, whether there is an occupant in the seat.

Method 2: The vehicle 100 determines, based on image information acquired by a camera, whether there are a plurality of occupants in the vehicle.

For example, a camera is installed in the vehicle, and the camera acquires image information in the vehicle. The vehicle 100 performs image analysis based on the image information, to determine a quantity of persons in the vehicle.

Method 3: The vehicle 100 determines, based on acquired sound data, whether there are a plurality of occupants in the vehicle.

For example, the vehicle 100 acquires voice data by using a microphone, and performs voiceprint analysis. As voiceprint features of different persons are different, the vehicle 100 can determine the quantity of persons in the vehicle based on the voiceprint features.

Method 4: If a mobile phone of another user is connected to a Bluetooth or a wireless network of the vehicle 100, the vehicle 100 may determine that there is another occupant in the vehicle.

Method 5: When Bluetooth is enabled on a mobile phone of another user, and the vehicle 100 identifies a Bluetooth name on another device, the vehicle 100 may determine that there is another occupant in the vehicle.

For example, after an occupant 1 and an occupant 2 get on the vehicle, Bluetooth is enabled on mobile phones of both the occupant 1 and the occupant 2. The vehicle 100 can identify names of Bluetooth on the mobile phones of the occupant 1 and the occupant 2, so that the vehicle 100 can determine a quantity of persons in the vehicle based on a quantity of identified Bluetooth names.

It should be noted that the vehicle 100 may further determine, based on another method, whether there are a plurality of occupants in the vehicle. A specific implementation is not limited in this embodiment of this application.

It should be noted that the manners of determining whether there are a plurality of occupants the vehicle described in the foregoing method 1 to method 5 may alternatively be performed by another device, for example, a mobile phone.

For example, in Method 5, for example, after the occupant 1 and the occupant 2 get on the vehicle, Bluetooth is enabled on the mobile phones of both the occupant 1 and the occupant 2. A mobile phone of a driver may identify names of the mobile phones of the occupant 1 and the occupant 2, so that the mobile phone of the driver can determine a quantity of persons in the vehicle based on a quantity of identified Bluetooth names.

In some implementations, when the vehicle 100 detects that there are a plurality of persons (two or more persons) in the vehicle, the vehicle 100 identifies that the plurality of persons have permission to access private information on the vehicle 100, and the vehicle 100 may not enable the privacy mode on the vehicle.

User information, such as face image information and voiceprint information, is recorded on the vehicle 100 in advance, to identify identities of different users. A user may set permission for different users in the vehicle 100. For example, after the vehicle 100 identifies a user identity set by the user, when the vehicle 100 obtains to-be-output information, the vehicle 100 does not need to enable the privacy mode. In other words, the vehicle 100 does not need to process the to-be-output information in a preset manner.

For example, it is assumed that the user stores identity information of a user A, for example, face image information and voiceprint information of the user A, on the vehicle 100 in advance, and configures permission for the user A as not enabling the privacy mode. When the user A takes the vehicle 100, the vehicle 100 identifies an identity of the user A, and determines that the permission of the user A is not enabling the privacy mode. In this case, when there is only a driver and the user A in the vehicle 100, the vehicle 100 does not need to enable the privacy mode. When the vehicle 100 obtains the to-be-output information, the vehicle 100 directly displays the to-be-output information to the user, and does not need to process the information in the preset manner.

Optionally, the user may alternatively set that the user A has permission to access part of the private information on the vehicle 100. To be specific, when the vehicle 100 outputs the part of private information, the vehicle 100 determines that the occupant in the vehicle 100 is the user A, and the user A has the permission to access the part of private information. In this case, the vehicle 100 may directly output the part of private information without enabling the privacy mode.

For example, the user configures for the user A permission to access a historical destination and a search record in the map application. Before the vehicle 100 displays the search record in the map application, the vehicle 100 determines that the user A has the permission to access the search record in the map application, and the vehicle 100 directly displays the search record in the map application on the central display screen.

In some implementations, when the vehicle 100 detects that there are a plurality of persons (two or more persons) in the vehicle, the vehicle 100 identifies that ages of the plurality of persons are greater than a specific value or less than a specific value, and the vehicle 100 may not enable the privacy mode on the vehicle.

Specifically, when the vehicle 100 detects that there are a plurality of persons (two or more persons) in the vehicle, but the vehicle 100 detects that an age profile of occupants other than the driver is greater than a specific value or an age profile of the occupants is less than a specific value, that is, when the vehicle 100 determines that the occupant other than the driver in the vehicle 100 is an elderly person or a kid, the vehicle 100 may not need to enable the privacy mode on the vehicle.

In some implementations, it is assumed that the vehicle 100 detects that there are a plurality of persons (two or more persons) in the vehicle. When the vehicle 100 identifies that familiarity between the plurality of persons and the driver is greater than a specific value, that is, when the vehicle 100 determines that an occupant other than the driver in the vehicle 100 is familiar with the driver, for example, the occupant and the driver are close friends, the vehicle 100 may not need to enable the privacy mode on the vehicle.

In a possible implementation, the vehicle 100 may determine a degree of a relationship between the occupant and the driver based on a quantity of times that the occupant takes the vehicle 100. For example, if the vehicle 100 determines that a quantity of times that the occupant takes the vehicle 100 within a specific time exceeds a specific value, the vehicle 100 may determine that the occupant is in a relatively close relationship with the driver. For example, if the vehicle 100 determines that the occupant takes the vehicle 100 more than 20 times in a month, the vehicle 100 may determine that the occupant is in a relatively close relationship with the driver.

It should be noted that after the vehicle 100 automatically enables the privacy mode, the vehicle 100 directly processes the obtained to-be-output information in the preset manner. Then, to-be-output information that is processed in the preset manner is displayed to the user.

Manner 3: The user wakes up the vehicle 100 by using a voice to enable the privacy mode.

The user may perform voice interaction with the vehicle 100 by using the voice assistant on the vehicle 100, so that the vehicle 100 enables the privacy mode.

For example, the user first needs to wake up the voice assistant on the vehicle 100. For example, the user outputs a voice "Hey Celia". The voice assistant on the vehicle 100 identifies that the voice is from the user, and that the user is waking up the voice assistant. In this case, the voice assistant on the vehicle 100 may output a voice "I am here". After waking up the voice assistant on the vehicle 100, the user may control, by using voice, the voice assistant to perform another operation. For example, the user outputs another voice "Enable the privacy mode on the vehicle". The voice assistant on the vehicle 100 recognizes the voice of the user, and performs a corresponding operation. For example, the voice assistant on the vehicle 100 sends an instruction to a control center on the vehicle 100, where the instruction is used by the control center to enable the privacy mode. After the privacy mode is enabled, the voice assistant on the vehicle 100 may output a voice, to notify the user that the privacy mode is enabled. For example, the voice may be "The privacy mode on the vehicle 100 is enabled".

Manner 4: The user controls, by using a mobile phone, the vehicle 100 to enable the privacy mode.

Before the user controls, by using the mobile phone, the vehicle 100 to enable the privacy mode, the mobile phone and the vehicle 100 need to log in to a same account (for example, a Huawei account), or the mobile phone needs to establish a Bluetooth connection to the vehicle 100, or the mobile phone and the vehicle 100 need to be connected to a same local area network. The mobile phone may further establish a communication connection to the vehicle 100 in another manner. This is not limited in this embodiment of this application.

The user may perform an operation on the mobile phone to control the vehicle 100 to enable the privacy mode. For example, the mobile phone receives an operation of the user, and in response to the operation of the user, the mobile phone sends an enable instruction to the vehicle 100. After the vehicle 100 receives the enable instruction sent by the mobile phone, the vehicle 100 enables the privacy mode on the vehicle.

In addition to the foregoing four manners of enabling the privacy mode, another manner may be used to enable the privacy mode on the vehicle 100. This is not limited in this embodiment of this application.

It should be noted that, after the vehicle 100 receives an instruction of the user and manually enables the privacy model, or wakes up the vehicle 100 by using a voice to enable the privacy mode, or controls, by using the mobile phone, the vehicle 100 to enable the privacy mode, the vehicle 100 further needs to determine, based on the to-be-output information obtained by the vehicle 100 and a quantity of persons in the vehicle, whether the to-be-output information needs to be processed in a preset manner. A specific determining rule is the same as a condition of determining, by the vehicle 100, to automatically enable the privacy mode described in Manner 2. For details, refer to the descriptions in the foregoing embodiment. Details are not described herein again in this embodiment of this application.

Optionally, in some embodiments, if there is a shortcut button for enabling/disabling a privacy mode on the vehicle 100, after the vehicle 100 enables the privacy mode, the vehicle 100 may display guide information by using a central display screen. The guide information is used to guide a user to perform a specific operation to enable the shortcut button for enabling/disabling the privacy mode. The guide information includes but is not limited to any one or more of the following: a text, a picture, a video, a voice, or the like.

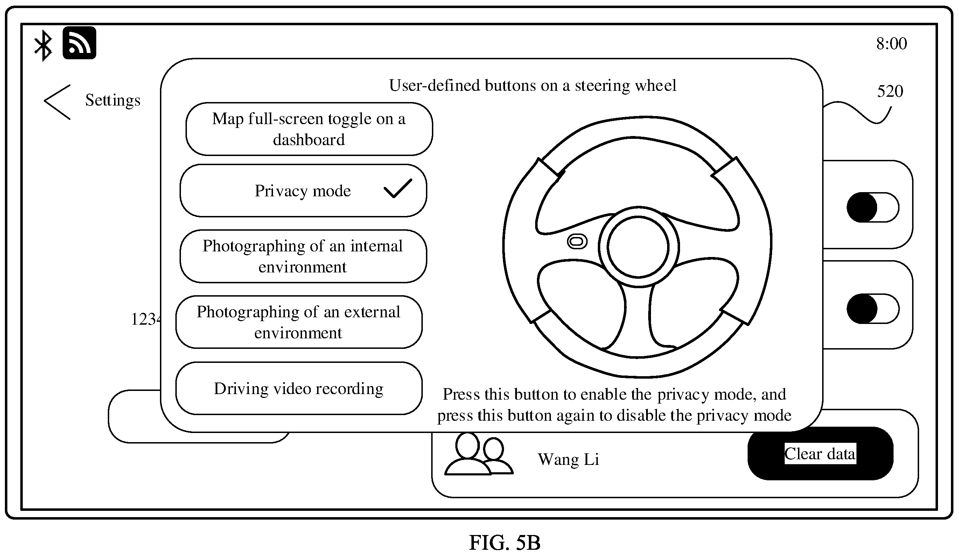

FIG. 5A and FIG. 5B are diagrams of an example in which the vehicle 100 displays a usage description of a shortcut button.

As shown in FIG. 5A, after the vehicle 100 enables the privacy mode, prompt information 510 may be displayed on the central display screen of the vehicle 100. The prompt information 510 includes a control 501 and a control 502. The prompt information 510 includes prompt content: "After the setting is completed, the privacy mode can be quickly enabled or disabled by using a user-defined button on a steering wheel". The prompt information is used to prompt the user to use the shortcut button for enabling/disabling the privacy mode. The vehicle 100 may receive an input operation (for example, a tap) performed by the user on the control 501, and in response to the input operation performed by the user, the vehicle 100 does not display the usage description of the shortcut button, or may consider that the user does not need to enable the shortcut button for enabling/disabling the privacy mode. The vehicle 100 may also receive an input operation (for example, a tap) performed by the user on the control 502, and in response to the input operation performed by the user, which may be considered that the user needs to enable the shortcut button for enabling/disabling the privacy mode, the vehicle 100 may display the usage description of the shortcut button.

As shown in FIG. 5A, the vehicle 100 receives the input operation (for example, a tap) performed by the user on the control 502, and in response to the input operation performed by the user, the vehicle 100 may display a usage description 520 shown in FIG. 5B.

The usage description 520 includes usage descriptions of shortcut buttons for one or more functions, including an option of a map full-screen toggle on a dashboard, a privacy mode option, an internal photographing option, an external photographing option, a driving video recording option, and the like.

As shown in FIG. 5B, the vehicle 100 receives an input operation (for example, a tap) performed by the user on the privacy mode option, and in response to the input operation performed by the user, the vehicle 100 may provide the usage description of the shortcut button for enabling/disabling the privacy mode, for example, a location of the shortcut button, how to enable the privacy mode, and how to disable the privacy mode. As shown in FIG. 5B, the usage description of the shortcut button for enabling/disabling the privacy mode may be "Press this button to enable the privacy mode, and press this button again to disable the privacy mode".

If the privacy mode on the vehicle 100 is currently enabled, when the user presses the shortcut button on the steering wheel, the vehicle 100 disables the privacy mode. When the user presses the shortcut button on the steering wheel again, the vehicle 100 enables the privacy mode again.

It should be noted that the shortcut button for enabling/disabling the privacy mode may be located on the steering wheel, or may be located in another position. A position of the shortcut button for enabling/disabling the privacy mode is not limited in this embodiment of this application.

It should be noted that the shortcut button for enabling/disabling the privacy mode may be a physical button or a virtual button. Alternatively, the shortcut button may be a push button, a rotatable button, or a sliding button. A specific implementation of a type of the shortcut button for enabling/disabling the privacy mode is not limited in this embodiment of this application.

The following describes several trigger manners in which the vehicle 100 automatically prompts a user whether to enable a privacy mode.

Manner 1: After the user logs in to an account on the vehicle 100, when detecting that the privacy mode is not enabled, the vehicle 100 may prompt the user whether to enable the privacy mode, for example, display the prompt information 440 shown in FIG. 4B.

Optionally, the vehicle 100 may prompt the user only once whether to enable the privacy mode. Alternatively, the vehicle 100 may prompt the user at a specific time interval whether to enable the privacy mode.

Manner 2: After the user logs in to an account on the vehicle 100, when it is detected that the privacy mode is not enabled, if the user does not enable the privacy mode after the vehicle 100 gives a prompt for a plurality of consecutive times (for example, three consecutive times), the vehicle 100 may no longer prompt, within a specific period (for example, one week), the user whether to enable the privacy mode. For example, the prompt information 440 shown in FIG. 4B is no longer displayed.

Manner 3: When the vehicle 100 detects that there are a plurality of persons in the vehicle and that the privacy mode is not enabled, the vehicle 100 does not display prompt information, to prevent another occupant from seeing the prompt information.

Optionally, when the vehicle 100 detects that there are a plurality of persons in the vehicle, the vehicle 100 does not display the prompt information, but the vehicle 100 may automatically enable the privacy mode.

Optionally, after the vehicle 100 automatically enables the privacy mode, when detecting that there is only one person, which is a driver, in the vehicle, the vehicle 100 may output prompt information. The prompt information is used to prompt the user that the privacy mode is automatically enabled for the user, and whether to continue enabling the privacy mode or to disable the privacy mode.

The vehicle 100 may further prompt, in another manner, the user whether to enable the privacy mode. This is not limited in this embodiment of this application.

The following describes several triggering manners in which the vehicle 100 displays a usage description of a shortcut button.

Manner 1: Each time the vehicle 100 detects that the privacy mode is enabled, the vehicle 100 displays the usage description of the shortcut button, to indicate the usage description of the shortcut button for enabling/ the privacy mode to the user.

Manner 2: When detecting that the user logs in to an account on the vehicle 100, and that the privacy mode is not enabled, the vehicle 100 may display the usage description of the shortcut button, to indicate the usage description of the shortcut button for enabling/ the privacy mode to the user.

Optionally, the vehicle 100 may prompt the user only once whether to view the usage description of the shortcut button. Alternatively, the vehicle 100 may prompt the user at a specific time interval whether to view the usage description of the shortcut button.

Manner 3: When the vehicle 100 detects that there are a plurality of persons in the vehicle and that the privacy mode is not enabled, the vehicle 100 does not display the usage description of the shortcut button, to prevent another occupant from seeing the usage description of the shortcut button. When detecting that there is only one person, which is a driver, in the vehicle, the vehicle 100 may display the usage description of the shortcut button, to indicate the usage description of the shortcut button for enabling/ the privacy mode to the user.

Manner 4: When the vehicle 100 detects that there are a plurality of persons in the vehicle and that the privacy mode is enabled, the vehicle 100 does not display the usage description of the shortcut button, to prevent another occupant from seeing the usage description of the shortcut button. When detecting that there is only one person, which is a driver, in the vehicle, the vehicle 100 may display the usage description of the shortcut button, to indicate the usage description of the shortcut button for enabling/ the privacy mode to the user.

Manner 5: After the user logs in to an account on the vehicle 100, if the user does not view the usage description of the shortcut button after the vehicle 100 prompts the user whether to view the usage description for a plurality of consecutive times (for example, three consecutive times), the vehicle 100 may no longer prompt the user to view the usage description of the shortcut button within a specific period (for example, one week). For example, the prompt information 510 shown in FIG. 5A is no longer displayed.

Manner 6: Each time the vehicle 100 detects that the privacy mode is disabled, the vehicle 100 may not display the usage description of the shortcut button.

For example, after the user refuses to enable the privacy mode, the vehicle 100 does not display the usage description of the shortcut button either.

The vehicle 100 may alternatively display the usage description of the shortcut button in another manner. This is not limited in this embodiment of this application.

Optionally, in some embodiments, after the vehicle 100 enables a privacy mode, the vehicle 100 may display a sign indicating that the privacy mode is enabled. The sign notifies a user that the privacy mode is enabled. This avoids a case in which the user does not know whether the privacy mode is enabled or disabled when the vehicle 100 does not give any prompt. The sign indicating that the privacy mode is enabled includes but is not limited to an icon, a text, a voice prompt, or the like.

The vehicle 100 may display, at any one or more of a central display screen, a HUD, or a dashboard, the sign indicating that the privacy mode is enabled.

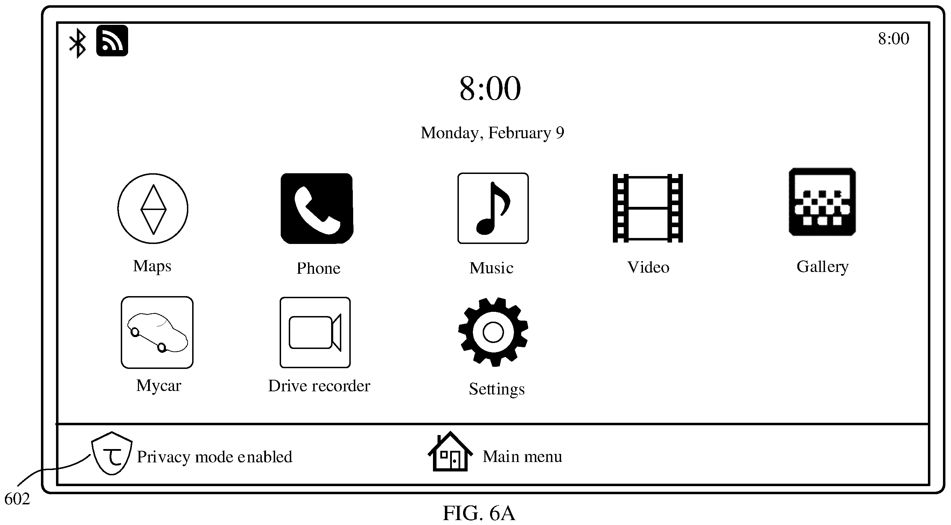

FIG. 6A is a diagram of an example in which a central display screen displays an icon of a privacy mode.

As shown in FIG. 6A, after the privacy mode on the vehicle 100 is enabled, the vehicle 100 may display, on the central display screen, an icon 602 of the privacy mode shown in FIG. 6A.

Optionally, when the vehicle 100 displays, on the central display screen, the privacy mode icon 602 shown in FIG. 6A, the vehicle 100 may also display a text shown in FIG. 6A, where the text is used to prompt a user that the privacy mode is enabled. The text content may be "Privacy mode enabled".

Optionally, the vehicle 100 may display only the text on the central display screen, and does not display the icon.

Optionally, the vehicle 100 may display neither the text nor the icon on the central display screen, to avoid the text and/or icon being seen by another occupant. The vehicle 100 may display the text and/or the icon on a HUD.

An example in which the vehicle 100 displays neither the text or the icon on the central display screen is used for description in the following embodiment of this application.

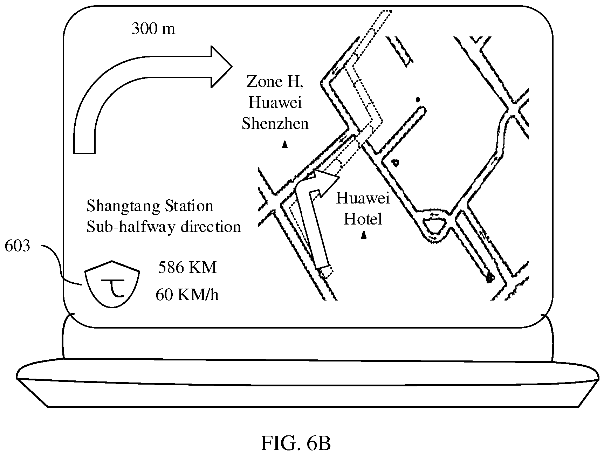

FIG. 6B is a diagram of an example in which a HUD displays an icon of a privacy mode.

As shown in FIG. 6B, after the privacy mode on the vehicle 100 is enabled, the vehicle 100 may display, on the HUD, an icon 603 of the privacy mode shown in FIG. 6B.

Optionally, when the vehicle 100 displays, on the HUD, the privacy mode icon 603 shown in FIG. 6B, the vehicle 100 may also display a text on the HUD, where the text is used to prompt a user that the privacy mode is enabled. The text content may be "Privacy mode enabled".

Optionally, the vehicle 100 may display only the text on the HUD, and does not display the icon.

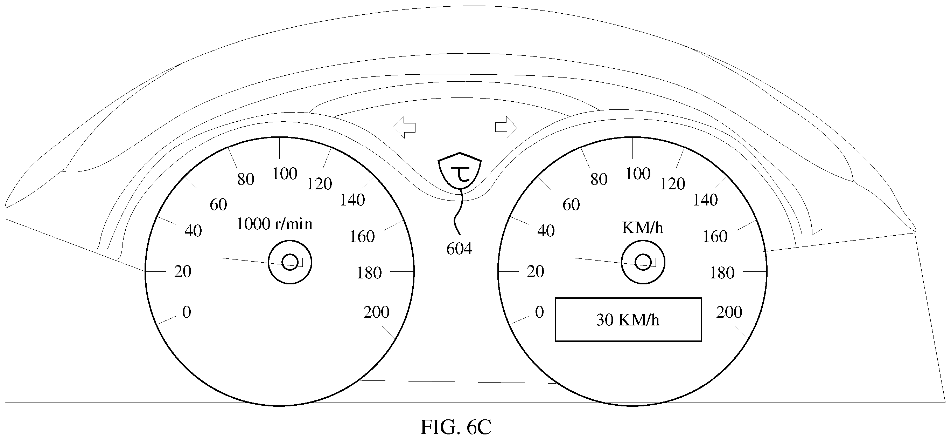

FIG. 6C is a diagram of an example in which a dashboard displays an icon of a privacy mode.

As shown in FIG. 6C, after the privacy mode on the vehicle 100 is enabled, the vehicle 100 may display, on the dashboard, an icon 604 of the privacy mode shown in FIG. 6C.

Optionally, when the vehicle 100 displays the privacy mode icon 604 shown in FIG. 6C on the dashboard, the vehicle 100 may also display a text on the dashboard, where the text is used to prompt a user that the privacy mode is enabled. The text content may be "Privacy mode enabled".

Optionally, the vehicle 100 may display only the text on the dashboard, and does not display the icon.

The vehicle 100 may alternatively display, in another manner, that the privacy mode on the vehicle 100 is enabled. This is not limited in this embodiment of this application.

After the vehicle 100 enables a privacy mode and before outputting to-be-displayed information, the vehicle 100 needs to determine whether the to-be-displayed information includes sensitive information. The to-be-displayed information may come from data in different applications. Which data in the application is sensitive information and which data in the application is not sensitive information are preset. In other words, the data in the applications is labeled in advance, and the vehicle 100 may know which data is sensitive information and which data is not sensitive information. Sensitive information may be understood as information related to user privacy, and user-related sensitive information is also different in different applications.

Optionally, the application may be an application on the vehicle 100, or may be an application on another device (for example, a mobile phone).

Optionally, for different types of sensitive information, rules for displaying the different types of sensitive information by the vehicle 100 are also different. In other words, the vehicle 100 may process the different types of sensitive information in different processing manners.

After enabling the privacy mode and before outputting the to-be-displayed information, when the vehicle 100 determines that the to-be-displayed information is sensitive information, the vehicle 100 may process the to-be-displayed information in a preset processing manner, and does not directly output the to-be-displayed information, to prevent the sensitive information from being seen by another occupant and causing privacy leakage.

The processing manners of sensitive information include but are not limited to one or more of the following: displaying in a different display area, not displaying, displaying after special processing, displaying through another device, or the like.

First information displayed in a different display area, not displayed, displayed after special processing, displayed through another device, or the like may also be referred to as first information displayed in a second form.

Displaying in a different display area means that information originally to be displayed on a central display screen is not displayed on the central display screen, to prevent the sensitive information from being seen by another occupant in the vehicle. Instead, the information is displayed on another display screen in the vehicle, for example, displayed on one or more of a HUD, a dashboard, or a sun visor in the vehicle. In this way, the sensitive information is displayed on the HUD or dashboard, so that only a driver can see the sensitive information, and another occupant cannot see the sensitive information.

Not displaying means that the information originally to be displayed on the central display screen is not displayed on the central display screen, and is not displayed at another location of the vehicle 100.

Displaying after special processing means that after processing is performed on the information originally to be displayed on the central display screen, that is, after sensitive information in the to-be-displayed information is replaced with a preset non-sensitive word, processed to-be-displayed information is displayed on the central display screen, so that information displayed on the central display screen does not include the sensitive information. Optionally, after the vehicle 100 displays, on the central display screen, the specially processed information, the vehicle 100 may display, on one or more of the HUD, the dashboard, or the sun visor in the vehicle, the information that is not specially processed.

Displaying through another device means that the information originally to be displayed on the central display screen or information output by using an audio device in the vehicle 100 is output through another device. Another device includes but is not limited to a device such as a mobile phone, a Bluetooth headset, or a Bluetooth watch.

The sensitive information may be further processed in another manner. This is not limited in this embodiment of this application.

The following describes examples of sensitive information included in different applications.

Applications on the vehicle 100 include but are not limited to a phone application, a map application, a gallery application, a social application, a search application, a drive recorder, a calendar application, and the like.

Different applications include different types of sensitive information.

**Table 2**

| Application name | Sensitive information | Processing manner |
|---|---|---|
| Phone application | Incoming call notification | Processed in one or more of the following manners: displayed in a different display area, not displayed, displayed after special processing, displayed through another device |
| | Call record | |
| | Contact information | |

Table 2 shows an example of an information category of sensitive information in the phone application. Sensitive information in the phone application includes but is not limited to an incoming call notification, a call record, contact information, and the like. For example, the incoming call notification generally includes a name and/or a phone number of a caller; the call record shows that at specific times, a user makes a call to specific contacts; and contact information includes a name and/or a phone number of a contact. Before the vehicle 100 displays the sensitive information in the phone application, if it is determined that there is not only a driver in the vehicle 100, or the driver is a not a user of a logged-in account on the vehicle 100, the vehicle 100 may process the sensitive information in the phone application in one or more of the foregoing processing manners, and then processed sensitive information in the phone application is displayed, to prevent the sensitive information from being seen by another person, and cause privacy leakage of the user.

It should be noted that the sensitive information in the phone application may further include another type of data. Table 2 is merely an example for description. This is not limited in this embodiment of this application.

For example, for an incoming call notification in the phone application, the vehicle 100 may not display the incoming call notification on the central display screen, but display the incoming call notification in another display area; and/or the vehicle 100 may not display the incoming call notification on the central display screen or display the incoming call notification in another display area; and/or the vehicle 100 may perform special processing on the incoming call notification and then display a processed incoming call notification on the central display screen, that is, after sensitive information in the incoming call notification is replaced with a preset non-sensitive word, the processed incoming call notification is displayed on the central display screen; and/or the vehicle 100 may display the incoming call notification through another device.

For example, for a call record in the phone application, the vehicle 100 may not display the call record on the central display screen, but display the call record in another display area; and/or the vehicle 100 may not display the call record on the central display screen or display the call record in another display area; and/or the vehicle 100 may perform special processing on the call record and then display a processed call record on the central display screen, that is, after sensitive information in the call record is replaced with a preset non-sensitive word, the processed call record is displayed on the central display screen; and/or the vehicle 100 may display the call record through another device.

For example, for contact information in the phone application, the vehicle 100 may not display the contact information on the central display screen, but display the contact information in another display area; and/or the vehicle 100 may not display the contact information on the central display screen or display the contact information in another display area; and/or the vehicle 100 may perform special processing on the contact information and then display processed contact information on the central display screen, that is, after sensitive information in the contact information is replaced with a preset non-sensitive word, the processed contact information is displayed on the central display screen; and/or the vehicle 100 may display the contact information through another device. In some embodiments, the vehicle 100 may alternatively directly display the contact information on the central display screen without performing any processing. This is not limited in this embodiment of this application.

It should be noted that, the vehicle 100 may process the incoming call notification, the call record, the contact information, and the like in a same manner or in different manners. This is not limited in this embodiment of this application.

**Table 3**

| Application name | Sensitive information | Processing manner |
|---|---|---|
| Map application | Historical destination | Processed in one or more of the following manners: displayed in a different display area, not displayed, displayed after special processing, displayed through another device |
| | Search record | |
| | Saved address | |
| | Frequently used address | |

Table 3 shows an example of an information category of sensitive information in the map application. Sensitive information in the map application includes but is not limited to a historical destination, a search record, a saved address, a frequently used address, and the like. For example, the historical destination includes a place that a user has visited at a specific time; the search record includes address information searched by the user; the saved address includes destination information liked and saved by the user; and the frequently used address includes a place that the user frequently visits, for example, an address of a home or an address of a company. Before the vehicle 100 displays the sensitive information in the map application, if it is determined that there is not only a driver in the vehicle 100, or the driver is a not a user of a logged-in account on the vehicle 100, the vehicle 100 may process the sensitive information in the map application in one or more of the foregoing processing manners, and then processed sensitive information in the map application is displayed, to prevent the sensitive information from being seen by another person, and cause privacy leakage of the user.

It should be noted that the sensitive information in the map application may further include another type of data. Table 3 is merely an example for description. This is not limited in this embodiment of this application.

For example, for a historical destination in the map application, the vehicle 100 may not display the historical destination on the central display screen, but display the historical destination in another display area; and/or the vehicle 100 may not display the historical destination on the central display screen or display the historical destination in another display area; and/or the vehicle 100 may perform special processing on the historical destination and then display a processed historical destination on the central display screen, that is, after sensitive information in the historical destination is replaced with a preset non-sensitive word, the processed historical destination is displayed on the central display screen; and/or the vehicle 100 may display the historical destination through another device.

For example, for a search record in the map application, the vehicle 100 may not display the search record on the central display screen, but display the search record in another display area; and/or the vehicle 100 may not display the search record on the central display screen or display the search record in another display area; and/or the vehicle 100 may perform special processing on the search record and then display a processed search record on the central display screen, that is, after sensitive information in the search record is replaced with a preset non-sensitive word, the processed search record is displayed on the central display screen; and/or the vehicle 100 may display the search record through another device.

For example, for a saved address in the map application, the vehicle 100 may not display the saved address on the central display screen, but display the saved address in another display area; and/or the vehicle 100 may not display the saved address on the central display screen or display the saved address in another display area; and/or the vehicle 100 may perform special processing on the saved address and then display a processed saved address on the central display screen, that is, after sensitive information in the saved address is replaced with a preset non-sensitive word, the processed saved address is displayed on the central display screen; and/or the vehicle 100 may display the saved address through another device.

For example, for a frequently used address in the map application, the vehicle 100 may not display the frequently used address on the central display screen, but display the frequently used address in another display area; and/or the vehicle 100 may not display the frequently used address on the central display screen or display the frequently used address in another display area; and/or the vehicle 100 may perform special processing on the frequently used address and then display a processed frequently used address on the central display screen, that is, after sensitive information in the frequently used address is replaced with a preset non-sensitive word, the processed frequently used address is displayed on the central display screen; and/or the vehicle 100 may display the frequently used address through another device. In some embodiments, the vehicle 100 may alternatively directly display the frequently used address on the central display screen without performing any processing. This is not limited in this embodiment of this application.

It should be noted that, the vehicle 100 may process the historical destination, the search record, the saved address, the frequently used address, and the like in a same manner or in different manners. This is not limited in this embodiment of this application.

**Table 4**

| Application name | Sensitive information | Processing manner |
|---|---|---|
| Gallery application | Photo | Processed in one or more of the following manners: displayed in a different display area, not displayed, displayed after special processing, displayed through another device |
| | Video | |

Table 4 shows an example of an information category of sensitive information in the gallery application. Sensitive information in the gallery application includes but is not limited to a photo, a video, and the like. Before the vehicle 100 displays the sensitive information in the gallery application, if it is determined that there is not only a driver in the vehicle 100, or the driver is a not a user of a logged-in account on the vehicle 100, the vehicle 100 may process the sensitive information in the gallery application in one or more of the foregoing processing manners, and then processed sensitive information in the gallery application is displayed, to prevent the sensitive information from being seen by another person, and cause privacy leakage of the user.

It should be noted that the sensitive information in the gallery application may further include another type of data. Table 4 is merely an example for description. This is not limited in this embodiment of this application.

For example, for a photo in the gallery application, the vehicle 100 may not display the photo on the central display screen, but display the photo in another display area; and/or the vehicle 100 may not display the photo on the central display screen or display the photo in another display area; and/or the vehicle 100 may perform special processing on the photo and then display a processed photo on the central display screen; and/or the vehicle 100 may display the photo through another device.

For example, for a video in the gallery application, the vehicle 100 may not display the video on the central display screen, but display the video in another display area; and/or the vehicle 100 may not display the video on the central display screen or display the video in another display area; and/or the vehicle 100 may perform special processing on the video and then display a processed video on the central display screen; and/or the vehicle 100 may display the video through another device.

It should be noted that, the vehicle 100 may process the photo, the video, and the like in a same manner or in different manners. This is not limited in this embodiment of this application.

**Table 5**

| Application name | Sensitive information | Processing manner |
|---|---|---|
| Social application | Message notification | Processed in one or more of the following manners: displayed in a different display area, not displayed, displayed after special processing, displayed through another device |
| | Call record | |
| | Contact information | |

Table 5 shows an example of an information category of sensitive information in the social application. Sensitive information in the social application includes but is not limited to a message notification, a call record, contact information, and the like. For example, the message notification generally includes a name and/or a phone number of a caller; the call record shows that at specific times, a user makes a call to specific contacts; and contact information includes a name and/or a phone number of a contact. Before the vehicle 100 displays the sensitive information in the social application, if it is determined that there is not only a driver in the vehicle 100, or the driver is a not a user of a logged-in account on the vehicle 100, the vehicle 100 may process the sensitive information in the social application in one or more of the foregoing processing manners, and then processed sensitive information in the social application is displayed, to prevent the sensitive information from being seen by another person, and cause privacy leakage of the user.

It should be noted that the sensitive information in the social application may further include another type of data. Table 5 is merely an example for description. This is not limited in this embodiment of this application.

The vehicle 100 may process the message notification, the call record, the contact information, and the like in one or more of the following manners: displaying in a different display area, not displaying, displaying after special processing, displaying through another device, and then displaying is performed for the user for viewing. A manner of processing a plurality of pieces of sensitive information in the social application is similar to the manner of processing a plurality of pieces of sensitive information in the phone application. For specific descriptions, refer to the descriptions of the manner of processing the plurality of pieces of sensitive information in the phone application shown in Table 1. Details are not described in this embodiment of this application again.

**Table 6**

| Application name | Sensitive information | Processing manner |
|---|---|---|
| Search application | Search record | Processed in one or more of the following manners: displayed in a different display area, not displayed, displayed after special processing, displayed through another device |

Table 6 shows an example of an information category of sensitive information in the search application. Sensitive information in the search application includes but is not limited to a search record, and the like. Before the vehicle 100 displays the sensitive information in the search application, if it is determined that there is not only a driver in the vehicle 100, or the driver is a not a user of a logged-in account on the vehicle 100, the vehicle 100 may process the sensitive information in the search application in one or more of the foregoing processing manners, and then processed sensitive information in the search application is displayed, to prevent the sensitive information from being seen by another person, and cause privacy leakage of the user.

It should be noted that the sensitive information in the search application may further include another type of data. Table 6 is merely an example for description. This is not limited in this embodiment of this application.

For example, for a search record in the search application, the vehicle 100 may not display the search record on the central display screen, but display the search record in another display area; and/or the vehicle 100 may not display the search record on the central display screen or display the search record in another display area; and/or the vehicle 100 may perform special processing on the search record and then display a processed search record on the central display screen, for example, after sensitive information in the search record is replaced with a preset non-sensitive word, the processed search record is displayed on the central display screen; and/or the vehicle 100 may display the search record through another device.

It should be noted that, the vehicle 100 may process the search record, and the like in a same manner or in different manners. This is not limited in this embodiment of this application.

**Table 7**

| Application name | Sensitive information | Processing manner |
|---|---|---|
| Calendar application | Schedule information | Processed in one or more of the following manners: displayed in a different display area, not displayed, displayed after special processing, displayed through another device |

Table 7 shows an example of an information category of sensitive information in the calendar application. Sensitive information in the calendar application includes but is not limited to schedule information, and the like. Before the vehicle 100 displays the sensitive information in the calendar application, if it is determined that there is not only a driver in the vehicle 100, or the driver is a not a user of a logged-in account on the vehicle 100, the vehicle 100 may process the sensitive information in the calendar application in one or more of the foregoing processing manners, and then processed sensitive information in the calendar application is displayed, to prevent the sensitive information from being seen by another person, and cause privacy leakage of the user.

It should be noted that the sensitive information in the calendar application may further include another type of data. Table 7 is merely an example for description. This is not limited in this embodiment of this application.

For example, for schedule information in the calendar application, the vehicle 100 may not display the schedule information on the central display screen, but display the schedule information in another display area; and/or the vehicle 100 may not display the schedule information on the central display screen or display the schedule information in another display area; and/or the vehicle 100 may perform special processing on the schedule information and then display processed schedule information on the central display screen, for example, after sensitive information in the schedule information is replaced with a preset non-sensitive word, the processed schedule information is displayed on the central display screen; and/or the vehicle 100 may display the schedule information through another device.

It should be noted that, the vehicle 100 may process the schedule information, and the like in a same manner or in different manners. This is not limited in this embodiment of this application.

**Table 8**

| Application name | Sensitive information | Processing manner |
|---|---|---|
| Drive recorder | Audio record | Processed in one or more of the following manners: displayed in a different display area, not displayed, displayed after special processing, displayed through another device |
| | Video record | |

Table 8 shows an example of an information category of sensitive information in the drive recorder. Sensitive information in the drive recorder includes but is not limited to an audio record, a video record, and the like. Before the vehicle 100 displays the sensitive information in the drive recorder, if it is determined that there is not only a driver in the vehicle 100, or the driver is a not a user of a logged-in account on the vehicle 100, the vehicle 100 may process the sensitive information in the drive recorder in one or more of the foregoing processing manners, and then processed sensitive information in the drive recorder is displayed, to prevent the sensitive information from being seen by another person, and cause privacy leakage of the user.

It should be noted that the sensitive information in the drive recorder may further include another type of data. Table 8 is merely an example for description. This is not limited in this embodiment of this application.

For example, for an audio record in the drive recorder, the vehicle 100 may not display the audio record on the central display screen, but display the audio record in another display area; and/or the vehicle 100 may not display the audio record on the central display screen or display the audio record in another display area; and/or the vehicle 100 may perform special processing on the audio record and then display a processed audio record on the central display screen, for example, after sensitive information in the audio record is replaced with a preset non-sensitive word, the processed audio record is displayed on the central display screen; and/or the vehicle 100 may display the audio record through another device.

For example, for a video record in the drive recorder, the vehicle 100 may not display the video record on the central display screen, but display the video record in another display area; and/or the vehicle 100 may not display the video record on the central display screen or display the video record in another display area; and/or the vehicle 100 may perform special processing on the video record and then display a processed video record on the central display screen, for example, after sensitive information in the video record is replaced with a preset non-sensitive word, the processed video record is displayed on the central display screen; and/or the vehicle 100 may display the video record through another device.

It should be noted that, the vehicle 100 may process the audio record, the video record, and the like in a same manner or in different manners. This is not limited in this embodiment of this application.

Optionally, in some embodiments, the vehicle 100 may detect that there is not only one person in the vehicle, and the vehicle 100 enables a privacy mode. Then, the vehicle 100 obtains to-be-output information (for example, first information). After the vehicle 100 determines that the first information is sensitive information, the vehicle 100 processes the first information in a preset manner, and then outputs first information processed in the preset manner.

Optionally, in some embodiments, the vehicle 100 may detect there is only one person in the vehicle, and the vehicle 100 does not enable the privacy mode. Then, the vehicle 100 obtains to-be-output information (for example, the first information). Regardless of whether the first information is sensitive information or non-sensitive information, the vehicle 100 directly outputs the first information without performing any processing on the first information.

Optionally, in some embodiments, to further improve concealment of information, the vehicle 100 may not enable the privacy mode when detecting that there is only one person in the vehicle and the person is a driver. Then, the vehicle 100 obtains to-be-output information (for example, the first information). Regardless of whether the first information is sensitive information or non-sensitive information, the vehicle 100 directly outputs the first information without performing any processing on the first information.

Optionally, in some embodiments, it is assumed that the vehicle 100 has enabled the privacy mode when detecting that there is only a driver in the vehicle. Then, the vehicle 100 obtains to-be-output information (for example, the first information). Regardless of whether the first information is sensitive information or non-sensitive information, to enable the first information to be normally output to a user, the vehicle 100 may automatically disable the privacy mode, and normally output the first information to the user. In another embodiment, the vehicle 100 may prompt the user whether to disable the privacy mode, receive an operation of the user to disable the privacy mode, and then normally output the first information to the user.

Optionally, in some embodiments, the vehicle 100 may detect that there is only one person in the vehicle, or in other words, there is only one person in the vehicle and the person is a driver, and the vehicle 100 does not enable the privacy mode. Then, the vehicle 100 obtains to-be-output information (for example, the first information). Regardless of whether the first information is sensitive information or non-sensitive information, the vehicle 100 directly outputs the first information without performing any processing on the first information. If the vehicle 100 detects that another occupant gets on the vehicle when the vehicle 100 outputs the first information, that is, there is not only one person in the vehicle, to prevent the another occupant from viewing the first information, the vehicle 100 may process, in the preset manner, the first information that is being output, and then output first information that is processed in the preset manner. In another embodiment, after the vehicle 100 outputs the first information, the vehicle 100 obtains to-be-output second information. In this case, the vehicle 100 may process the second information in the preset manner, and then output second information processed in the preset manner.

Optionally, in some embodiments, the vehicle 100 may detect that there is only one person in the vehicle, or in other words, there is only one person in the vehicle and the person is a driver, and the vehicle 100 does not enable the privacy mode. Then, the vehicle 100 obtains to-be-output information (for example, the first information). Regardless of whether the first information is sensitive information or non-sensitive information, the vehicle 100 directly outputs the first information without performing any processing on the first information. If the vehicle 100 detects that another occupant gets on the vehicle when the vehicle 100 outputs the first information, that is, there is not only one person in the vehicle, to prevent the another occupant from viewing the first information, the vehicle 100 may process, in the preset manner, the first information that is being output, and then output first information that is processed in the preset manner. If the another occupant gets off the vehicle when the vehicle 100 is outputting the first information that is processed in the preset manner, that is, there is only one person in the vehicle, or in other words, there is only one person in the vehicle and the person is the driver, the vehicle 100 may not process the first information in the preset manner, but directly output the first information. In other words, when another occupant is absent, the vehicle 100 may directly display the first message without processing the first information.

In a possible implementation, the vehicle 100 detects that another occupant gets off the vehicle. There is only one person in the vehicle. In this case, the vehicle 100 may automatically disable the privacy mode, and directly output the first information instead of processing the first information in the preset manner. In another possible implementation, the vehicle 100 detects that another occupant gets off the vehicle. There is only one person in the vehicle, and the driver is a user of a logged-in account on the vehicle 100. In this case, the vehicle 100 may prompt the user whether to disable the privacy mode, and receive an operation of the user to disable the privacy mode. The first information is directly output instead of being processed in the preset manner.

In some embodiments, to further protect user privacy, the vehicle 100 may determine, based on the manner described in the foregoing embodiment, whether a person in the vehicle and the user of the logged-in account on the vehicle 100 are the same person. If the person in the vehicle and the user of the logged-in account on the vehicle 100 are the same person, the vehicle 100 may directly display the to-be-output information without performing any processing on the to-be-output information. If the person in the vehicle and the user of the logged-in account on the vehicle 100 are not the same person, the vehicle 100 needs to process the to-be-output information in the preset manner, and then output, to the user, to-be-output information that is processed in the preset manner.

Optionally, in some embodiments, after the vehicle 100 enables a privacy mode function, when the vehicle 100 detects that there are a plurality of persons in the vehicle, the vehicle 100 may process, in the preset manner, sensitive information that exists before the privacy mode function is enabled, and then display processed sensitive information on a central display screen. The vehicle 100 may directly display, on the central display screen, sensitive information that exists after the privacy mode is enabled, without processing the sensitive information in the preset manner.

The following describes, with reference to specific applications, how the vehicle 100 processes and displays to-be-output information based on a quantity of persons in the vehicle and a type of to-be-displayed information.

### Scenario 1: Phone application scenario

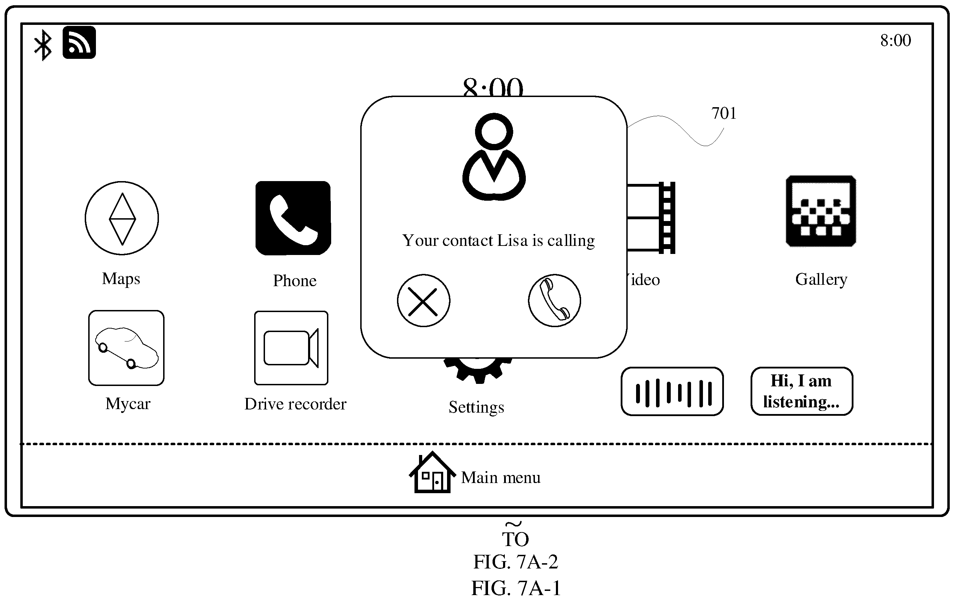

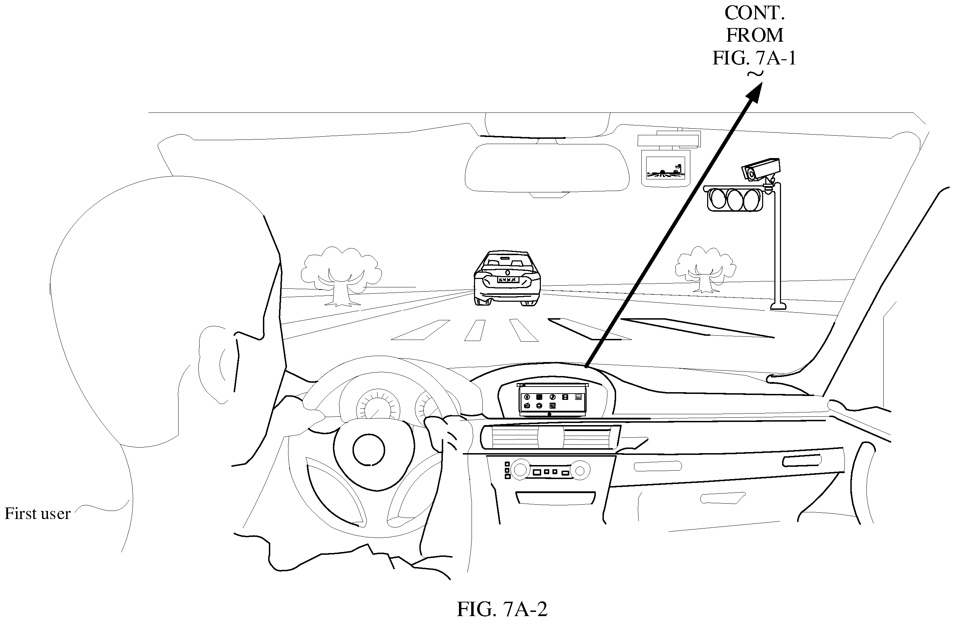

FIG. 7A-1 to FIG. 7N are diagrams of an example of how the vehicle 100 displays sensitive information in a phone application.

FIG. 7A-1 and FIG. 7A-2 are a diagram of an example of a scenario in which there is only one person (for example, a first user) in the vehicle 100.

As shown in FIG. 7A-1, if there is a new incoming call notification in this case, the vehicle 100 may directly display the incoming call notification 701 on a central display screen, so that the first user can view the incoming call notification 701. The incoming call notification 701 may include a name (for example, Lisa) and/or a phone number of a caller, a reject control, and an answer control. The incoming call notification 701 may include prompt content: "Your contact Lisa is calling." Optionally, the user may answer a call, reject a call, or the like by using a shortcut button on a steering wheel. Optionally, the user may also control, by using a voice, the vehicle 100 to answer a call or reject a call.

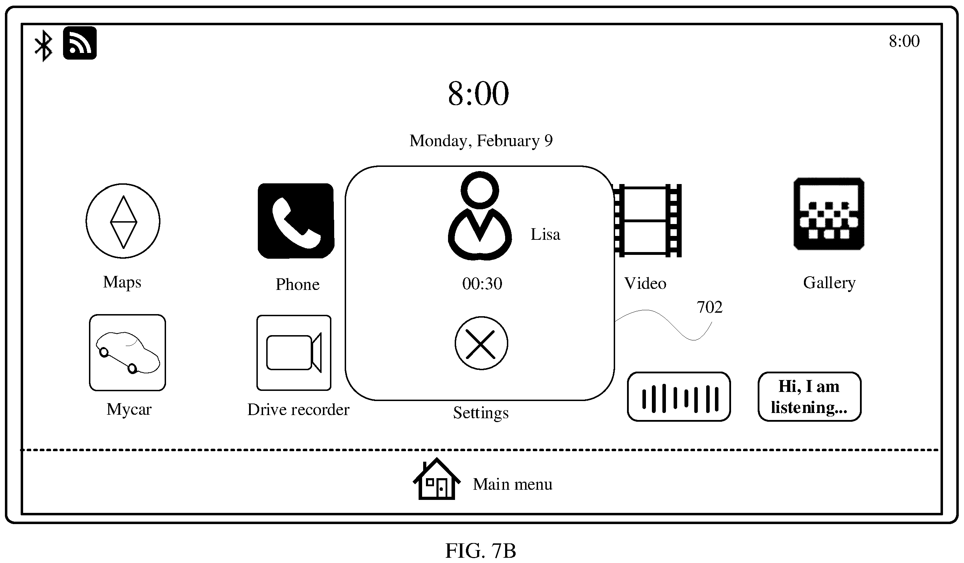

After the first user agrees to answer the call, a call prompt bar 702 shown in FIG. 7B may be displayed on the central display screen. The call prompt bar 702 includes a name (for example, Lisa) of a calling contact, call duration (for example, 30s), a hang up control, and the like.

In some embodiments, if there is another person (for example, a second user) other than the first user in the vehicle 100, that is, the vehicle 100 is not limited to carrying one person, when there is a new incoming call notification, the vehicle 100 may process the incoming call notification in a preset manner and then output a processed incoming call notification to the user.

Optionally, after the second user enters the vehicle 100, if the vehicle 100 detects that there are a plurality of users in the vehicle, the vehicle 100 automatically enables a privacy mode. After the vehicle 100 enables the privacy mode, the vehicle 100 may output prompt information, where the prompt information is used to prompt the user whether to disable the privacy mode. The prompt information may be displayed in any display area of the central display screen, a HUD, or a dashboard. The prompt information may also be output by using another electronic device, for example, a Bluetooth headset, a smartwatch, or a mobile phone. In this way, a case in which the user does not want to enable the privacy mode but the vehicle 100 automatically enables the privacy mode can be avoided. In a possible implementation, after the vehicle 100 outputs the prompt information, the vehicle 100 may display a usage description 520 shown in FIG. 5B, to prompt the user of an operation method of the shortcut button for enabling/disabling the privacy mode.

Optionally, after the second user enters the vehicle 100, if the vehicle 100 detects that there are a plurality of users in the vehicle, the vehicle 100 does not automatically enable the privacy mode. The vehicle 100 may output prompt information, where the prompt information is used to prompt the user whether to enable the privacy mode. The prompt information may be displayed in any display area of the central display screen, the HUD, or the dashboard. The prompt information may also be output by using another electronic device, for example, the Bluetooth headset, the smartwatch, or the mobile phone. In this way, the vehicle 100 may first prompt the user, and then enable the privacy mode after receiving an operation of the user. In a possible implementation, after the vehicle 100 outputs the prompt information, the vehicle 100 may display the usage description 520 shown in FIG. 5B, to prompt the user of the operation method of the shortcut button for enabling/disabling the privacy mode.

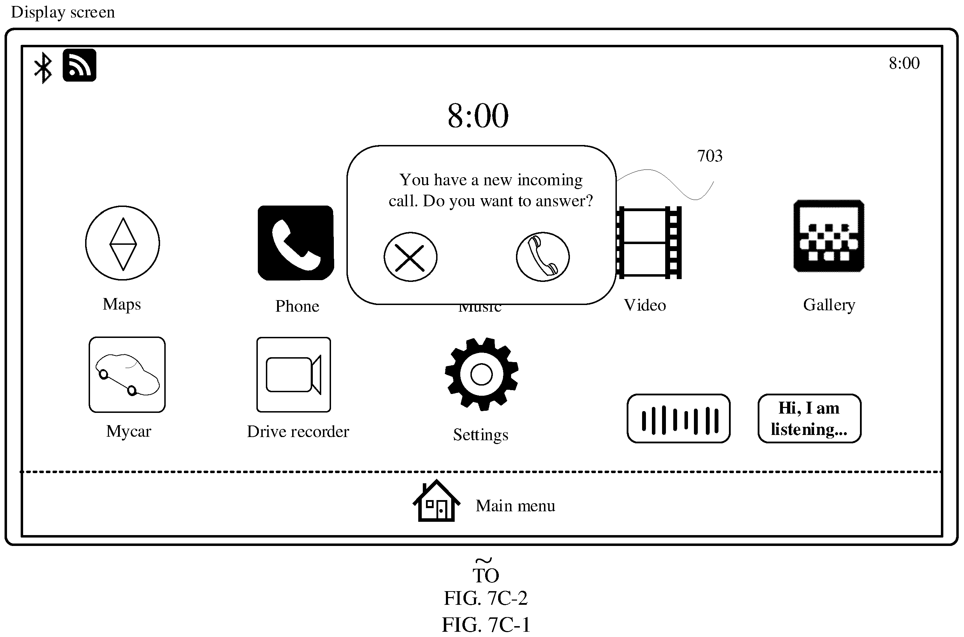

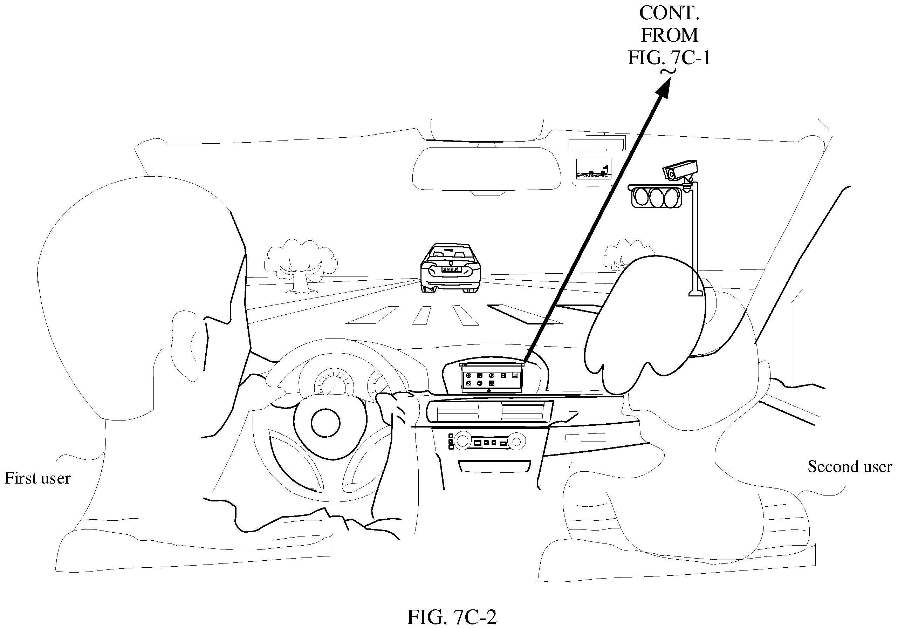

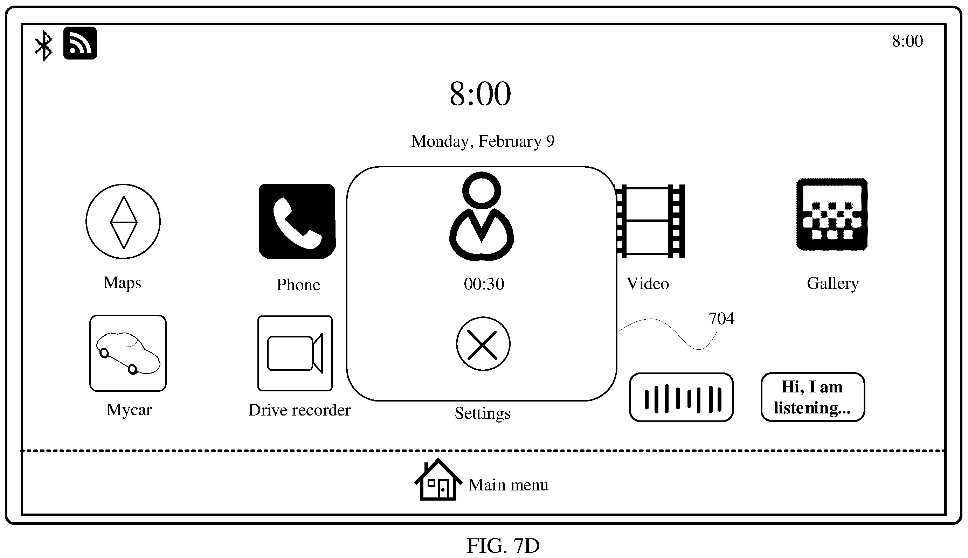

In a possible implementation, as shown in FIG. 7C-1, the vehicle 100 may replace sensitive information in an incoming call notification with non-sensitive information, and then output a processed incoming call notification to the user. The vehicle 100 may display an incoming call notification 703 shown in FIG. 7C-1. The incoming call notification 703 does not include a name (for example, Lisa) and/or a phone number of a caller, and includes a reject control and an answer control. The incoming call notification 701 may include prompt content: "You have a new incoming call. Do you want to answer?" In other words, the incoming call notification 701 does not include sensitive information (for example, a name of a caller). After the user answers the call, a call prompt bar 704 shown in FIG. 7D may be displayed on the central display screen. The vehicle 100 may replace sensitive information in the prompt bar 704 with non-sensitive information, and then output a processed prompt bar 704 to the user. The prompt bar 702 includes call duration (for example, 30s), a hang up control, and the like. The prompt bar 702 does not include the sensitive information (for example, the name of the caller).

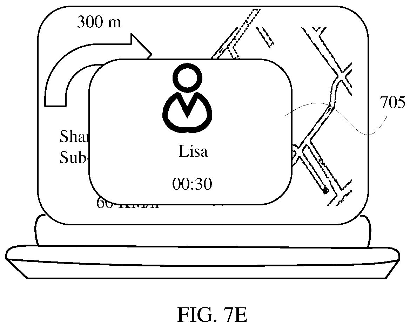

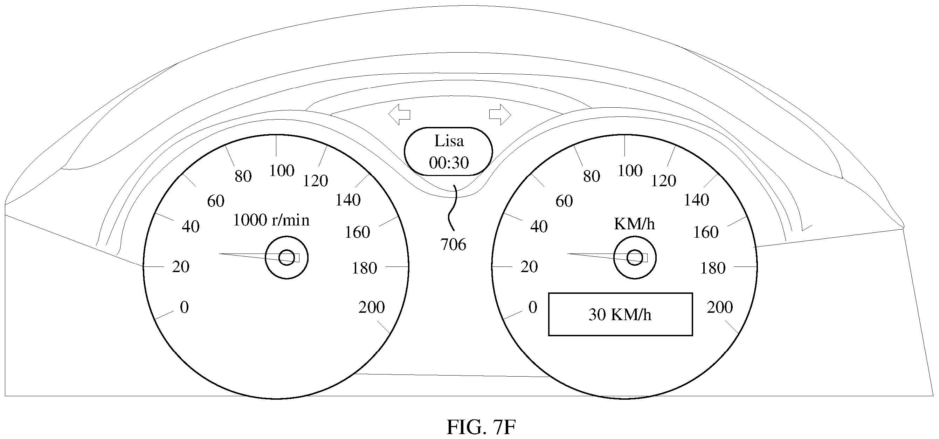

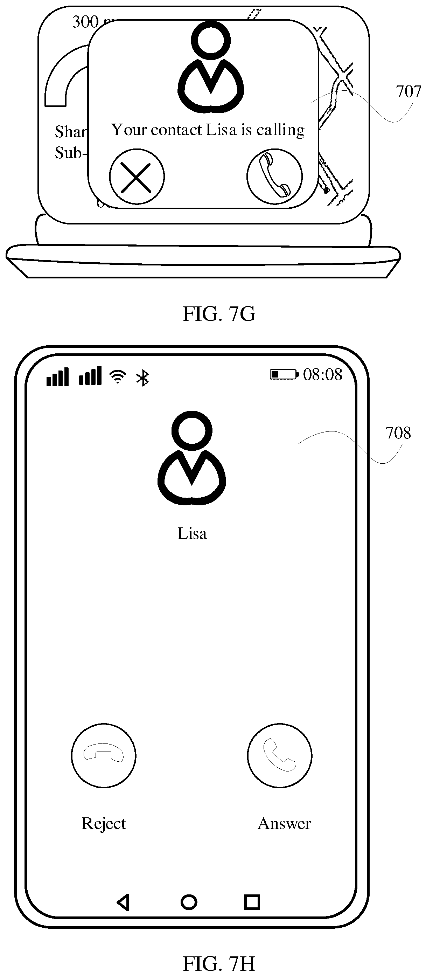

In some embodiments, when the vehicle 100 displays the prompt bar 704 on the central display screen, to display call duration of a specific contact, the vehicle 100 may display, on the HUD or the dashboard, a prompt bar that includes the name of the caller, for example, a prompt bar 705 displayed on the HUD shown in FIG. 7E, and for another example, a prompt bar 706 displayed on the dashboard shown in FIG. 7F. Optionally, the vehicle 100 may display, on the HUD, an incoming call notification that includes the name of the caller, for example, an incoming call notification 707 shown in FIG. 7G. Alternatively, the vehicle 100 may display, on the dashboard, the incoming call notification that includes the name of the caller.

In some embodiments, the vehicle 100 may not display the incoming call notification 703 and the prompt bar 704 on the central display screen, but display the incoming call notification or the prompt bar on the HUD and/or the dashboard. This is not limited in this embodiment of this application.

In another possible implementation, the vehicle 100 may not display the incoming call notification 703 and the prompt bar 704 on the central display screen, but display the incoming call notification and the prompt bar by using another device that establishes a connection. For example, the vehicle 100 displays the incoming call notification and the prompt bar by using the mobile phone. For example, the mobile phone may display a user interface 708 shown in FIG. 7H. The user interface 708 includes the name (for example, Lisa) and/or the phone number of the caller, a reject control, and an answer control.

Optionally, in some embodiments, if the second user is still in the vehicle 100 in a process in which the first user answers the call, the vehicle 100 may display the prompt bar 704 on the central display screen, or display the prompt bar 705 on the HUD, or display the prompt bar 706 on the dashboard. If the second user leaves the vehicle 100 in the process in which the first user answers the call, the vehicle 100 may display the call prompt bar 702 shown in FIG. 7B, and no longer display the prompt bar 704 shown in FIG. 7D, the prompt bar 705 shown in FIG. 7E, or the prompt bar 706 shown in FIG. 7F. If the second user is still in the vehicle 100 after the first user hangs up the call, and there is a new incoming call notification, for example, an incoming call notification of Lccy, the vehicle 100 may display an incoming call notification that does not include the name of a caller, as shown in FIG. 7C-1. Alternatively, the vehicle 100 may display, on the HUD or the dashboard, an incoming call notification that includes the name of the caller (Lccy).

In some embodiments, the vehicle 100 may receive a user operation to enable the vehicle 100 to display some pieces of sensitive information.

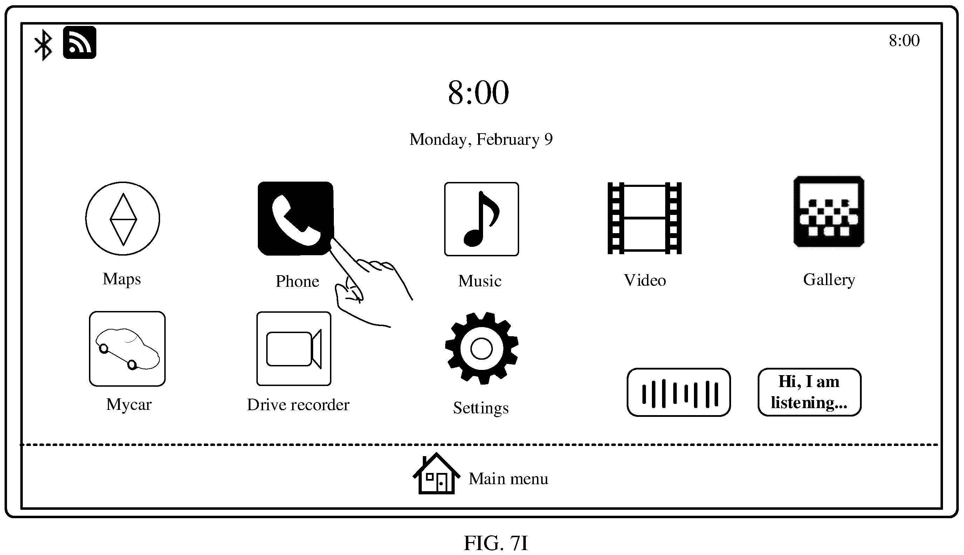

FIG. 7I to FIG. 7L are diagrams of an example in which the vehicle 100 receives the user operation to display sensitive information in the phone application.

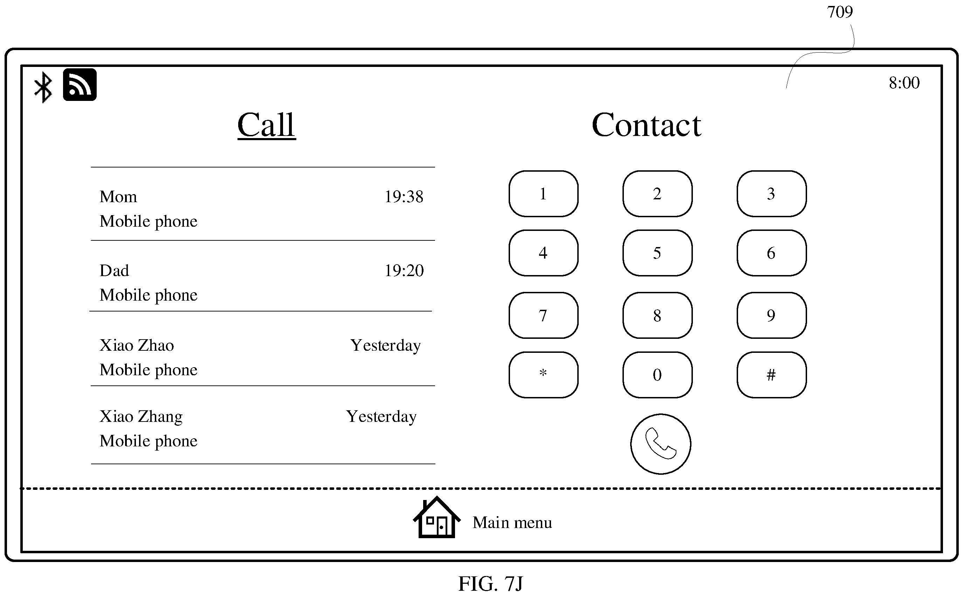

FIG. 7I and FIG. 7J are diagrams of an example of a scenario in which there is only one person (for example, the first user) in the vehicle 100.

As shown in FIG. 7I, the vehicle 100 receives an input operation (for example, a tap) performed by the user on an icon of the phone application displayed on the central display screen. In response to the input operation performed by the user, the vehicle 100 may display a user interface 709 of the phone application shown in FIG. 7J. The user interface 709 displays a call record and a keypad. The call record includes a call record 1, where a name of a contact in the call record 1 is "Mom", and a call time is 7:38 PM. The call record further includes a call record 2, where a name of a contact in the call record 2 is "Dad", and a call time is 7:20 PM. The call record further includes a call record 3, where a name of a contact in the call record 3 is "Xiao Zhao", and a call time is yesterday. The call record further includes a call record 4, where a name of a contact in the call record 4 is "Xiao Zhang", and a call time is yesterday.

In some embodiments, if there is a person other than the first user in the vehicle 100, that is, the vehicle 100 is not limited to carrying one person, before the vehicle 100 receives the user operation and displays the call record, the vehicle 100 may process the call record in a preset manner and then output a processed call record to the user.

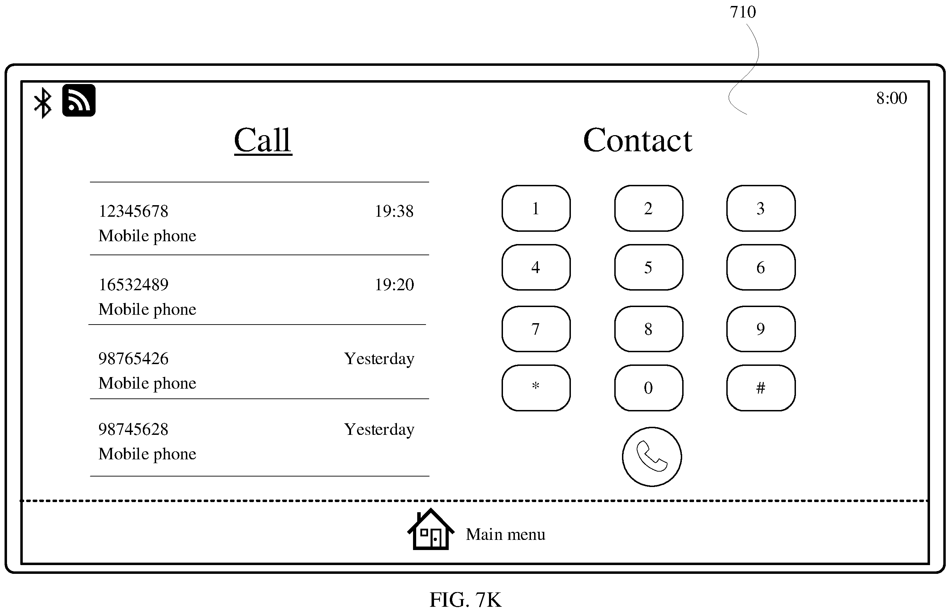

In a possible implementation, the vehicle 100 may replace sensitive information in the call record with non-sensitive information, and then output a processed call record to the user. The vehicle 100 may display a user interface 710 shown in FIG. 7K. The vehicle 100 replaces the name of the contact in the call record with non-sensitive information, and then displays a processed call record. For example, the vehicle 100 may replace the name of the contact with a phone number corresponding to the contact. As shown in FIG. 7K, the name of the contact in the call record 1 is replaced with a phone number (for example, 12345678) of the contact. The name of the contact in the call record 2 is replaced with a phone number (for example, 16532489) of the contact. The name of the contact in the call record 3 is replaced with a phone number (for example, 98765426) of the contact. The name of the contact in the call record 4 is replaced with a phone number (for example, 98745628) of the contact. In this way, another occupant in the vehicle 100 can be prevented from seeing the call record, which shows that calls are made to specific users at specific times or the like, in the telephone application. In addition, a call may be made to a user corresponding to a phone number of the contact.

Optionally, the vehicle 100 may alternatively replace the name of the contact in the call record with another non-sensitive word, which is not limited to a phone number of the contact. This is not limited in this embodiment of this application.

Optionally, the vehicle 100 may alternatively hide the call time in the call record, for example, not display the call time, or replace the call time with another non-sensitive word. This is not limited in this embodiment of this application.

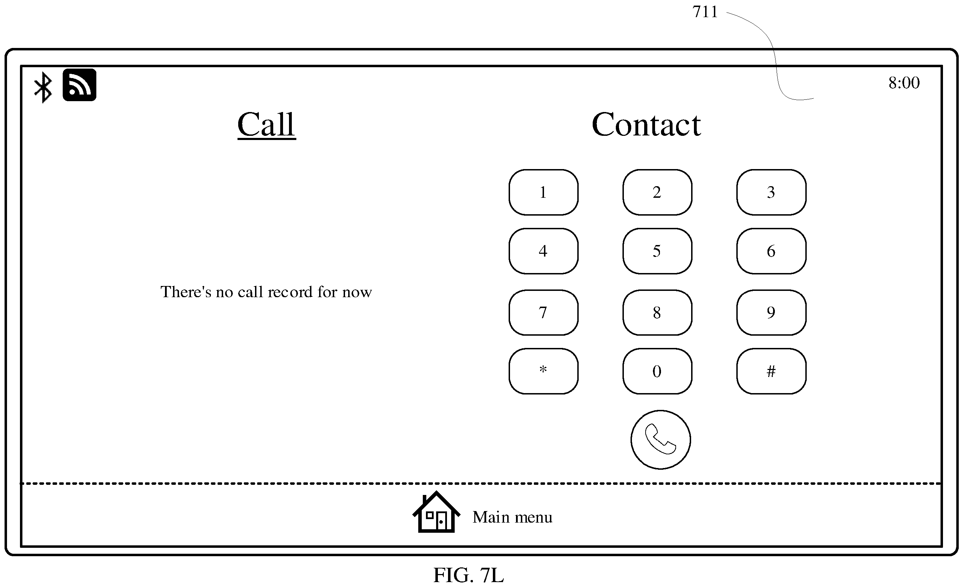

In another possible implementation, the vehicle 100 may directly hide the call record, and do not display the call record to the user for viewing. For example, the vehicle 100 may display a user interface 711 shown in FIG. 7L. The user interface 711 does not include the call record, but includes only a keypad.

Optionally, after the vehicle 100 hides the call record and does not display the call record to the user for viewing, the vehicle 100 may display the call record on the HUD and/or the dashboard. This is not limited in this embodiment of this application.

In addition to the call record, other data (for example, contact information) in the phone application may also be output in the preset manner. This is not limited in this embodiment of this application.

Optionally, in some embodiments, after the privacy mode is enabled, the sensitive information in the phone application before the mode is enabled may be hidden. After the privacy mode is enabled, newly generated sensitive information may be displayed on the central display screen.

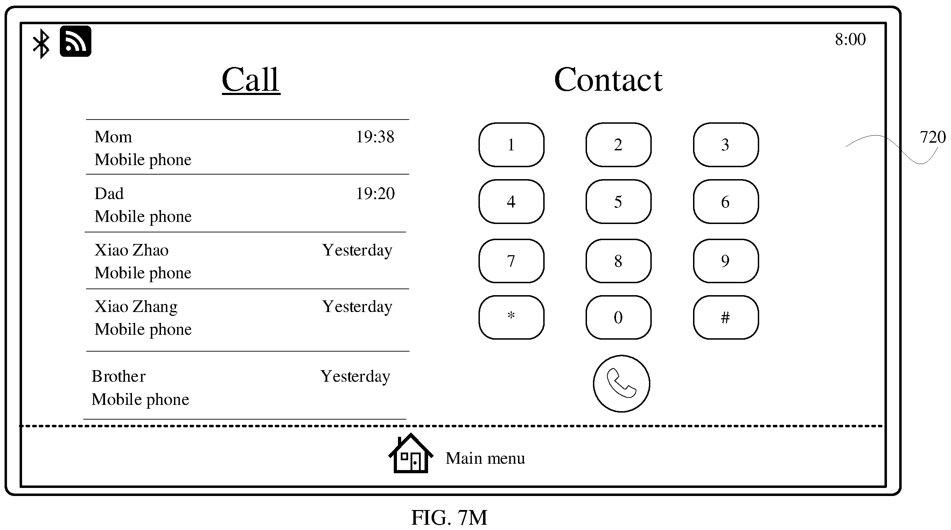

For example, FIG. 7M shows an example of another user interface 720 of the phone application. The user interface 720 differs from the user interface 709 in that the user interface 720 further includes a new call record (for example, a call record 5) after the vehicle 100 enables the privacy mode, where a name of a contact in the call record 5 is "Brother", and a call time is yesterday.

If there is a person other than the first user in the vehicle 100, that is, the vehicle 100 is not limited to carrying one person, when the vehicle 100 has the call record in the phone application, the vehicle 100 may process the call record in the phone application in the preset manner and then output a processed call record to the user.

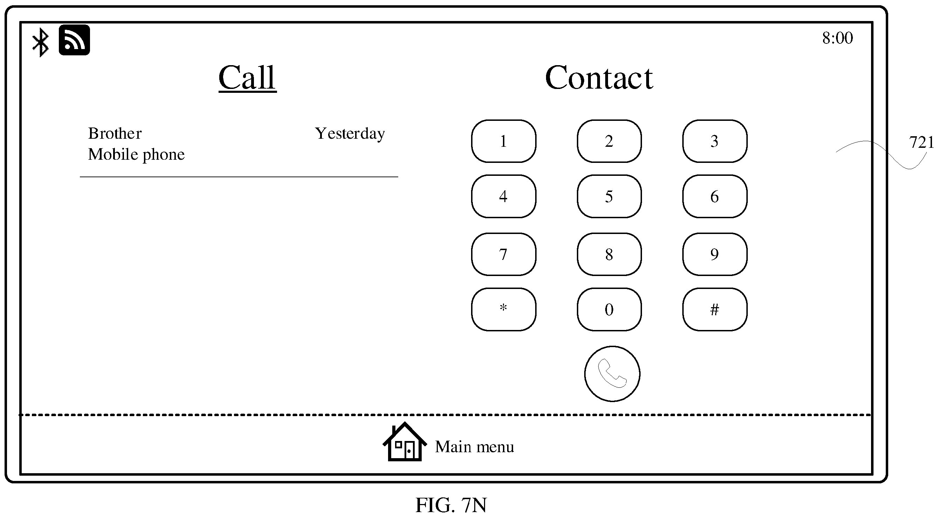

For example, the vehicle 100 may display a user interface 721 shown in FIG. 7N after processing the call record in the phone application in the preset manner. The user interface 721 includes the call record 5. In other words, the vehicle 100 may display, on the central display screen, a new call record, for example, the call record 5, generated after the privacy mode is enabled.

### Scenario 2: Map application scenario

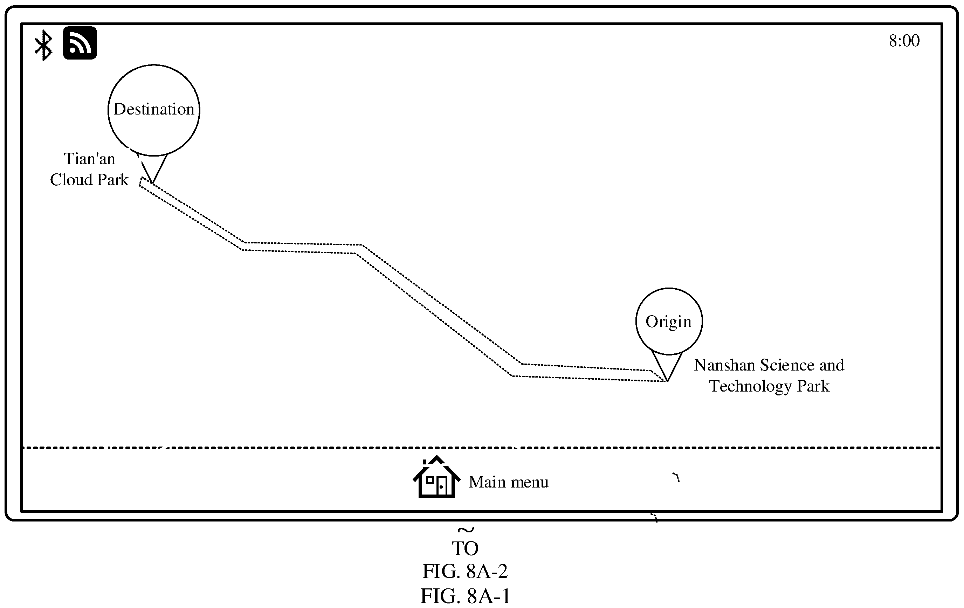

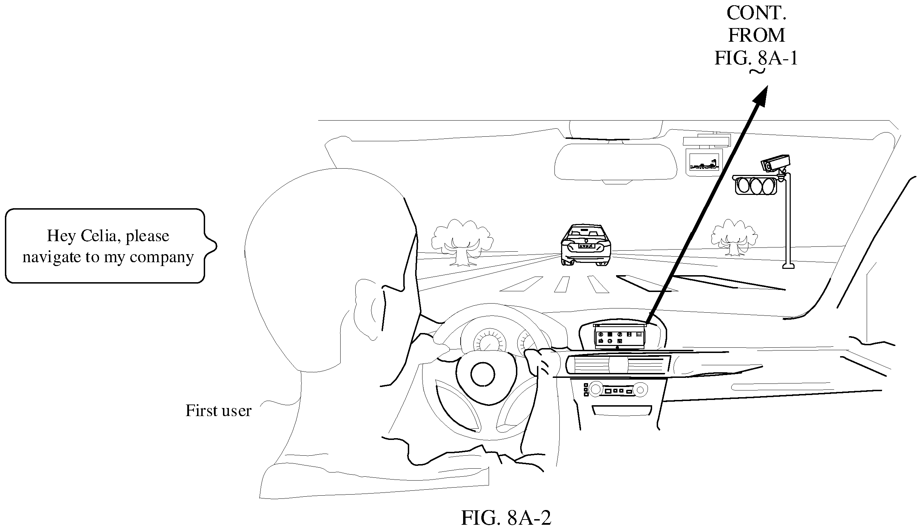

FIG. 8A-1 to FIG. 8H are diagrams of an example of how the vehicle 100 displays sensitive information in a map application.

FIG. 8A-1 and FIG. 8A-2 are a diagram of an example of a scenario in which there is only one person (for example, a first user) in the vehicle 100.

As shown in FIG. 8A-2, the first user may control, by using a voice, the vehicle 100 to display a navigation route. For example, the user outputs a voice "Hey Celia, please navigate to my company". Then, the vehicle 100 may display, on a central display screen, a navigation route from a current location to a location of the company, so that the first user can view the navigation route. As shown in FIG. 8A-1, the navigation route may include an origin name (for example, Nanshan Science and Technology Park), a destination name (for example, Tian'an Cloud Park), and route information.

In some embodiments, if there is a person other than the first user in the vehicle 100, that is, the vehicle 100 is not limited to carrying one person, when the vehicle 100 displays the navigation route, the vehicle 100 may process the navigation route in a preset manner and then output a processed navigation route to the user.

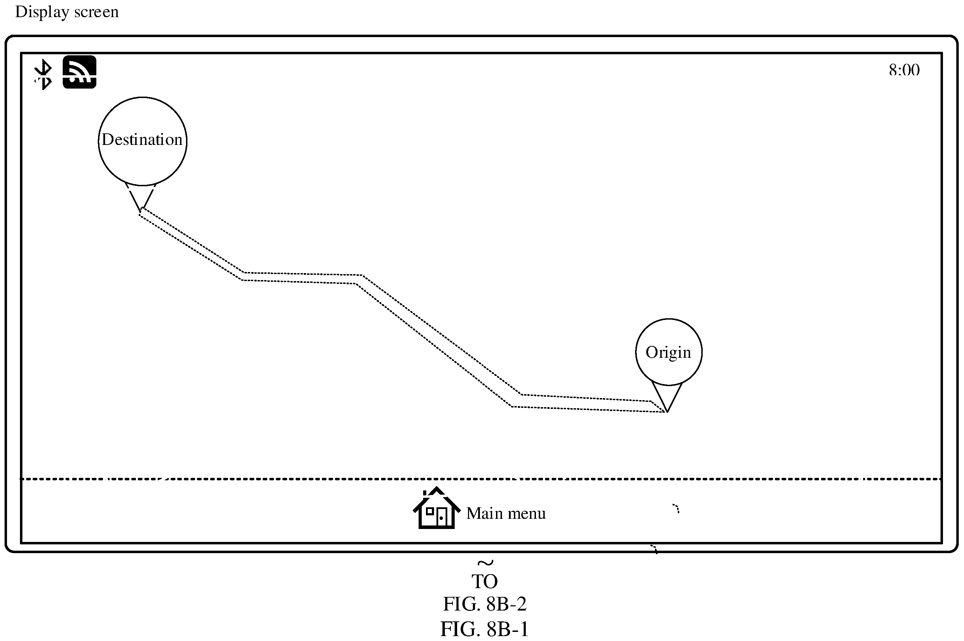

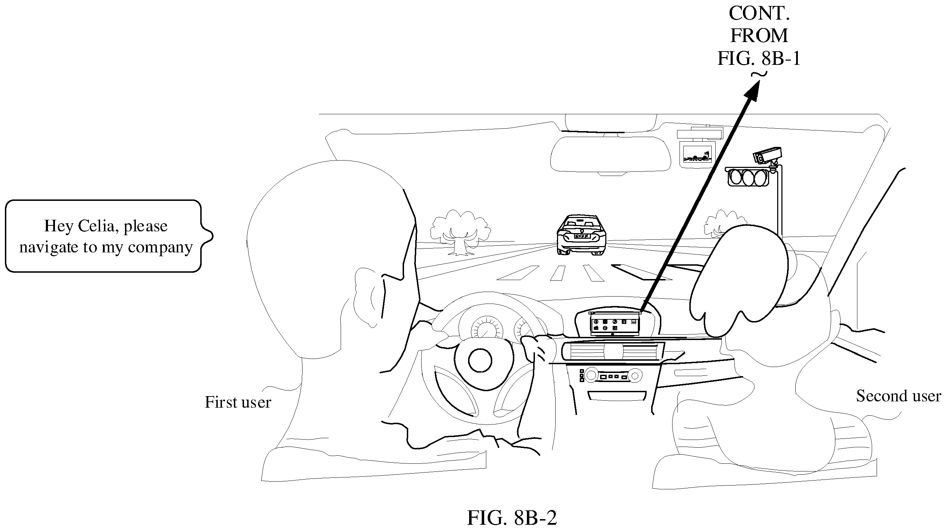

Optionally, the vehicle 100 may hide sensitive information in the navigation route, and then output a navigation route that does not include the sensitive information to the user. The vehicle 100 may display a navigation route shown in FIG. 8B-1. The navigation route shown in FIG. 8B-1 does not include the origin name (for example, Nanshan Science and Technology Park) and the destination name (for example, Tian'an Cloud Park), but includes only route information, to prevent another user in the vehicle from viewing a location of the user's company.

Optionally, the vehicle 100 may hide the sensitive information in the navigation route, replace the sensitive information with non-sensitive information, and display a processed navigation route on the central display screen. For example, the vehicle 100 replaces the origin name (for example, Nanshan Science and Technology Park) in the navigation route with a non-sensitive word "AA", and replaces the destination name (for example, Tian'an Cloud Park) in the navigation route with a non-sensitive word "BB".

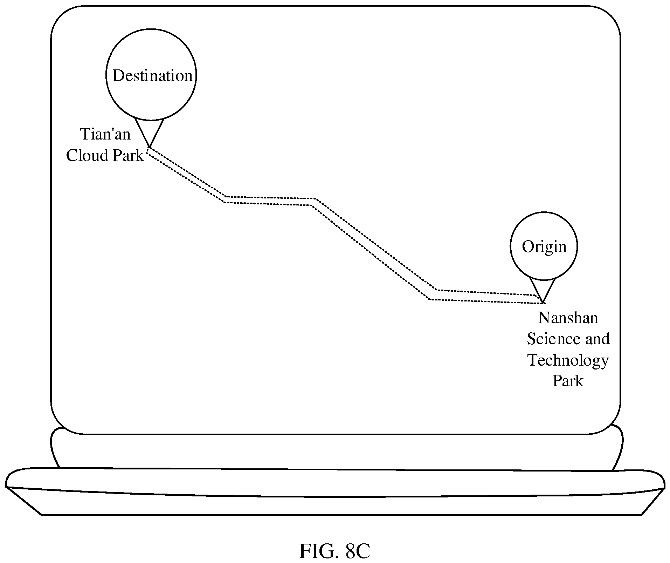

Optionally, the vehicle 100 may display the navigation route on a HUD and/or a dashboard. For example, a navigation route shown in FIG. 8C may be displayed on the HUD. The navigation route that may be displayed on the HUD includes the origin name (for example, Nanshan Science and Technology Park), the destination name (for example, Tian'an Cloud Park), and route information.

Optionally, the vehicle 100 may display the navigation route on another device (for example, a mobile phone and a Bluetooth watch).

Optionally, when the first user wears a Bluetooth headset, the vehicle 100 may also broadcast the navigation route to the first user by using the Bluetooth headset.

Optionally, in some embodiments, if a second user is still in the vehicle 100 in a process in which the first user navigates a route, the vehicle 100 may display, on the central display screen, the navigation route that does not include the origin name and the destination name shown in FIG. 8B-1, or display, on the HUD or the dashboard, the navigation route that includes the origin name and the destination name. If the second user leaves the vehicle 100 in the process in which the first user navigates a route, the vehicle 100 may display, on the central display screen, the navigation route that includes the origin name and the destination name, as shown in FIG. 8A-1. If the second user is still in the vehicle 100 after the first user ends navigation of the route, and in this case, the first user navigates a new route, for example, a route to a museum, the vehicle 100 may display, on the central display screen, a navigation route that does not include a new origin name and a new destination name. Alternatively, the vehicle 100 may display, on the HUD or the dashboard, the navigation route that includes the new origin name and the new destination name.

In some embodiments, the vehicle 100 may receive a user operation to enable the vehicle 100 to display some pieces of sensitive information.

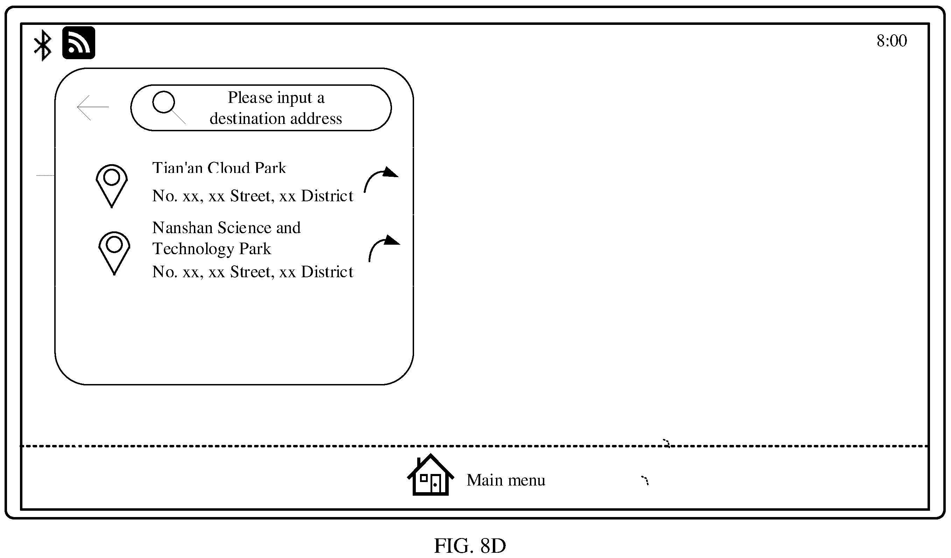

FIG. 8D to FIG. 8F are diagrams of an example in which the vehicle 100 receives the user operation to display sensitive information in the phone application.

FIG. 8D is a diagram of an example of a scenario in which there is only one person (for example, the first user) in the vehicle 100.

As shown in FIG. 8D, the user may view information such as a historical destination, a search record, a saved address, and a frequently used address on the vehicle 100. As shown in FIG. 8D, when the user needs to navigate a route, an input bar may be displayed on the central display screen, and a historical search record is displayed below the input bar. A historical search record 1 may include the destination "Tian'an Cloud Park", and a detailed address of the destination "Tian'an Cloud Park" is No. xx, xx Street, xx District. The historical search record 1 may further include the destination "Nanshan Science and Technology Park", and a detailed address of the destination "Nanshan Science and Technology Park" is No. xx, xx Street, xx District.

In some embodiments, if there is a person other than the first user in the vehicle 100, that is, the vehicle 100 is not limited to carrying one person, before the vehicle 100 receives the user operation and displays the historical search record, the vehicle 100 may process the historical search record in the preset manner and then output a processed historical search record to the user.

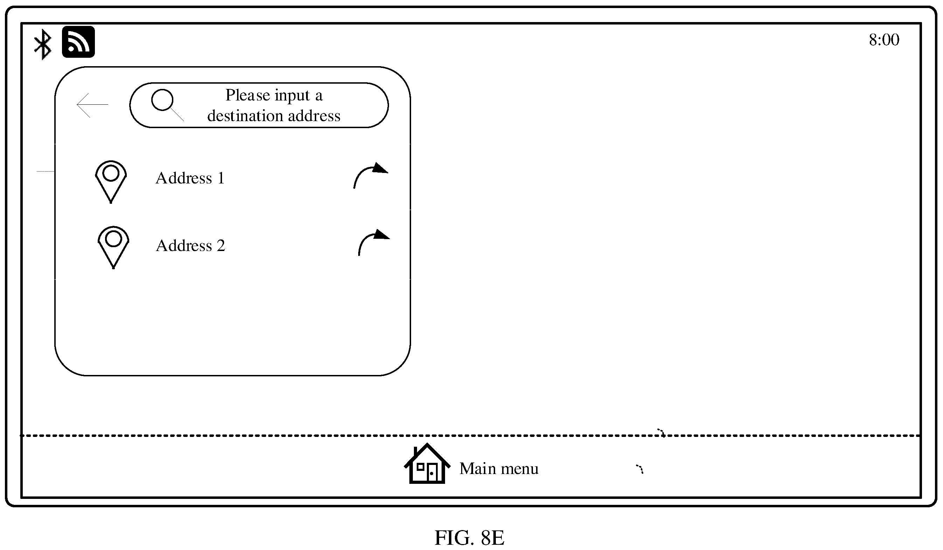

In a possible implementation, the vehicle 100 may replace sensitive information in the historical search record with non-sensitive information, and then output a processed historical search record to the user. As shown in FIG. 8E, the vehicle 100 replaces the historical search record 1 with non-sensitive information "address 1", and displays the address 1. The vehicle 100 replaces a historical search record 2 with non-sensitive information "address 2", and displays the address 2.

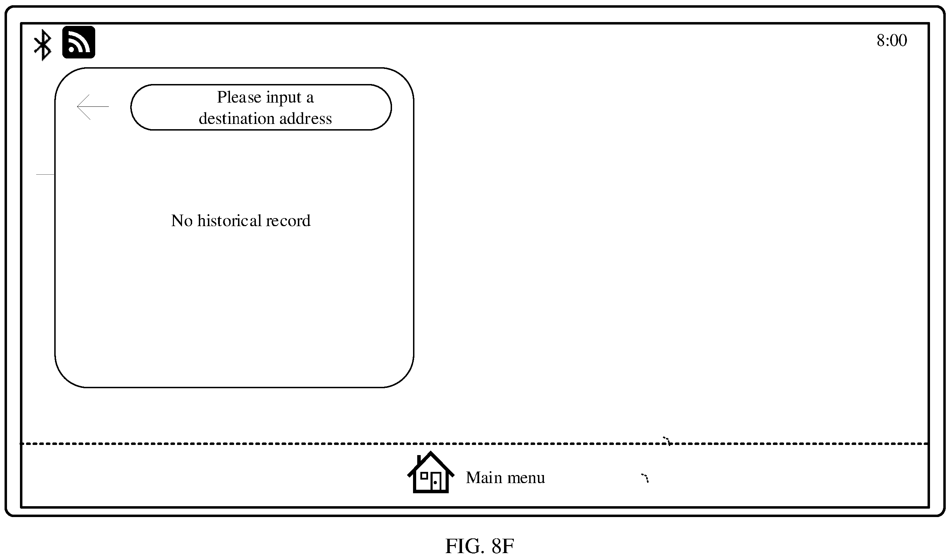

In another possible implementation, the vehicle 100 may not display the historical search record. As shown in FIG. 8F, the vehicle 100 displays only the input bar.

Optionally, after the vehicle 100 does not display the historical search record to the user for viewing, the vehicle 100 may display the historical search record on the HUD and/or the dashboard. This is not limited in this embodiment of this application.

In addition to the historical search record, other data (for example, a saved address or a frequently used address) in the map application may be processed in the preset manner for output. This is not limited in this embodiment of this application.

In this way, the sensitive information in the map application can be prevented from being viewed by another user in the vehicle.

Optionally, in some embodiments, after the privacy mode is enabled, the sensitive information in the map application before the mode is enabled may be hidden. After the privacy mode is enabled, newly generated sensitive information may be displayed on the central display screen.

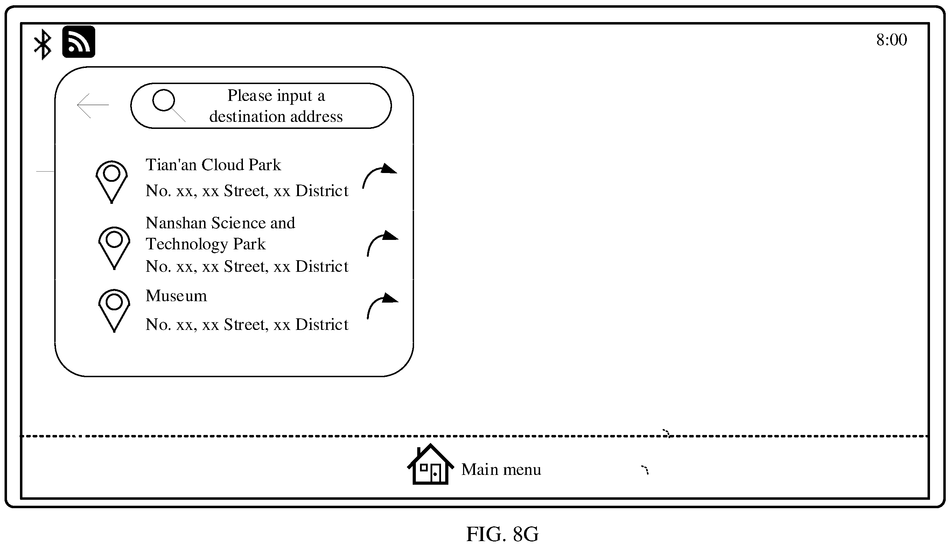

For example, FIG. 8G shows an example of another user interface in the map application. The user interface shown in FIG. 8G differs from the user interface shown in FIG. 8D in that the user interface shown in FIG. 8G further includes a new historical search record (for example, a historical search record 3) after the vehicle 100 enables the privacy mode. The historical search record 3 may include a destination "museum", and a detailed address of the destination "museum" is No. xx, xx Street, xx District.

If there is a person other than the first user in the vehicle 100, that is, the vehicle 100 is not limited to carrying one person, when the vehicle 100 displays the historical search record in the map application, the vehicle 100 may process the historical search record in the map application in the preset manner and then output a processed historical search record to the user.

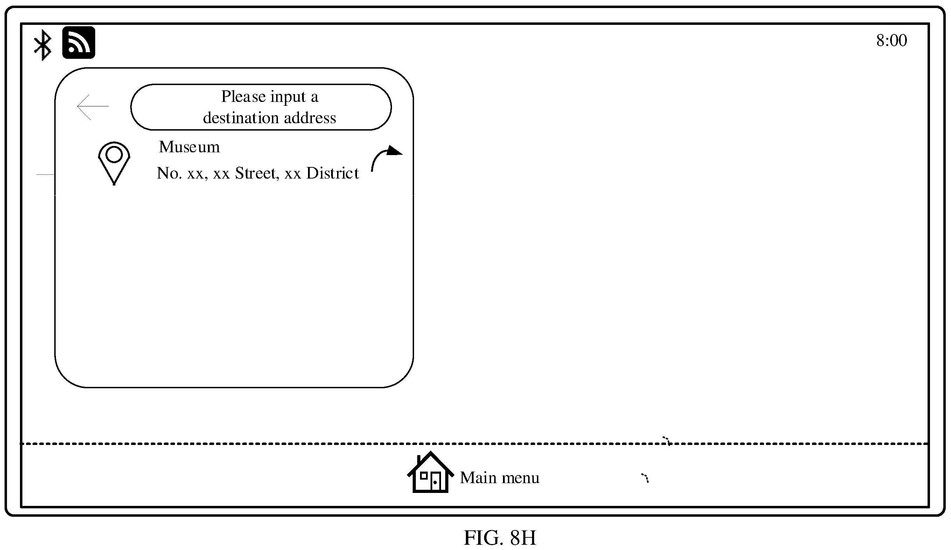

For example, the vehicle 100 may display a user interface shown in FIG. 8H after processing the historical search record in the map application in the preset manner. The user interface shown in FIG. 8H includes the historical search record 3. In other words, the vehicle 100 may display, on the central display screen, a new historical search record, for example, the historical search record 3, generated after the privacy mode is enabled.

### Scenario 3: Gallery application scenario

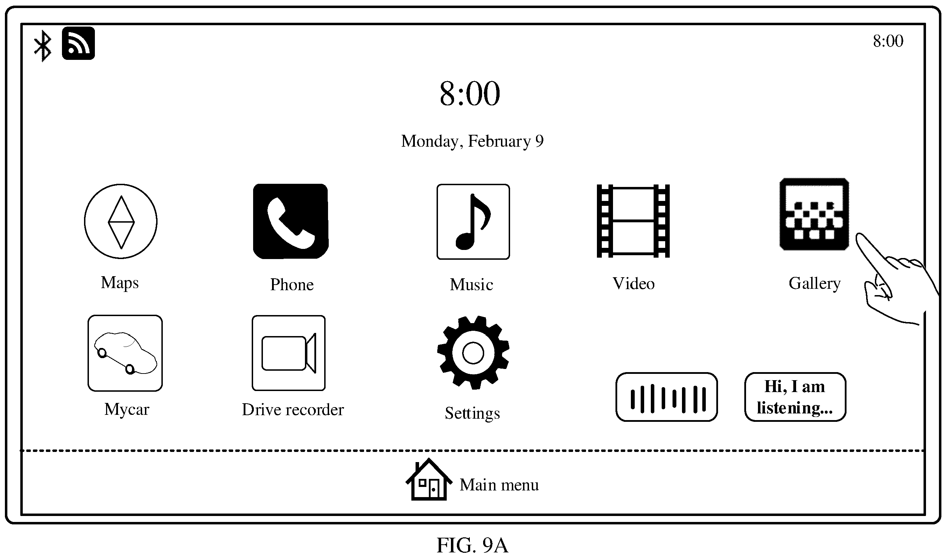

FIG. 9A to FIG. 9E are diagrams of an example of how the vehicle 100 displays sensitive information in a gallery application.

FIG. 9A is a diagram of an example of a scenario in which there is only one person (for example, a first user) in the vehicle 100.

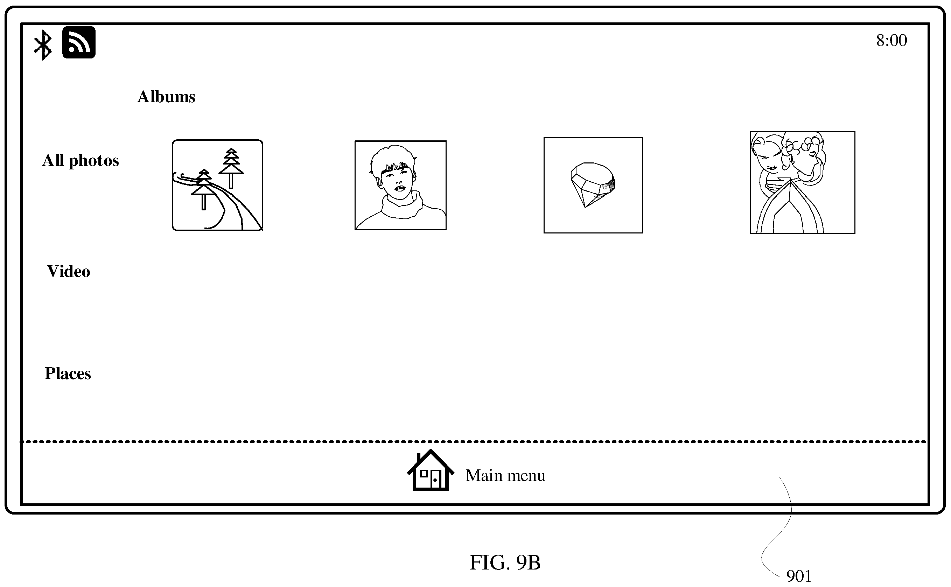

As shown in FIG. 9A, the vehicle 100 may receive an input operation (for example, a tap) performed by a user on an icon of the gallery application. In response to the input operation performed by the user, the vehicle 100 displays a user interface 901 of the gallery application shown in FIG. 9B. The user interface 901 includes a plurality of pictures.

In some embodiments, if there is a person other than the first user in the vehicle 100, that is, the vehicle 100 is not limited to carrying one person, when the vehicle 100 displays a picture or a video in the gallery application, the vehicle 100 may process the picture or the video in the gallery application in a preset manner and then output a processed picture or a processed video to the user.

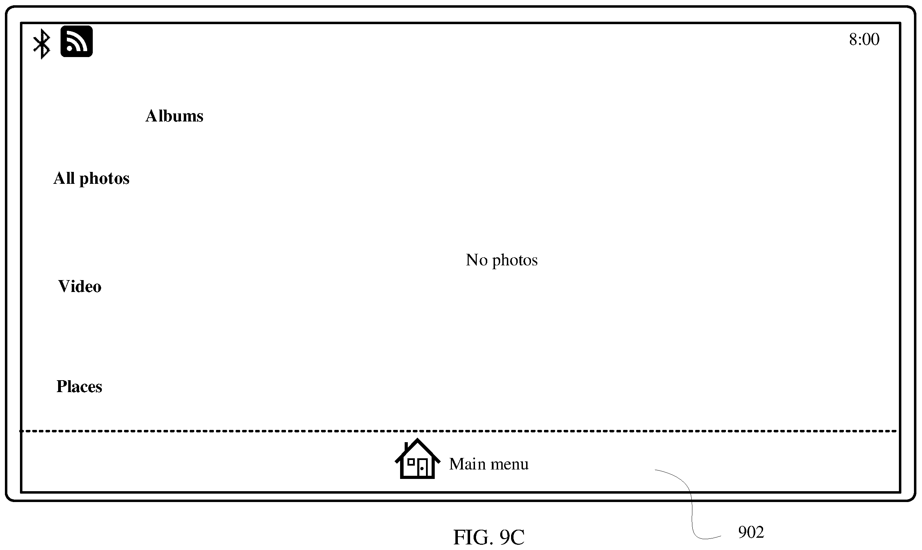

In a possible implementation, the vehicle 100 may hide the picture or the video in the gallery application, that is, not display the picture or the video, and then display an interface in the gallery application to the user for viewing. For example, as shown in FIG. 9C, after the vehicle 100 hides the picture in the gallery application, that is, the picture in the gallery application is not displayed, the vehicle 100 displays a user interface 902. The user interface 902 does not include the picture.

Optionally, if there is a person other than the first user in the vehicle 100, that is, the vehicle 100 is not limited to carrying one person, and the user stores a new picture in the gallery application on the vehicle 100, the vehicle 100 may display the newly stored picture.

Optionally, in some embodiments, if a second user is still in the vehicle 100 in a process of viewing Albums on the vehicle 100, the vehicle 100 may not display a picture or a video in Albums on the central display screen. Alternatively, the vehicle 100 displays the picture or the video in Albums on a HUD or on a dashboard. If the second user leaves the vehicle 100 in the process of viewing Albums on the vehicle 100, the vehicle 100 may display the picture or the video in Albums on the central display screen.

Optionally, in some embodiments, after the privacy mode is enabled, photos or videos in Albums existing before the mode is enabled may be hidden. After the privacy mode is enabled, a picture or a video that is newly stored into Albums of the vehicle 100 may be displayed on the central display screen.

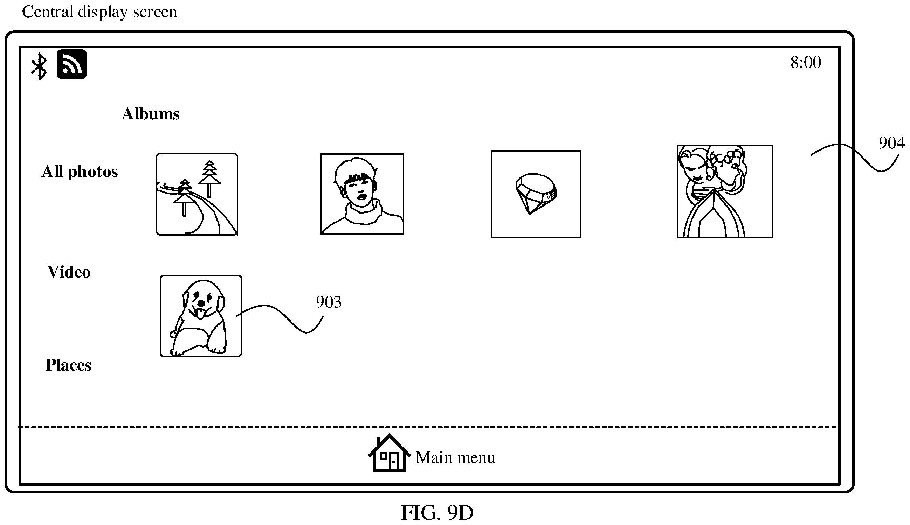

For example, FIG. 9D shows an example of another user interface 904 of Albums. The user interface 904 differs from the user interface 901 in that the user interface 904 further includes a newly stored picture 903 after the vehicle 100 enables the privacy mode.

If there is a person other than the first user in the vehicle 100, that is, the vehicle 100 is not limited to carrying one person, when the vehicle 100 displays a picture or a video in the gallery application, the vehicle 100 may process the picture or the video in the gallery application in the preset manner and then output a processed picture or a processed video to the user.

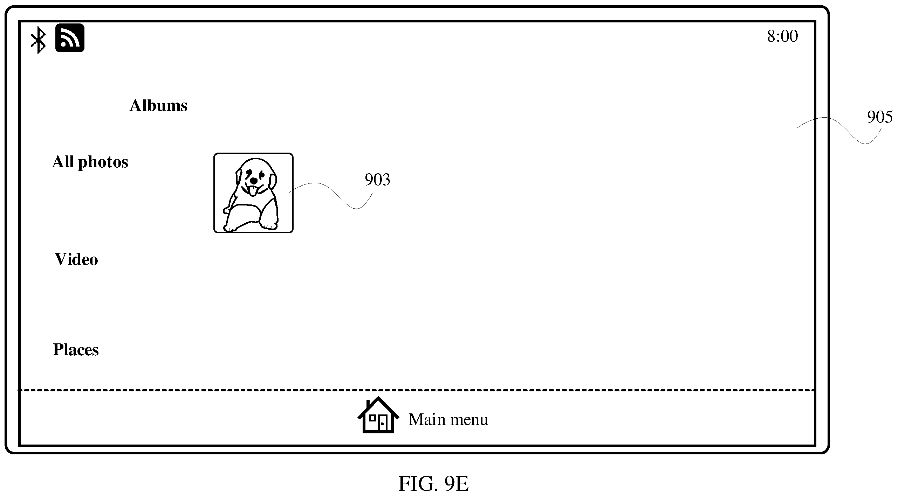

For example, as shown in FIG. 9E, the vehicle 100 may display a user interface 905 shown in FIG. 9E after processing the picture or the video in the gallery application in the preset manner. The user interface 905 includes the picture 903. In other words, the vehicle 100 may display, on the central display screen, a new picture, for example, the picture 903, stored after the privacy mode is enabled.

### Scenario 4: Service card recommendation scenario

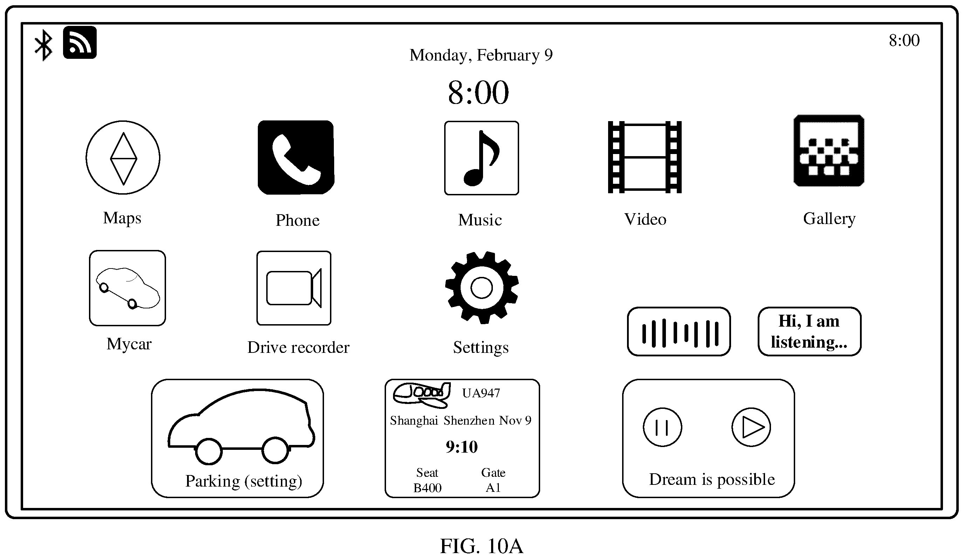

FIG. 10A to FIG. 10D are diagrams of an example of how the vehicle 100 displays sensitive information in a gallery application.

FIG. 10A is a diagram of an example of a scenario in which there is only one person (for example, a first user) in the vehicle 100.

As shown in FIG. 10A, when the vehicle 100 detects that there is only one person in the vehicle 100, the vehicle 100 may recommend one or more service cards to the user, for example, a parking service card, a travel service card, and a music service card. Information in the travel service card includes but is not limited to flight information (for example, UA947), a departure place (for example, Shanghai), a destination (for example, Shenzhen), a travel date (for example, November 9), a time (for example, 9:10 a.m.), a seat number (for example, B400) of a flight, and a boarding gate (for example, A1).

In some embodiments, if there is a person other than the first user in the vehicle 100, that is, the vehicle 100 is not limited to carrying one person, the vehicle 100 may process, according to a preset rule, sensitive information included in the service card, and then display, to the user, a service card processed according to the preset rule.

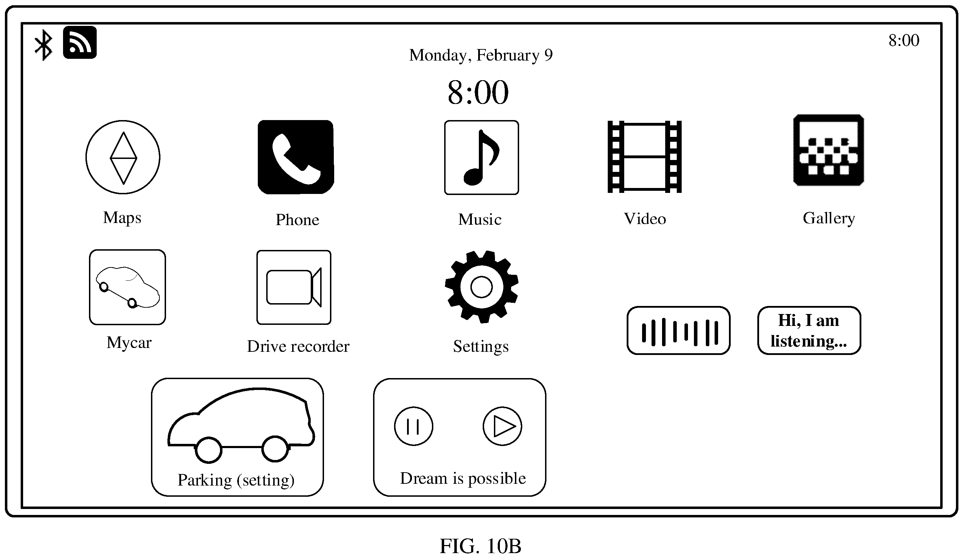

In a possible implementation, as shown in FIG. 10B, the vehicle 100 may not display, on a central display screen, a card that includes the sensitive information, to prevent the sensitive information from being seen by another occupant in the vehicle 100.

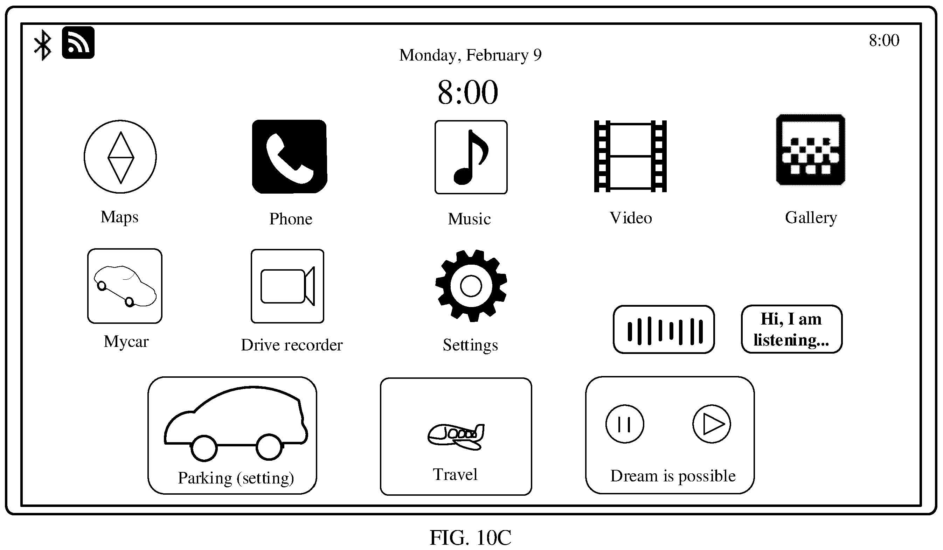

In another possible implementation, after removing the sensitive information from the card that includes the sensitive information, the vehicle 100 may display, on the central display screen, a service card that does not include the sensitive information, that is, the service card that includes the sensitive information is display in a simplified way. As shown in FIG. 10C, the vehicle 100 displays only a flight icon in the travel service card, and does not display specific flight information. Optionally, in addition to displaying the flight icon, the vehicle 100 may further display more information in the travel service card, for example, one or more of the travel time, the departure place, or the destination.

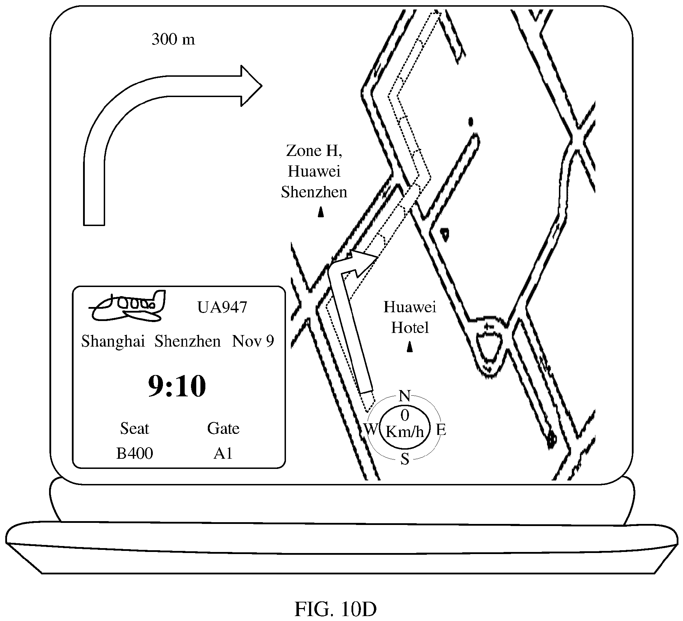

Optionally, the vehicle 100 may display the card that includes the sensitive information in another display area in the vehicle 100, for example, a HUD or a dashboard in the vehicle 100. As shown in FIG. 10D, the vehicle 100 displays the travel service card on the HUD.

Optionally, the vehicle 100 may display, on another device that establishes a connection relationship with the vehicle 100, the card that includes the sensitive information, for example, display the card on a Bluetooth watch or a mobile phone.

### Scenario 5: Screen projection application scenario

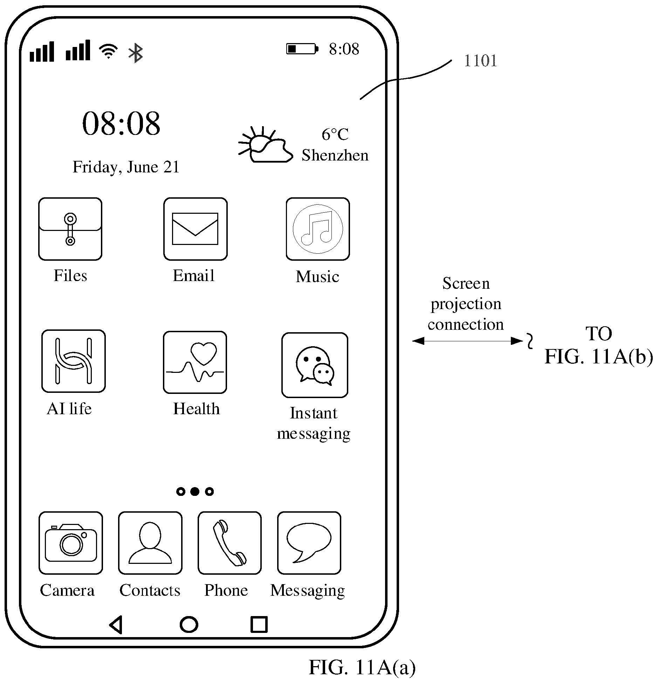

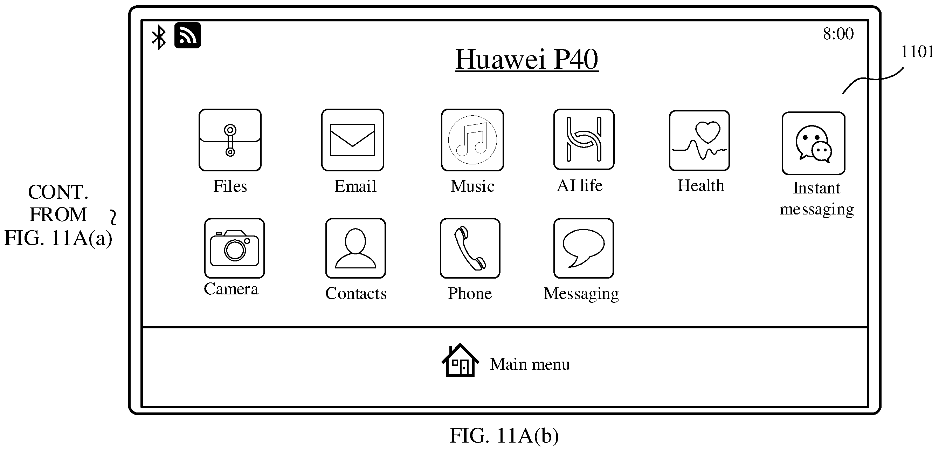

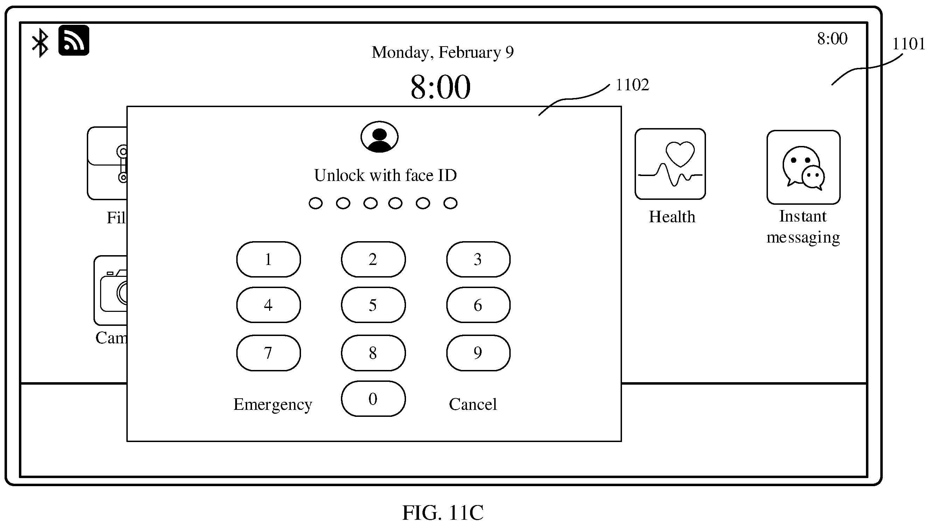

FIG. 11A(a) to FIG. 11C are diagrams of an example in which the vehicle 100 and a mobile phone establish a screen projection connection.

The mobile phone may establish a wireless communication technology connection to the vehicle 100 to implement screen projection. The wireless communication technology herein includes but is not limited to: a wireless local area network (wireless local area network, WLAN) technology, Bluetooth (bluetooth), infrared ray, near field communication (near field communication, NFC), ZigBee, or another wireless communication technology or the like emerging in subsequent development. The mobile phone may establish the wireless communication technology connection to the vehicle 100 through wireless fidelity direct (wireless fidelity direct, Wi-Fi direct) (which is also referred to as wireless fidelity peer-to-peer (wireless fidelity peer-to-peer, Wi-Fi P2P)). Alternatively, the mobile phone may establish the communication connection to the vehicle 100 by logging in to a same account (for example, a Huawei account). Alternatively, the mobile phone may establish a wired communication technology connection to the vehicle 100 to implement screen projection. For example, the mobile phone may establish the wired communication technology connection to the vehicle 100 through a USB interface. A connection manner between the mobile phone and the vehicle 100 is not limited in this embodiment of this application.

After the mobile phone establishes the communication connection to the vehicle 100, the mobile phone may display, on the vehicle 100 through screen projection, content displayed on the mobile phone. For example, as shown in FIG. 11A(a), the mobile phone displays a home screen 1101. After the mobile phone establishes the communication connection to the vehicle 100, the mobile phone may display the home screen 1101 on the vehicle 100 through screen projection, as shown in FIG. 11A(b). In FIG. 11A(b), in addition to displaying the home screen 1101, the vehicle 100 further displays an identifier of a screen projection device. For example, a device identifier of the mobile phone is Huawei P40.

After the mobile phone displays the home screen 1101 on the vehicle 100 through screen projection, if a user needs to view content displayed on the vehicle 100 through screen projection, and there is another occupant in the vehicle in addition to a first user, the vehicle 100 needs to verify a user identity, and determines that the user who is to view the content displayed on the vehicle 100 through screen projection and the user of the mobile phone are the same user, to protect concealment of the projected content.

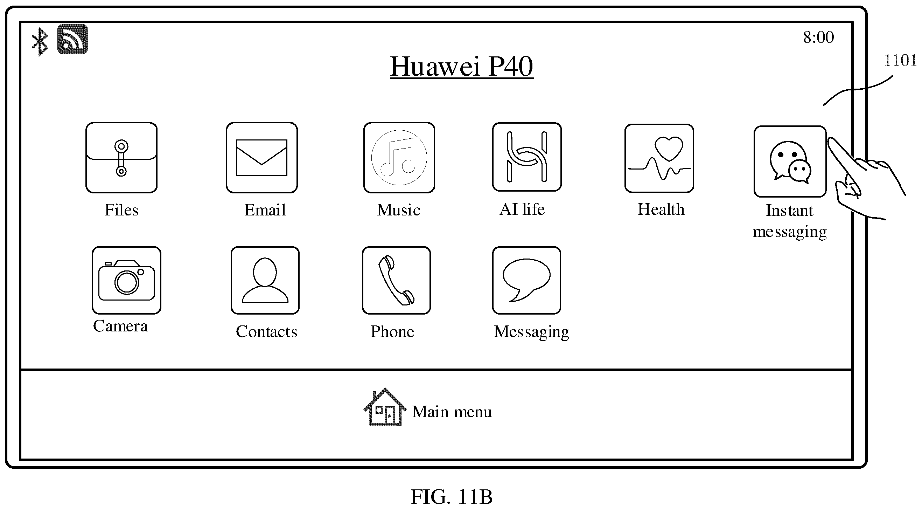

For example, as shown in FIG. 11B, when the user needs to view information in a screen projection application (for example, an instant messaging application), the vehicle 100 receives an input operation (for example, a tap) performed by the user on an icon of the instant messaging application. In response to the input operation performed by the user, the vehicle 100 displays verification information 1102 shown in FIG. 11C. The verification information 1102 includes facial verification, password verification, or the like. The verification information may alternatively be in another manner. This is not limited in this embodiment of this application.

After verification of the user identity by the vehicle 100 succeeds, the vehicle 100 may display content in the instant messaging application.

Optionally, in addition to using the vehicle 100 to verify the user identity, another device may alternatively be used to verify the user identity. For example, the user identity is verified by using the mobile phone to prompt the user to enter a verification password, or by facial recognition, fingerprint recognition, or the like. After verification of the user identity on the mobile phone succeeds, the mobile phone sends verification success information to the vehicle 100. After the vehicle receives the verification success information, the vehicle 100 may display information in the screen projection application (for example, the instant messaging application). In this way, when the user is not in the vehicle, the identity of the user may be remotely verified by using another electronic device.

Optionally, when the vehicle 100 needs to verify the identity of the user, the vehicle 100 may display an option of selecting a verification manner. The option may be that the vehicle 100 verifies the identity of the user or another electronic device verifies the identity of the user. When the user chooses to verify the identity of the user by using another electronic device, the mobile phone may display verification information similar to that shown in FIG. 11C, to prompt the user to verify the identity of the user.

Optionally, in some embodiments, if the vehicle 100 detects that there is only one person in the vehicle 100, the vehicle 100 may not need to verify an identity of the user. For example, after the vehicle 100 receives an input operation (for example, a tap) performed by the user on the icon of the instant messaging application, the vehicle 100 may directly display content in the instant messaging application without displaying the verification information 1102 shown in FIG. 11C.

Optionally, in some embodiments, to further protect concealment of information displayed on the vehicle 100, if the vehicle 100 detects that there is only one person (for example, the first user) in the vehicle 100, and the first user and a user of a device (for example, the mobile phone) that initiates screen projection are the same user, the vehicle 100 may not need to verify an identity of the user.

Optionally, in some embodiments, the vehicle 100 may alternatively disable a privacy mode. After the vehicle 100 disables the privacy mode, after obtaining to-be-output information, the vehicle 100 does not process the to-be-output information in a preset manner, but directly displays the to-be-output information.

The vehicle 100 may disable the privacy mode in any one of the following manners:

Manner 1: The vehicle 100 receives an operation of a user, and disables the privacy mode.

An operation of receiving a user operation and disabling the privacy mode by the vehicle 100 is similar to an operation of receiving a user operation and enabling the privacy mode by the vehicle 100. The only difference is that one operation is to enable a privacy mode function and the other operation is to disable the privacy mode function. For details, refer to the related descriptions in FIG. 4A to FIG. 4D. Details are not described in this embodiment of this application again.

Manner 2: The vehicle 100 automatically disables the privacy mode on the vehicle.

The vehicle 100 may automatically disable the privacy mode on the vehicle based on detected person information on the vehicle.

In any one of the following several cases, the vehicle 100 may automatically disable the privacy mode on the vehicle.

Case 1: When the vehicle 100 detects that there is only one person in the vehicle, the vehicle 100 may automatically disable the privacy mode on the vehicle.

Optionally, when the vehicle 100 detects that there is only one person in the vehicle and the occupant is a driver, the vehicle 100 may automatically disable the privacy mode on the vehicle.

Case 2: When the vehicle 100 detects that there is only one person in the vehicle, the occupant is a driver, and the driver is also an owner of a logged-in account on the vehicle or an owner of a device (for example, a mobile phone) that establishes a connection relationship with in-vehicle infotainment, the vehicle 100 automatically disables the privacy mode on the vehicle.

Case 3: When the vehicle 100 detects that there are a plurality of persons (two or more persons) in the vehicle, and the plurality of persons are family members of a family, the vehicle 100 automatically disables the privacy mode on the vehicle.

Optionally, when the vehicle 100 detects that there are a plurality of persons (two or more persons), which includes a driver and another occupant, in the vehicle, but the another occupant and the driver are family members of a family, the vehicle 100 automatically disables the privacy mode on the vehicle.

In a possible implementation, when the another occupant other than the driver and the driver are members of an account (for example, a same Huawei account), the vehicle 100 automatically disables the privacy mode on the vehicle.

Case 4: When the vehicle 100 detects that there are a plurality of persons (two or more persons) in the vehicle, but the vehicle 100 detects that familiarity between a driver and an occupant other than the driver is greater than a specific value, that is, when the vehicle 100 determines that the occupant other than the driver in the vehicle 100 is familiar with the driver, for example, the occupant and the driver are close friends, the vehicle 100 automatically disables the privacy mode on the vehicle.

In a possible implementation, the vehicle 100 may determine a degree of a relationship between the occupant and the driver based on a quantity of times that the occupant takes the vehicle 100. For example, if the vehicle 100 determines that a quantity of times that the occupant takes the vehicle 100 within a specific time exceeds a specific value, the vehicle 100 may determine that the occupant is in a relatively close relationship with the driver. For example, if the vehicle 100 determines that the occupant takes the vehicle 100 more than 20 times in a month, the vehicle 100 may determine that the occupant is in a relatively close relationship with the driver.

Optionally, the vehicle 100 may determine, based on one or more of image information acquired by a camera, sound data acquired by a microphone on the vehicle 100, an identifier of a device of the occupant, or a Bluetooth identifier of the device of the occupant, the quantity of times that the occupant takes the vehicle 100.

For example, when the device of the occupant is connected to Bluetooth or a wireless network of the vehicle 100, the vehicle 100 identifies the identifier of the device of the occupant. For example, when Bluetooth of the device of the occupant is enabled, the vehicle 100 identifies a Bluetooth identifier on the device of the occupant.

Case 5: When detecting that there are a plurality of persons (two or more persons) in the vehicle, the vehicle 100 may automatically disable the privacy mode on the vehicle based on an age of another occupant in the vehicle.

Specifically, when the vehicle 100 detects that there are a plurality of persons (two or more persons) in the vehicle, but the vehicle 100 detects that an age profile of occupants other than the driver is greater than a specific value or an age profile of the occupants is less than a specific value, that is, when the vehicle 100 determines that the occupant other than the driver in the vehicle 100 is an elderly person or a kid, the vehicle 100 may automatically disable the privacy mode on the vehicle.

Optionally, the vehicle 100 may determine an age of another occupant based on image information acquired by a camera or sound data acquired by a microphone on the vehicle 100. For example, if the age of the another occupant is greater than 70 or less than 10, that is, the another occupant is a kid or an elderly person, the vehicle 100 may automatically disable the privacy mode on the vehicle.

Manner 3: A user wakes up the vehicle 100 by using a voice to disable the privacy mode.

The user may perform voice interaction with the vehicle 100 by using a voice assistant on the vehicle 100, so that the vehicle 100 disables the privacy mode.

For example, the user first needs to wake up the voice assistant on the vehicle 100. For example, the user outputs a voice "Hey Celia". The voice assistant on the vehicle 100 identifies that the voice is from the user, and that the user is waking up the voice assistant. In this case, the voice assistant on the vehicle 100 may output a voice "I am here". After waking up the voice assistant on the vehicle 100, the user may control, by using voice, the voice assistant to perform another operation. For example, the user outputs a voice "Disable the privacy mode on the vehicle". The voice assistant on the vehicle 100 recognizes the voice of the user, and performs a corresponding operation. For example, the voice assistant on the vehicle 100 sends an instruction to a control center on the vehicle 100, where the instruction is used by the control center to disable the privacy mode. After the privacy mode is disabled, the voice assistant on the vehicle 100 may output a voice, to notify the user that the privacy mode is disabled. For example, the voice may be "the privacy mode on the vehicle 100 is disabled".

Manner 4: The user controls, by using a mobile phone, the vehicle 100 to disable the privacy mode.

Before the user controls, by using the mobile phone, the vehicle 100 to disable the privacy mode, the mobile phone and the vehicle 100 need to log in to a same account (for example, a Huawei account), or the mobile phone needs to establish a Bluetooth connection to the vehicle 100, or the mobile phone and the vehicle 100 need to be connected to a same local area network. The mobile phone may further establish a communication connection to the vehicle 100 in another manner. This is not limited in this embodiment of this application.

The user may perform an operation on the mobile phone to control the vehicle 100 to disable the privacy mode. For example, the mobile phone receives an operation of the user, and in response to the operation of the user, the mobile phone sends a disable instruction to the vehicle 100. After the vehicle 100 receives the disable instruction sent by the mobile phone, the vehicle 100 disables the privacy mode on the vehicle.

In addition to the foregoing four manners of disabling the privacy mode, another manner may be used to disable the privacy mode on the vehicle 100. This is not limited in this embodiment of this application.

Manner 5: User information, such as face image information and voiceprint information, is recorded on the vehicle 100 in advance, to identify identities of different users. A user may set permission for different users in the vehicle 100. For example, after the vehicle 100 identifies a user identity set by the user, when the vehicle 100 obtains to-be-output information, the vehicle 100 does not need to process the to-be-output information in a preset manner.

For example, it is assumed that the user stores identity information of a user A, for example, face image information and voiceprint information of the user A, on the vehicle 100 in advance, and configures permission for the user A as not enabling the privacy mode. When the user A takes the vehicle 100, the vehicle 100 identifies an identity of the user A, and determines that the permission of the user A is not enabling the privacy mode. In this case, when there is only a driver and the user A in the vehicle 100, the vehicle 100 automatically disables the privacy mode. When the vehicle 100 obtains the to-be-output information, the vehicle 100 directly displays the to-be-output information to the user, and does not need to process the information in the preset manner.

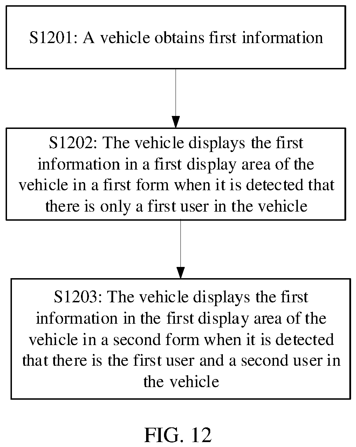

FIG. 12 is a flowchart of a privacy protection method according to an embodiment of this application.

S1201: A vehicle obtains first information.

S1202: The vehicle displays the first information in a first display area of the vehicle in a first form when it is detected that there is only a first user in the vehicle.

In a possible implementation, the first information displayed in the first form includes sensitive information related to the first user.

In a possible implementation, the sensitive information related to the first user includes one or more of the following: a person name, a phone number, an address, a time, audio, a photo, a video, a call record, a chat record, a search record, schedule information, a document, a message, health data, and exercise data.

S1203: The vehicle displays the first information in the first display area of the vehicle in a second form when it is detected that there is the first user and a second user in the vehicle.

The first form and the second form refer to display content of the first information, and do not indicate a display style (or a display layout) of the first information.

In a possible implementation, the first information displayed in the second form does not include the sensitive information related to the first user. In this way, when there are a plurality of persons in the vehicle, the vehicle anonymizes the first information and then displays anonymized information, thereby improving concealment of information display in the vehicle.

In a possible implementation, that the vehicle displays the first information in the first display area of the vehicle in the second form specifically includes: the vehicle skips displaying the first information in the first display area; or
after replacing the sensitive information related to the first user in the first information with non-sensitive information, the vehicle displays, in the first display area of the vehicle, first information that includes the non-sensitive information.

When the vehicle determines that there are a plurality of persons, the vehicle may not display the first information in the first display area, or may anonymize the first information and then display anonymized first information in the first display area, to prevent the sensitive information in the first information from being seen by another occupant.

In a possible implementation, when it is detected that there is the first user and the second user in the vehicle, the method further includes: the vehicle displays the first information in a second display area of the vehicle in the first form, where the second display area is different from the first display area. In this way, when displaying the first information in the first display area in the first form, the vehicle may further display the first information with complete content in the second display area, so that a driver can see the complete first information.

In a possible implementation, when it is detected that there is the first user and the second user in the vehicle, the method further includes: the vehicle outputs the first information in a third form through a first electronic device, where the first information displayed in the third form includes the sensitive information related to the first user. In this way, when displaying the first information in the first display area in the first form, the vehicle may further display the first information with complete content through the first electronic device, so that the driver can see the complete first information. For example, when the first information is an incoming call notification, refer to the related descriptions in FIG. 7H.

The third form refers to display content of the first information. The third form may be the same as the first form, or the third form may be different from the first form.

Optionally, an interface layout of the first information displayed on the first electronic device may be different from an interface layout of the first information displayed in the first display area, and the third form and the first form are used for differentiation herein.

The first electronic device may include but is not limited to a device such as a mobile phone, a Bluetooth headset, or a smartwatch.

In a possible implementation, the second display area of the vehicle includes one or more of the following: a display area of a head-up display device, a display area of a dashboard, or a display area of a sun visor; and the first display area of the vehicle is a display area of a central display screen or a display area of a passenger display screen.

In a possible implementation, after the vehicle displays the first information in the first display area of the vehicle in the second form, the method further includes: the vehicle obtains second information, and the vehicle displays the second information in the first area of the vehicle in a fourth form when it is detected that there is the first user and the second user in the vehicle. The second information displayed in the fourth form does not include the sensitive information related to the first user. In this way, for the same first user and second user, messages are different, and display forms of the second information and the first message are also different. However, both types of information are anonymized for display.

In a possible implementation, after the vehicle displays the first information in the first display area of the vehicle in a second form, the method further includes: the vehicle displays the first information in the first display area of the vehicle in the first form when it is detected that there is only the first user in the vehicle. In this way, after a quantity of persons in the vehicle changes, a form of the first information displayed on the vehicle changes dynamically.

In a possible implementation, that the vehicle displays the first information in the first display area of the vehicle in the first form when there is only the first user in the vehicle specifically includes: the vehicle displays the first information in the first display area of the vehicle in the first form when there is only the first user in the vehicle and the first user is the driver. In this way, even if there is only one user in the vehicle, the vehicle can display the first information with complete content in the first display area only when the user is the driver. This avoids a case in which the user is a non-driver, that is, another occupant, and sees the sensitive information in the first information.

In a possible implementation, that the vehicle displays the first information in the first display area of the vehicle in the first form when there is only the first user in the vehicle specifically includes: the vehicle displays the first information in the first display area of the vehicle in the first form when there is only the first user in the vehicle and a user of a logged-in account on the vehicle is the first user. In this way, even if there is only one user in the vehicle, the vehicle can display the first information with complete content in the first display area only when the user is the driver and an identity of the driver is the same as an identity of the user of the logged-in account on the vehicle. This avoids a case in which privacy of the user of the logged-in account on the vehicle is leaked when the driver temporarily drives the vehicle.

In a possible implementation, the first information is navigation information, and the navigation information includes a navigation route, an origin address, and a destination address. That the vehicle displays the first information in the first display area of the vehicle in the first form when it is detected that there is only the first user in the vehicle specifically includes: the vehicle displays the navigation route, the origin address, and the destination address in the navigation information when it is detected that there is only the first user in the vehicle. That the vehicle displays the first information in the first display area of the vehicle in the second form when it is detected that there is the first user and the second user in the vehicle specifically includes: the vehicle displays only the navigation route in the navigation information when it is detected that there is the first user and the second user in the vehicle. In this way, for a navigation scenario, when the vehicle detects that there are a plurality of users in the vehicle, the vehicle displays only the navigation route information, and does not display detailed origin information and destination information. For details, refer to the related descriptions in FIG. 8A-1 to FIG. 8H. Details are not described in this embodiment of this application again.

In a possible implementation, the first information is incoming call notification information, and the incoming call notification information includes a caller name, an answer control, and a hang up control. That the vehicle displays the first information in the first display area of the vehicle in the first form when it is detected that there is only the first user in the vehicle specifically includes: the vehicle displays the caller name, the answer control, and the hang up control in the incoming call notification information when it is detected that there is only the first user in the vehicle. That the vehicle displays the first information in the first display area of the vehicle in the second form when it is detected that there is the first user and the second user in the vehicle specifically includes: the vehicle displays only the answer control and the hang up control in the incoming call notification information when it is detected that there is the first user and the second user in the vehicle. In this way, for a call scenario, when the vehicle detects that there are a plurality of users in the vehicle, the vehicle does not display a name of a caller. For details, refer to the related descriptions in FIG. 7A-1 to FIG. 7N. Details are not described in this embodiment of this application again.

In a possible implementation, the first information is a travel recommendation card, and the travel recommendation card includes a flight number, a travel time, a destination, and a departure place. That the vehicle displays the first information in the first display area of the vehicle in the first form when it is detected that there is only the first user in the vehicle specifically includes: the vehicle displays the flight number, the travel time, the destination, and the departure place in the travel recommendation card when it is detected that there is only the first user in the vehicle. That the vehicle displays the first information in the first display area of the vehicle in the second form when it is detected that there is the first user and the second user in the vehicle specifically includes: the vehicle displays only the travel time in the travel recommendation card when it is detected that there is the first user and the second user in the vehicle. In this way, for a travel service recommendation scenario, when the vehicle detects that there are a plurality of users in the vehicle, the vehicle does not display a travel mode (for example, a flight number or a high-speed railway number), a departure place, and a destination in the travel information. For details, refer to the related descriptions in FIG. 10A to FIG. 10D. Details are not described in this embodiment of this application again.

In a possible implementation, before the vehicle displays the first information in the first display area of the vehicle in the first form, the method further includes: the vehicle receives a first operation; and in response to the first operation, the vehicle enables a privacy mode.

The first operation may be an operation performed by the user on the first display area, and the first operation may be a voice operation; or the first operation may be an operation performed on another electronic device. This is not limited in this embodiment of this application.

For example, the first operation may be an input operation (for example, a tap) on an option of enabling/disabling a privacy mode in FIG. 4C.

In a possible implementation, before the vehicle receives the first operation, the method further includes: the vehicle outputs first prompt information, where the first prompt information is used to prompt the user to enable the privacy mode.

The first prompt information may be prompt information 440 shown in FIG. 4B.

In a possible implementation, after the vehicle outputs the first prompt information, the method further includes: the vehicle outputs first guide information, where the first guide information is used to notify the user of a first shortcut button for enabling/disabling the privacy mode, and the first operation is a trigger operation for the first shortcut button.

The first guide information may be a usage description 520 shown in FIG. 5B.

The first shortcut button may be a privacy mode option shown in FIG. 5B.

In a possible implementation, the vehicle is capable of determining, based on one or more of facial recognition, voiceprint recognition, a device identifier of an electronic device, a Bluetooth identifier of the electronic device, and pressure sensor data, whether there is one occupant or a plurality of occupants in the vehicle.

This application further provides another privacy protection method. The method includes: A vehicle obtains first information; and the vehicle displays the first information in a first display area of the vehicle in a first form when it is detected that there is only a first user in the vehicle; or when it is detected that there is the first user and a third user in the vehicle, and the first user and the third user meet a second condition, the vehicle displays the first information in the first display area of the vehicle in the first form. The second condition is any one or more of the following: The third user is a family member of the first user; the third user is a close user of the first user; the second user is a user whose age is less than a first preset value; the second user is a user whose age is greater than a second preset value; or the third user has permission to view the first information.

With reference to the first aspect, in a possible implementation, when the first user and the third user do not meet the second condition, the vehicle still displays the first information in the first display area of the vehicle in a second form.

It should be noted that the plurality of possible implementations provided in the embodiment of FIG. 12 are also applicable to another privacy protection method provided in this embodiment of this application. For details, refer to the descriptions in the embodiment in FIG. 12. Details are not described herein again in this application.

The implementations of this application may be randomly combined to achieve different technical effects.

All or some of the foregoing embodiments may be implemented by software, hardware, firmware, or any combination thereof. When the embodiments are implemented by using software, all or some of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is executed, the procedures in the method embodiments may be performed. The foregoing storage medium includes: any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A privacy protection method, wherein the method comprises:
obtaining, by a vehicle, first information; and
displaying, by the vehicle, the first information in a first display area of the vehicle in a first form when it is detected that there is only a first user in the vehicle; or
displaying, by the vehicle, the first information in the first display area of the vehicle in a second form when it is detected that there is the first user and a second user in the vehicle, wherein
an information amount of the first information displayed in the second form is less than an information amount of the first information displayed in the first form.

2. The method according to claim 1, wherein the first information displayed in the first form comprises sensitive information related to the first user, and the first information displayed in the second form does not comprise the sensitive information related to the first user.

3. The method according to claim 2, wherein the sensitive information related to the first user comprises one or more of the following: a person name, a phone number, an address, a time, audio, a photo, a video, a call record, a chat record, a search record, schedule information, a document, a message, health data, and exercise data.

4. The method according to any one of claims 1 to 3, wherein the displaying, by the vehicle, the first information in the first display area of the vehicle in a second form specifically comprises:
skipping, by the vehicle, displaying the first information in the first display area; or
after replacing the sensitive information related to the first user in the first information with non-sensitive information, displaying, by the vehicle in the first display area of the vehicle, the first information that comprises the non-sensitive information.

5. The method according to any one of claims 1 to 4, wherein when it is detected that there is the first user and the second user in the vehicle, the method further comprises:
displaying, by the vehicle, the first information in a second display area of the vehicle in the first form, wherein the second display area is different from the first display area.

6. The method according to any one of claims 1 to 5, wherein when it is detected that there is the first user and the second user in the vehicle, the method further comprises:
outputting, by the vehicle, the first information in a third form through a first electronic device, wherein the first information displayed in the third form comprises the sensitive information related to the first user.

7. The method according to claim 5 or 6, wherein the second display area of the vehicle comprises one or more of the following: a display area of a head-up display device, a display area of a dashboard, or a display area of a sun visor; and
the first display area of the vehicle is a display area of a central display screen or a display area of a passenger display screen.

8. The method according to any one of claims 1 to 7, wherein after the displaying, by the vehicle, the first information in the first display area of the vehicle in a second form, the method further comprises:
obtaining, by the vehicle, second information, and displaying, by the vehicle, the second information in the first area of the vehicle in a fourth form when it is detected that there is the first user and the second user in the vehicle, wherein the second information displayed in the fourth form does not comprise the sensitive information related to the first user.

9. The method according to any one of claims 1 to 7, wherein after the displaying, by the vehicle, the first information in the first display area of the vehicle in a second form, the method further comprises:
displaying, by the vehicle, the first information in the first display area of the vehicle in the first form when it is detected that there is only the first user in the vehicle.

10. The method according to any one of claims 1 to 9, wherein the displaying, by the vehicle, the first information in a first display area of the vehicle in a first form when there is only a first user in the vehicle specifically comprises:
displaying, by the vehicle, the first information in the first display area of the vehicle in the first form when there is only the first user in the vehicle and the first user is a driver.

11. The method according to any one of claims 1 to 9, wherein the displaying, by the vehicle, the first information in a first display area of the vehicle in a first form when there is only a first user in the vehicle specifically comprises:
displaying, by the vehicle, the first information in the first display area of the vehicle in the first form when there is only the first user in the vehicle and a user of a logged-in account on the vehicle is the first user.

12. The method according to any one of claims 1 to 11, wherein the first information is navigation information, and the navigation information comprises a navigation route, an origin address, and a destination address; and the displaying, by the vehicle, the first information in a first display area of the vehicle in a first form when it is detected that there is only a first user in the vehicle specifically comprises:
displaying, by the vehicle, the navigation route, the origin address, and the destination address in the navigation information when it is detected that there is only the first user in the vehicle; and
the displaying, by the vehicle, the first information in the first display area of the vehicle in a second form when it is detected that there is the first user and a second user in the vehicle specifically comprises:
displaying, by the vehicle, only the navigation route in the navigation information when it is detected that there is the first user and the second user in the vehicle.

13. The method according to any one of claims 1 to 11, wherein the first information is incoming call notification information, and the incoming call notification information comprises a caller name, an answer control, and a hang up control; and the displaying, by the vehicle, the first information in a first display area of the vehicle in a first form when it is detected that there is only a first user in the vehicle specifically comprises:
displaying, by the vehicle, the caller name, the answer control, and the hang up control in the incoming call notification information when it is detected that there is only the first user in the vehicle; and
the displaying, by the vehicle, the first information in the first display area of the vehicle in a second form when it is detected that there is the first user and a second user in the vehicle specifically comprises:
displaying, by the vehicle, only the answer control and the hang up control in the incoming call notification information when it is detected that there is the first user and the second user in the vehicle.

14. The method according to any one of claims 1 to 11, wherein the first information is a travel recommendation card, and the travel recommendation card comprises a flight number, a travel time, a destination, and a departure place; and the displaying, by the vehicle, the first information in a first display area of the vehicle in a first form when it is detected that there is only a first user in the vehicle specifically comprises:
displaying, by the vehicle, the flight number, the travel time, the destination, and the departure place in the travel recommendation card when it is detected that there is only the first user in the vehicle; and
the displaying, by the vehicle, the first information in the first display area of the vehicle in a second form when it is detected that there is the first user and a second user in the vehicle specifically comprises:
displaying, by the vehicle, only the travel time in the travel recommendation card when it is detected that there is the first user and the second user in the vehicle.

15. The method according to any one of claims 1 to 14, wherein before the displaying, by the vehicle, the first information in a first display area of the vehicle in a first form, the method further comprises:
receiving, by the vehicle, a first operation; and
in response to the first operation, enabling, by the vehicle, a privacy mode.

16. The method according to claim 15, wherein before the receiving, by the vehicle, a first operation, the method further comprises:
outputting, by the vehicle, first prompt information, wherein the first prompt information is used to prompt the user to enable the privacy mode.

17. The method according to claim 16, wherein after the outputting, by the vehicle, first prompt information, the method further comprises:
outputting, by the vehicle, first guide information, wherein the first guide information is used to notify the user of a first shortcut button for enabling/disabling the privacy mode, and the first operation is a trigger operation for the first shortcut button.

18. The method according to any one of claims 1 to 17, wherein the vehicle is capable of determining, based on one or more of facial recognition, voiceprint recognition, a device identifier of an electronic device, a Bluetooth identifier of the electronic device, and pressure sensor data, whether there is one occupant or a plurality of occupants in the vehicle.

19. A vehicle, wherein the vehicle comprises one or more processors and one or more memories, the one or more memories are coupled to the one or more processors, the one or more memories are configured to store computer program code, the computer program code comprises computer instructions, and the one or more processors invoke the computer instructions to enable the vehicle to perform the method according to any one of claims 1 to 18.

20. A computer-readable storage medium, wherein the computer-readable storage medium stores instructions, and when the instructions are run on a vehicle, the vehicle is enabled to perform the method according to any one of claims 1 to 18.

21. A computer program product, wherein when the computer program product is executed by a vehicle, the vehicle is enabled to perform the method according to any one of claims 1 to 18.
